# EUROPÄISCHE PATENTSCHRIFT

(11) **EP 1 732 344 B1**
(45) Veröffentlichungstag und Bekanntmachung des Hinweises auf die Patenterteilung: **16.01.2013**
(21) Anmeldenummer: 06010487.4
(22) Anmeldetag: 22.05.2006
(51) Int. Cl.: H04W 4/02, H04W 68/04, H04W 60/00

(54) **Nutzungssteuerung von Diensten in Kommunikationsnetzen**
Usage control of services in communication networks
Gestion d'utilisation de services dans des réseaux de communication

(30) Priorität: 10.06.2005 DE 102005027968
(43) Veröffentlichungstag der Anmeldung: 13.12.2006
(73) Patentinhaber: Vodafone Holding GmbH, 40213 Düsseldorf (DE)
(72) Erfinder: Vohburger, Jan, 50259 Pulheim (DE); Hollas, Markus, 40489 Düsseldorf (DE); Staufer, Tillmann, D-40547 Düsseldorf (DE)
(74) Vertreter: Weisbrodt, Bernd

(56) Entgegenhaltungen:
- EP-A1- 1 320 248
- WO-A2-98/42151
- US-A- 5 568 153
- "Digital cellular telecommunications system (Phase 2+) (GSM); Universal Mobile Telecommunications System (UMTS); Technical Report on Pre-paging (3GPP TR 23.908 version 4.0.0 Release 4); ETSI TR 123 908", ETSI STANDARDS, LIS, SOPHIA ANTIPOLIS CEDEX, FRANCE, Bd. 3-CN2, Nr. V4.0.0, 1. März 2001 (2001-03-01), XP014005052, ISSN: 0000-0001

## Beschreibung

Die vorliegende Erfindung betrifft ein Verfahren zur Steuerung der Nutzung von einem mobilen Endgerät in einem Kommunikationsnetz für Kommunikationsverbindungen zur Verfügung stehenden Diensten in Abhängigkeit des Aufenthaltsortes des mobilen Endgerätes im Kommunikationsnetz, wobei das Kommunikationsnetz wenigstens ein Versorgungsgebiet mit einer aus Funkzellen aufgebauten zellularen Netzstruktur aufweist, das Versorgungsgebiet für wenigstens ein mobiles Endgerät in wenigstens ein Vorzugsgebiet und ein Restgebiet aufgeteilt wird und bei Aufenthalt des mobilen Endgerätes in dem wenigstens einen Vorzugsgebiet für Kommunikationsverbindungen eine Nutzung von wenigstens einem Dienst ermöglicht wird, welche von einer bei Aufenthalt des mobilen Endgerätes im Restgebiet für Kommunikationsverbindungen ermöglichten Nutzung von Diensten abweicht, wobei der Aufenthaltsort des mobilen Endgerätes im Kommunikationsnetz mittels Endgerätesuchruf bestimmt wird. Ein derartiges Verfahren offenbart beispielsweise die WO 98/42151 A2.

Darüber hinaus betrifft die vorliegende Erfindung eine Einrichtung zur Steuerung der Nutzung von einem mobilen Endgerät in einem Kommunikationsnetz für Kommunikationsverbindungen zur Verfügung stehenden Diensten in Abhängigkeit des Aufenthaltsortes des mobilen Endgerätes im Kommunikationsnetz, welche zur Ausführung des erfindungsgemäßen Verfahrens ausgebildet und/oder eingerichtet ist.

Ferner betrifft die vorliegenden Erfindung ein mobiles Endgerät, welches in einem Kommunikationsnetz verfahrensgemäß nutzbar ist.

Kommunikationsnetz im Sinne der vorliegenden Erfindung sind drahtlose und/oder drahtgebundene Telekommunikationsnetze für Sprach-, Multimedia- und/oder schmal- beziehungsweise breitbandige Datendienste, bei denen ortsveränderliche Teilnehmer mit im Kommunikationsnetz nutzbaren beziehungsweise betreibbaren mobilen Endgeräten von unterschiedlichen Orten aus auf das Kommunikationsnetz zugreifen und Dienste für Kommunikationsverbindungen zum Austausch von Signalisierungs- und/oder Nutzinformationen nutzen.

Derartige Kommunikationsnetze weisen zur Erkennung und Speicherung des jeweils momentanen Dienstezugangspunktes eines Teilnehmers Einrichtungen zur Mobilitätssteuerung sowie Einrichtungen zum Aufbau von Kommunikationsverbindungen beziehungsweise zur Initiierung von Diensten für den jeweiligen Teilnehmer am jeweiligen Zugangsort auf. Zu den Kommunikationsnetzen im Sinne der vorliegenden Erfindung zählen dabei insbesondere zellulare Mobilfunknetze, beispielsweise gemäß dem GSM-und/oder UMTS-Funknetzstandard, Wireless-LANs, Wireless-PANs, Wireless-MANs, Mobilfunknetze mit Wireless-LAN und/oder Kurzstreckenfunk-Zugangstechnologien, beispielsweise Bluetooth, Datennetze und LANs mit drahtlosen und/oder drahtgebundenen Zugängen für mobile Endgeräte ortsveränderlicher Teilnehmer sowie Kombinationen derartiger Kommunikationsnetze.

In derartigen Kommunikationsnetzen stehen ortsveränderlichen Teilnehmern beziehungsweise den von diesen genutzten mobilen Endgeräten für Kommunikationsverbindungen unterschiedliche Dienste zur Nutzung zur Verfügung. Derartige Dienstnutzungen für Kommunikationsverbindungen umfassen dabei insbesondere in Telekommunikationsnetzen wie zellularen Mobilfunknetzen und/oder drahtgebundenen Fernsprechnetzen Dienste zur Sprach- und/oder Datenübertragung zwischen Teilnehmern, beispielsweise für Anrufe, Mitteilungsdienste wie SMS (SMS: Short Message Service) oder MMS (MMS: Multimedia Message Service) oder dergleichen Dienste. Eine Nutzung der Dienste für Kommunikationsverbindungen umfasst dabei ferner Möglichkeiten, derartige Dienste in Abhängigkeit des Aufenthaltsortes des jeweiligen Endgerätes unterschiedlich auszugestalten und/oder zu vergebühren.

Um mobilen Endgeräten in einem Kommunikationsnetz in Abhängigkeit des Aufenthaltsortes unterschiedliche Dienstnutzungen für Kommunikationsverbindungen bereitstellen zu können, wird das von dem Kommunikationsnetz für mobile Endgeräte ortsveränderlicher Teilnehmer zur Verfügung stehende Versorgungsgebiet für den jeweiligen Teilnehmer bzw. dessen mobiles Endgerät in wenigstens ein Vorzugsgebiet und ein außerhalb des Vorzugsgebiets liegendes Restgebiet aufgeteilt. In dem dem Teilnehmer bzw. dessen mobilen Endgerätes seitens des Kommunikationsnetzes jeweils zugeordneten Vorzugsgebiet stehen diesem bei Aufenthalt in selbigem dann Dienstnutzungen für Kommunikationsverbindungen zur Verfügung, welche von Dienstnutzungen bei Aufenthalt des mobilen Endgerätes des ortsveränderlichen Teilnehmers im Restgebiet abweichen.

Als Dienstnutzungen in Abhängigkeit des Aufenthaltsortes eines mobilen Endgerätes im Kommunikationsnetz sind gemäß der vorliegenden Erfindung unterschiedliche Kommunikationsdienste für Kommunikationsverbindungen und/oder eine unterschiedliche Vergebührung von Kommunikationsverbindungen denkbar. Kommunikationsdienste für Kommunikationsverbindungen in Abhängigkeit des Aufenthaltsortes eines mobilen Endgerätes im Kommunikationsnetz sind dabei beispielsweise eine Verfügbarkeit und/oder Blockierung bestimmter Dienste und/oder Zusatzdienste von Kommunikationsverbindungen, insbesondere eine Weiterleitung von Gesprächen oder dergleichen, eine Blockierung abgehender und/oder ankommender Kommunikationsverbindungen und/oder Gespräche, unterschiedliche Dienstgüten hinsichtlich Sprachqualität, zur Verfügung stehender Datenübertragungsrate oder dergleichen Dienstgüten und/oder die Anwendung unterschiedlicher Rufnummern für von einem mobilen Endgerät abgehende und/oder bei diesem ankommende Kommunikationsverbindungen insbesondere die Nutzung einer Rufnummer eines drahtgebundenen Fernsprechnetzes, eine sogenannte Festnetznummer, oder einer Mobilfunknummer (MSISDN). Dienstnutzungen einer unterschiedlichen Vergebührung von Kommunikationsverbindungen sind insbesondere in der Anwendung unterschiedlicher Nutzungstarife, beispielsweise Minutenpreise, vom Umfang von übertragenen Daten abhängige Preise, oder dergleichen, für von einem mobilen Endgerät abgehende und/oder bei diesem ankommende Kommunikationsverbindungen innerhalb des Vorzugsgebietes beziehungsweise außerhalb desselben im Restgebiet des Versorgungsgebietes des Kommunikationsnetzes.

Im Stand der Technik ist aus dem Bereich der Vergebührung von Kommunikationsverbindungen in Mobilfunknetzen die Berücksichtigung des Aufenthaltsortes eines mobilen Endgerätes eines im Mobilfunknetz ortsveränderlichen Teilnehmers zur nutzerindividuellen Anpassung der Gebührenstruktur für bestimmte Aufenthaltsorte im Versorgungsgebiet des Kommunikationsnetzes bekannt, beispielsweise aus der US 5,568,153 oder der DE 197 31 461 C1. Die im Stand der Technik bekannten Implementierungen erlauben dabei für einzelne Teilnehmer die Festlegung wenigstens eines Vorzugsgebietes im Versorgungsgebiet des Mobilfunknetzes, welches in der Regel durch eine postalische Adresse eines Teilnehmers oder deren geographische Koordinaten bestimmt ist. Das Vorzugsgebiet im Versorgungsgebiet des Mobilfunknetzes besteht dann aus einer einzelnen Funkzelle beziehungsweise einer Gruppe von zusammenhängenden Funkzellen, in deren Funkversorgungsbereich sich das Vorzugsgebiet befindet. Die einzelnen ortsveränderlichen Teilnehmern beziehungsweise deren mobilen Endgeräten zugeordneten Funkzellen werden dabei in der Regel in einer Teilnehmerdatenbank des Mobilfunknetzes gespeichert. Bei Initiierung eines Dienstes für Kommunikationsverbindungen wird durch eine Lokalisierungseinrichtung bestimmt, ob sich der Teilnehmer beziehungsweise dessen mobiles Endgerät innerhalb des Vorzugsgebietes oder außerhalb des Vorzugsgebietes im Restgebiet befindet. In Abhängigkeit des aktuellen Aufenthaltsortes des Teilnehmers beziehungsweise dessen mobilen Endgerätes wird dann im Kommunikationsnetz der entsprechende Vergebührungstarif im Mobilfunknetz aktiviert und seitens des Abrechnungssystems zur Abrechnung genutzt.

Die bisher im Stand der Technik bekannten Verfahren und Einrichtungen zur Steuerung der Nutzung von einem mobilen Endgerät in einem Kommunikationsnetz für Kommunikationsverbindungen zur Verfügung stehenden Diensten in Abhängigkeit des Aufenthaltsortes des mobilen Endgerätes im Kommunikationsnetz sind hinsichtlich der zur Verfügung stehenden Dienstnutzungen als auch hinsichtlich der Möglichkeiten einer Steuerung derselben beschränkt, insbesondere hinsichtlich einer Individualisierbarkeit der Dienstnutzungen für Kommunikationsverbindungen. Gleiches gilt für die in derartigen Kommunikationsnetzen entsprechend nutzbaren mobilen Endgeräte hinsichtlich einer Einrichtung und/oder Signalisierung von entsprechenden Dienstnutzungen in Abhängigkeit des jeweiligen Aufenthaltsortes im Kommunikationsnetz.

Aufgabe der vorliegenden Erfindung ist es, dem fortwährend bestehenden Bedarf nach einem mobilen Endgerät in einem Kommunikationsnetz für Kommunikationsverbindungen zur Verfügung stehenden Dienstnutzungen in Abhängigkeit des Aufenthaltsortes des mobilen Endgerätes im Kommunikationsnetz nachzukommen und insbesondere umfangreich individualisierbare Dienstnutzungen als auch deren Einrichtung und/oder Signalisierung zu ermöglichen.

Zur technischen Lösung dieser Aufgabe wird mit der vorliegenden Erfindung ein Verfahren mit den Merkmalen des Oberbegriffs des Anspruchs 1 vorgeschlagen, welches gekennzeichnet ist durch die Merkmale des kennzeichnenden Teils des Anspruchs 1.

Der Erfindung liegt die Erkenntnis zugrunde, dass durch Bestimmung des Aufenthaltsortes des mobilen Endgerätes im Kommunikationsnetz durch wenigstens einen kommunikationsnetzseitig erfolgenden vorgezogenen Endgerätesuchruf (Prepaging) eine genauere Eingrenzung des Aufenthaltsortes des mobilen Endgerätes im Kommunikationsnetz ermöglicht wird. Dadurch lassen sich insbesondere verbesserte und weitergehende Dienstnutzungen für Kommunikationsverbindungen realisieren.

Eine weitere vorteilhafte Ausgestaltung der Erfindung sieht vor, dass der Aufenthaltsort des mobilen Endgerätes im Kommunikationsnetz unter Nutzung netrbasierter und/oder endgerätebasierter Lokalisierungstechnologien bestimmt wird, wobei die Bestimmung vorzugsweise kommunikationsnetzseitig ausgelöst wird. Durch die Kombination von netzbasierten Lokalisierungstechnologien wie beispielsweise COO (Cell Of Origin), TOA (Time Of Arrival) und dergleichen netzbasierten Lokalisierungstechnologien und/oder endgerätebasierten Lokalisierungstechnologien, wie beispielsweise E-OTD (Enhanced- Observed Time Difference), GPS (Global Positioning System) oder dergleichen endgerätebasierter Lokalisierungstechnologien, ist so eine weitere Steigerung hinsichtlich nutzerindividueller Nutzungen von Diensten für Kommunikationsverbindungen erzielbar.

In einer weiteren vorteilhaften Ausgestaltung der Erfindung erfolgt die Bestimmung des Aufenthaltsortes durch Ermittlung eines Kennzeichners, vorzugsweise einer Location Number, Location Area ID (LAID) oder einer Cell-ID, des Funkbereichs und/oder der Funkzelle des Versorgungsgebietes des Kommunikationsnetzes in der das mobile Endgerät erreichbar ist. Die Ermittlung des Funkbereichs- und/oder Funkzellen-Kennzeichners erfolgt dabei vorteilhafterweise seitens wenigstens einer Einrichtung zur Mobilitätsverwaltung von mobilen Endgeräten des Kommunikationsnetzes. Vorteilhafterweise wird der Funkbereichs- und/oder Funkzellen-Kennzeichner dabei seitens des Kommunikationsnetzes erfasst, wobei der Funkbereichs- und/oder Funkzellen-Kennzeichner in einer Datenbank einer seitens des Kommunikationsnetzes für den vorgezogenen Endgerätessuchruf (Prepaging) vorgesehenen Einrichtung von der Einrichtung des Kommunikationsnetzes erfasst und aus dieser im Rahmen des vorgezogenen Endgerätessuchruf (Prepaging) abgerufen wird, welche das Versorgungsgebiet des Funkbereichs und/oder der Funkzelle des aktuellen Aufenthaltsortes des mobilen Endgerätes ausbildet. Eine weitere Ausgestaltung der Erfindung sieht vor, dass der Funkbereichs- und/oder Funkzellen-Kennzeichner seitens des mobilen Endgerätes erfasst und dem Kommunikationsnetz über eine Kommunikationsverbindung des Kommunikationsnetzes mitgeteilt wird, vorzugsweise mittels eines Nachrichtendienstes des Kommunikationsnetzes besonders bevorzugt mittels SMS.

Vorteilhafterweise erfolgt die Ermittlung des Funkbereichs- und/oder Funkzellen-Kennzeichners des mobilen Endgerätes für von diesem abgehende und/oder für an dieses gerichtete Kommunikationsverbindungen bei einem Verbindungsaufbau. Durch die erfindungsgemäße Lösung eines vorgezogenen Endgerätesuchrufes, vorzugsweise unter Nutzung eines Funkzellen-Kennzeichners, wird dabei ― wie bereits erläutert ― eine weiter verbesserte Bestimmung des Aufenthaltsortes eines mobilen Endgerätes im Kommunikationsnetz ermöglicht, insbesondere da unmittelbar bei der Initiierung eines Dienstes für das mobile Endgerät im Zuge eines Aufbaus einer Kommunikationsverbindung eine Aktualisierung der Information über den aktuellen Funkbereich und die aktuelle Funkzelle des mobilen Endgerätes in der Einrichtung zur Mobilitätsverwaltung des mobilen Endgerätes erfolgt, vorzugsweise mit einer Auflösung auf Funkzellenniveau. Bei abgehenden Diensten, beispielsweise Diensten wie Telefongesprächen, die von dem mobilen Endgerät beziehungsweise dessen Teilnehmer selbst ausgelöst werden, sowie bei ankommenden Diensten, wie Telefongesprächen, die durch andere Teilnehmer im Kommunikationsnetz ausgelöst werden, erfolgt vorteilhafterweise im Rahmen des Verbindungsaufbaus gemäß den von dem Kommunikationsnetz genutzten Protokollen, insbesondere bei von zellularen Mobilfunknetzen genutzten Protokollen, automatisch eine Aktualisierung der entsprechenden Information über die aktuelle Funkzelle des mobilen Endgerätes in der jeweils zuständigen Einrichtung zur Mobilitätsverwaltung. Der entsprechend aktualisierte Funkzellen-Kennzeichner (Cell-ID) wird bei der Initiierung des Dienstes zur Feststellung des Aufenthaltsgebietes des mobilen Endgerätes dabei vorteilhafterweise von der Einrichtung zur Mobilitätsverwaltung bereitgestellt.

In einer weiteren vorteilhaften Ausgestaltung der Erfindung wird der Aufenthaltsort des mobilen Endgerätes im Kommunikationsnetz in periodischen Zeitabständen und/oder ereignisgesteuert vor, mit und/oder bei Initiierung einer Kommunikationsverbindung bestimmt. Eine ereignisgesteuerte Bestimmung des Aufenthaltsortes des mobilen Endgerätes im Kommunikationsnetz ist dabei vorteilhafterweise bei einem Wechsel des aktuellen Funkbereichs und/oder der Funkzelle eines mobilen Endgerätes im Kommunikationsnetz und/oder bei einem Wechsel von zur Verfügung stehenden Dienstnutzungen für Kommunikationsverbindungen gegeben. Die erfindungsgemäßen Maßnahmen zur Bestimmung des Aufenthaltsortes ermöglichen einzeln und/oder in Kombination vorteilhafterweise eine verbesserte und aktualisiertere Auflösung des Aufenthaltsortes des mobilen Endgerätes im Kommunikationsnetz und damit eine entsprechende Steigerung hinsichtlich der Individualisierbarkeit von Vorzugsgebieten und/oder in diesen zur Verfügung stehenden Dienstnutzungen eines mobilen Endgerätes.

In einer weiteren vorteilhaften Ausgestaltung der Erfindung wird der Aufenthaltsort des mobilen Endgerätes im Kommunikationsnetz seitens des Kommunikationsnetzes bestimmt und/oder erfasst, der bestimmte Aufenthaltsort seitens des Kommunikationsnetzes mit wenigstens einem in einer seitens des Kommunikationsnetzes gespeicherten Datenbank erfassten Vorzugsgebiet verglichen wird, anhand des Vergleichs seitens des Kommunikationsnetzes festgestellt wird, ob sich das mobile Endgerät in einem Vorzugsgebiet aufhält oder in dem Restgebiet aufhält und zumindest bei Feststellung des Aufenthalts des mobilen Endgerätes in einem Vorzugsgebiet der Aufenthalt des mobilen Endgerätes in einem Vorzugsgebiet, das Vorzugsgebiet und/oder dem mobilen Endgerät im Vorzugsgebiet zur Verfügung stehende Dienstnutzungen für Kommunikationsverbindungen seitens des Kommunikationsnetzes zur kommunikationsnetzseitigen Steuerung der Dienstnutzungen signalisiert werden.

Vorteilhafterweise wird seitens des mobilen Endgerätes der bestimmte Aufenthaltsort und/oder das Ergebnis des Vergleichs gespeichert, vorzugsweise seitens einer Datenbank des mobilen Endgerätes, wobei der bestimmte Aufenthaltsort und/oder das Ergebnis des Vergleichs dem mobilen Endgerät über eine Kommunikationsverbindung des Kommunikationsnetzes mitgeteilt wird, vorzugsweise mittels eines Nachrichtendienstes des Kommunikationsnetzes, besonders bevorzugt mittels SMS.

Eine weitere Ausgestaltung der Erfindung ist dadurch gekennzeichnet, dass wenigstens eine Information über den Aufenthalt des mobilen Endgerätes in einem Vorzugsgebiet, das Vorzugsgebiet und/oder dem mobilen Endgerät im Vorzugsgebiet zur Verfügung stehende Dienstnutzungen für Kommunikationsverbindungen in einer Datenbank seitens des Kommunikationsnetzes erfasst und von einer seitens des Kommunikationsnetzes für den vorgezogenen Endgerätessuchruf (Prepaging) vorgesehenen Einrichtung des Kommunikationsnetzes aus dieser Datenbank im Rahmen der Signalisierung und/oder Vergebührung von Kommunikationsverbindungen abgerufen und/oder genutzt wird. Vorteilhafterweise werden anhand der Information kommunikationsnetzseitig die im jeweiligen Vorzugsgebiet für Kommunikationsverbindungen zur Verfügung stehenden Dienstnutzungen des mobilen Endgerätes im Kommunikationsnetz aktiviert und/oder vergebührt. Erfindungsgemäß erfolgt die Signalisierung in periodischen Zeitabständen und/oder ereignisgesteuert. Vorteilhafterweise sind seitens des erfindungsgemäßen Verfahrens ein und/oder mehrere, zusammenhängende und/oder nicht zusammenhängende Vorzugsgebiete genutzt beziehungsweise nutzbar.

In einer besonders bevorzugten Ausgestaltung der Erfindung werden mobile Endgeräte denen im Kommunikationsnetz wenigstens ein gleiches Vorzugsgebiet zugeordnet wird, im Kommunikationsnetz als Gruppe zusammengefasst und verwaltet. Durch eine erfindungsgemäße Gruppierung von mobilen Endgeräten denen im Kommunikationsnetz gleiche Vorzugsgebiete zugeordnet sind und eine entsprechende Verwaltung der mobilen Endgeräte als Gruppe weitergehende Dienstnutzungen für Kommunikationsverbindungen realisierbar sind. Eine erfindungsgemäße Gruppierung von mobilen Endgeräten ermöglicht dabei insbesondere eine Steigerung hinsichtlich gruppenindividualisierter Dienstnutzungen für Kommunikationsverbindungen. Vorteilhafterweise wird dabei eine Zuordnung von Gruppendiensten für Kommunikationsverbindungen in Vorzugsgebieten realisiert. So können beispielsweise Familienmitglieder an ihrem Wohnort und dessen Umgebung ein sogenanntes Virtuelles Privates Netzwerk (VPN: Virtual Private Network) bilden und dort bei Aufenthalt der entsprechenden Gruppenmitglieder beispielsweise untereinander kostenlos und/oder zumindest kostengünstiger miteinander kommunizieren, insbesondere telefonieren, vorteilhafterweise zumindest dann, wenn sich wenigstens ein Gruppenmitglied in diesem aufhält. Ferner können Gruppierungen von Firmenangehörigen gebildet werden, welche an ihrem Arbeitsplatz ein gemeinsames Vorzugsgebiet haben und dort entsprechend kostengünstiger und/oder mit anderen Dienstmöglichkeiten Kommunikationsverbindungen untereinander und/oder zu anderen Teilnehmern im Kommunikationsnetz mit entsprechenden individualisierbaren Dienstnutzungen nutzen können. Einzelne Teilnehmer beziehungsweise deren mobile Endgeräte können dabei verschiedene Vorzugsgebiete aufweisen, beispielsweise eins an ihrem Wohnort in der Gruppe "Familienmitglieder" und eins an ihrem Arbeitsplatz in der Gruppe "Firmenangehörige". Seitens des Kommunikationsnetzes ist durch die erfindungsgemäße Gruppierung vorteilhafterweise eine vereinfachte Verwaltung entsprechender mobiler Endgeräte von Gruppenmitgliedern seitens des Kommunikationsnetzes gegeben, insbesondere da im Rahmen der Verwaltung seitens des Kommunikationsnetzes für die mobilen Endgeräte bei Aufenthalt in entsprechenden Vorzugsgebieten lediglich entsprechende Gruppeninformationen für die Dienstnutzungen verwaltet werden müssen.

In einer weiteren vorteilhaften Ausgestaltung der Erfindung werden die mobilen Endgeräte denen im Kommunikationsnetz neben wenigstens einem gleichen Vorzugsgebiet für Kommunikationsverbindungen wenigstens eine gleiche Nutzung wenigstens eines Dienstes zugeordnet wird im Kommunikationsnetz als Gruppe zusammengefasst. Dadurch ist eine weitere Steigerung hinsichtlich der Individualisierbarkeit von Dienstnutzungen für Kommunikationsverbindungen im Kommunikationsnetz gegeben. So lassen sich beispielsweise für verschiedene Gruppen in bestimmten Vorzugsgebieten bevorzugte Dienstnutzungen für Kommunikationsverbindungen realisieren und seitens des Kommunikationsnetzes entsprechend einheitlich verwalten. So können bestimmte Gruppenmitglieder als besondere Dienstnutzungen in ausgewählten Vorzugsgebieten beispielsweise Kommunikationsverbindungen mit anderen Dienstgüten, beispielsweise höheren Datenübertragungsraten oder dergleichen Möglichkeiten, aufweisen als außerhalb der Vorzugsgebiete und/oder in anderen Vorzugsgebieten. Ein Anwendungsbeispiel für derartige unterschiedliche Dienstgüten hinsichtlich Datenübertragungsraten sind beispielsweise bei mobilen Endgeräten gegeben, die in einer ersten Gruppe an ihrem Arbeitsplatz mit anderen Firmenangehörigen als Gruppenmitgliedern untereinander und/oder zur Nutzung am Arbeitsplatz mit ihrem mobilen Endgerät höhere Datenübertragungsraten für Kommunikationsverbindungen nutzen können, als beispielsweise in einem Vorzugsgebiet an ihrem Wohnort beziehungsweise von ihrem Wohnort aus mit beziehungsweise unter Familienangehörigen als weitere Gruppe eines mobilen Endgerätes im Kommunikationsnetz.

Vorteilhafterweise wird der Aufenthalt des mobilen Endgerätes in dem wenigstens einen Vorzugsgebiet oder dem Restgebiet seitens des mobilen Endgerätes und/oder seitens einer mit diesem verbindbaren Anzeigeeinrichtung wiedergegeben, vorzugsweise in optischer und/oder akustischer Form. Vorteilhafterweise erfolgt die Wiedergabe dabei nach Feststellung des aktuellen Aufenthaltgebietes innerhalb eines Vorzugsgebietes oder innerhalb des Restgebietes eines mobilen Endgerätes beziehungsweise dessen zugeordneter Gruppe durch eine geeignete Signalisierungsnachricht welche an das mobile Endgerät in dem festgestellten Aufenthaltsgebiet des mobilen Endgerätes übermittelt wird. Die im Rahmen der Signalisierung erfolgende Wiedergabe in optischer und/oder akustischer Form signalisiert dem Nutzer des mobilen Endgerätes dabei in dem wenigstens einen Vorzugsgebiet die jeweilige Gruppenzugehörigkeit, das Vorzugsgebiet selbst und/oder die im Vorzugsgebiet für Kommunikationsverbindungen möglichen Dienstnutzungen.

In einer weiteren vorteilhaften Ausgestaltung der Erfindung wird bei entsprechender Änderung des Aufenthaltsortes des mobilen Endgerätes in einem Gebiet außerhalb des wenigstens einen Vorzugsgebiets der Gruppe und/oder bei Aufenthalt außerhalb des Vorzugsgebiets der Gruppe dies entsprechend in optischer und/oder akustischer Form seitens des mobilen Endgerätes durch geeignete Wiedergabe signalisiert.

Eine weitere vorteilhafte Ausgestaltung der Erfindung ist gekennzeichnet durch eine unterschiedliche Vergebührung von Kommunikationsverbindungen in Abhängigkeit des Aufenthaltsortes des mobilen Endgerätes im Kommunikationsnetz als Dienstnutzungen.

Eine weitere vorteilhafte Ausgestaltung der Erfindung ist gekennzeichnet durch unterschiedliche Kommunikationsdienste für Kommunikationsverbindungen in Abhängigkeit des Aufenthaltsortes des mobilen Endgerätes im Kommunikationsnetz als Dienstnutzungen. Vorteilhafterweise ist dabei eine preislich günstigere Vergebührung von Kommunikationsverbindungen bei Aufenthalt des mobilen Endgerätes in wenigstens einem Vorzugsgebiet, vorzugsweise für von dem mobilen Endgerät abgehende Kommunikationsverbindungen und/oder an das mobile Endgerät gerichtete Kommunikationsverbindungen gegeben.

Eine besonders vorteilhafte Ausgestaltung der Erfindung ermöglicht bei Aufenthalt des mobilen Endgerätes in wenigstens einem Vorzugsgebiet eine Nutzung wenigstens einer für Kommunikationsverbindungen nutzbaren Rufnummer eines drahtgebundenen Fernsprechnetzes. Vorteilhafterweise werden an die Rufnummer eines drahtgebundenen Fernsprechnetzes des mobilen Endgerätes gerichtete Kommunikationsverbindungen bei Aufenthalt des mobilen Endgerätes im Restgebiet über das Kommunikationsnetz an das mobile Endgerät im Restgebiet weitergeleitet oder von einer seitens des Kommunikationsnetzes für das mobile Endgerät bereitgehaltenen Einrichtung angenommen und/oder bei Bedarf zur Wiedergabe gespeichert, wobei bei Annahme der Kommunikationsverbindung durch die Einrichtung dem Kommunikationsverbindungsverursacher vorzugsweise eine Kommunikationsnachricht in optischer und/oder akustischer Form über die Kommunikationsverbindung übertragen wird, beispielsweise als sogenannte Voice-Mail, SMS (SMS: Short Message Service) oder MMS (MMS: Multimedia Message Service). Die Nutzungsmöglichkeiten der Weiterleitung an das mobile Endgerät und/oder der Annahme durch eine entsprechende Einrichtung seitens des Kommunikationsnetzes sind vorteilhafterweise von dem Teilnehmer beziehungsweise Nutzer des mobilen Endgerätes einstellbar beziehungsweise vorgebbar.

Eine weitere vorteilhafte Ausgestaltung der Erfindung sieht vor, dass Vorzugsgebiete des Kommunikationsnetzes in verschiedenen Ländern, in Kommunikationsnetzen verschiedener Kommunikationsbetreiber und/oder unterschiedlicher Funknetzstandards verfahrensgemäß genutzt werden beziehungsweise nutzbar sind. Eine entsprechende Nutzung hat insbesondere in Grenzgebieten von unterschiedlichen Ländern und/oder Kommunikationsnetzen vorteilhafte Anwendungsmöglichkeiten, insbesondere für ein sogenanntes länderübergreifendes und/oder kommunikationsnetzübergreifendes Roaming. Ein besonderer Anwendungsfall ist bei einem Vorzugsgebiet für ein sich im jeweiligen Ausland befindendes Ferienhaus gegeben.

Vorteilhafterweise weist das Kommunikationsnetz wenigstens ein zellulares Mobilfunknetz mit einer hierarchischen Zellstruktur ausbildenden Komponenten, vorzugsweise gemäß dem GSM- und/oder UMTS-Funknetzstandard, auf und sind die mobilen Endgeräte in dem Mobilfunknetz nutzbare Mobilfunktelefone.

Zur technischen Lösung der eingangs genannten Aufgabe wird mit der vorliegenden Erfindung ferner eine Einrichtung mit den Merkmalen des Oberbegriffs des Anspruchs 24 vorgeschlagen, welche gekennzeichnet ist durch die Merkmale des kennzeichnenden Teils des Anspruchs 24.

Vorteilhafterweise ist die Einrichtung seitens des Kommunikationsnetzes vorhanden und/oder Bestandteil wenigstens einer Einrichtung des Kommunikationsnetzes, vorzugsweise seitens einer Einrichtung des Kommunikationsnetzes zur Mobilitätsverwaltung mobiler Endgeräte im Kommunikationsnetz, besonderes bevorzugt in einer Datenbank wie dem HLR und/oder VLR eines zellularen Mobilfunknetzes.

In einer weiteren Ausgestaltung der Erfindung ist die Einrichtung ausgebildet im Rahmen einer Bestimmung des Aufenthaltsortes eines mobilen Endgerätes im Kommunikationsnetz einen Endgerätesuchruf (Paging), vorzugsweise einen vorgezogenen Endgerätesuchruf (Prepaging), bei Anfrage einer MSRN auszulösen und/oder zu initiieren.

Gegenstand der Erfindung ist ferner eine Einrichtung zur Steuerung der Nutzung von einem mobilen Endgerät in einem Kommunikationsnetz für Kommunikationsverbindungen zur Verfügung stehenden Diensten in Abhängigkeit des Aufenthaltsortes des mobilen Endgerätes im Kommunikationsnetz, wobei das Kommunikationsnetz wenigstens ein Versorgungsgebiet mit einer aus Funkzellen aufgebauten zellularen Netzstruktur aufweist, das Versorgungsgebiet für wenigstens ein mobiles Endgerät in wenigstens ein Vorzugsgebiet und ein Restgebiet aufgeteilt ist und bei Aufenthalt des mobilen Endgerätes in dem wenigstens einen Vorzugsgebiet für Kommunikationsverbindungen eine Nutzung von wenigstens einem Dienst ermöglicht ist, welche von einer bei Aufenthalt des mobilen Endgerätes im Restgebiet für Kommunikationsverbindungen ermöglichten Nutzung von Diensten abweicht, wobei die Einrichtung jeweils wenigstens eine Datenbank aufweist, in welcher Kennungen im Kommunikationsnetz nutzbarer mobiler Endgeräte, Kennungen von Vorzugsgebieten der mobilen Endgeräte, Kennungen von Restgebieten der mobilen Endgeräte, Kennungen von Gruppenzugehörigkeiten der mobilen Endgeräte und/oder Kennungen von mobilen Dienstnutzungen der mobilen Endgeräte für Kommunikationsverbindungen im Vorzugsgebiet und/oder Restgebiet erfasst sind.

In einer weiteren Ausgestaltung der Erfindung ist die Einrichtung wenigstens zur Erfassung wenigstens einer von dem mobilen Endgerät an das Kommunikationsnetz gesendeten Information über den Aufenthalt des mobilen Endgerätes in einem Vorzugsgebiet in einem Überschreibmodus ausgebildet ist.

Vorteilhafterweise ist die erfindungsgemäße Einrichtung zur Ausführung und/oder Unterstützung der Ausführung eines erfindungsgemäßen Verfahrens ausgebildet.

Gegenstand der vorliegenden Erfindung ist ferner ein mobiles Endgerät zur Nutzung in einem erfindungsgemäßen Kommunikationsnetz, welches wenigstens eine Einrichtung zur Speicherung des Vorzugsgebietes und/oder der im Vorzugsgebiet für Kommunikationsverbindungen möglichen Dienstnutzungen im mobilen Endgerät aufweist, vorzugsweise in Form einer Datenbank seitens eines in das mobile Endgerät einsetzbaren kartenförmigen Trägerelements (SIM- bzw. USIM-Karte) elektronischer Baugruppen, welches einen Zugang des mobilen Endgerätes zum Kommunikationsnetz unter Nutzung wenigstens einer einen Kommunikationsteilnehmer im Kommunikationsnetz identifizierenden Kennung (IMSI) ermöglicht.

In einer weiteren Ausgestaltung der Erfindung weist das mobile Endgerät wenigstens eine Einrichtung zur akustischen und/oder optischen Wiedergabe des Aufenthalts desselben in einem Vorzugsgebiet und/oder der diesem in dem Vorzugsgebiet zur Verfügung stehenden Dienstnutzungen für Kommunikationsverbindungen auf.

Die verfahrensgemäßen Steuerungen der Nutzung von einem mobilen Endgerät in einem Kommunikationsnetz für Kommunikationsverbindungen zur Verfügung stehenden Dienste werden vorteilhafterweise in einer seitens des Kommunikationsnetzes vorgesehenen Einrichtung, vorzugsweise einer IN- oder IMS-Anlage, auf Basis der Feststellung des aktuellen Aufenthaltsortes des mobilen Endgerätes vorgenommen. Im Rahmen der Initiierung eines Dienstes für das mobile Endgerät aktiviert diese Einrichtung vorteilhafterweise die dem mobilen Endgerät am beziehungsweise im jeweiligen Aufenthaltsort beziehungsweise ― gebiet zugeordnete Dienstnutzung für den angeforderten Dienst einer Kommunikationsverbindung. In Abhängigkeit der jeweiligen Ausgestaltung der Dienstnutzungen umfasst dies insbesondere die folgenden Maßnahmen:
a) Ermittlung der anzuwendenden Dienstnutzungen für Kommunikationsverbindungen aus den entsprechenden TeilnehmerDatenbanken des Kommunikationsnetzes, vorzugsweise Kundenadministrierung, HLR/HSS, AAA, User Repository und/oder Vorzugsgebiete-Datenbank.
b) Freigabe oder Abweisung des angeforderten Dienstes für Kommunikationsverbindungen in Abhängigkeit der am aktuellen Aufenthaltsort des mobilen Endgerätes dem mobilen Endgerät zur Verfügung stehenden Dienstnutzungen, insbesondere das Durchschalten eines Telefonanrufes über eine dem mobilen Endgerät am Aufenthaltsort zugeordnete Festnetzrufnummer.
c) Aktivierung des Dienstes für Kommunikationsverbindungen im Netz über die entsprechenden Dienste-Kontrollpunkte, vorzugsweise durch eine IN- oder IMS-Anlage und Einstellung der erforderlichen Routing-Informationen, beispielsweise eine Rufumleitung in Abhängigkeit vom Vorzugsgebiet des mobilen Endgerätes.
d) Aktivierung und/oder Konfiguration von Gruppenleistungsmerkmalen VPN-Leistungsmerkmalen, IN-Leistungsmerkmalen und/oder Zusatzdiensten, die der aktuellen Dienstnutzung des mobilen Endgerätes im Kommunikationsnetz zugeordnet sind, vorzugsweise zu speziellen Vergebührungskonditionen.
e) Versenden von Abrechnungsinformationen für die aktuelle Dienstnutzung für Kommunikationsverbindungen des mobilen Endgerätes an das sogenannte Kundenabrechnungssystem, insbesondere im Falle von sogenannten Post-Paid-Teilnehmern, in Abhängigkeit von den der aktuellen Dienstnutzung für Kommunikationsverbindungen zur Verfügung stehenden Vergebührungsinformationen, beispielsweise durch EDRs (EDR: Event Detail Record) und/oder sogenannte CDRs (CDR: Call Detail Record). Dabei können vorteilhafterweise die Vergebührungsinformationen selbst im Kundenabrechnungssystem hinterlegt sein, so dass in den übertragenen Abrechnungsinformationen lediglich definierte Kennzeichnungscodes für die Vergebührung und/oder für definierte Klassen von Vorzugsgebieten angegeben werden müssen.
f) Durchführung von Online-Abbuchungen, sogenanntem Charging der Nutzungsentgelte für die aktuelle Dienstnutzung für Kommunikationsverbindungen im sogenannten Pre-Paid-Abrechnungssystem im Falle von Pre-Paid-Teilnehmern in Abhängigkeit von den aktuellen Dienstnutzungen für das aktuelle Aufenthaltsgebiet hinterlegten Vergebührungsinformationen.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer schematischen Darstellung ein prinzipielles Ausführungsbeispiel für die Aufteilung eines Versorgungsgebiets eines Kommunikationsnetzes in Vorzugsgebiete und ein Restgebiet;
- Fig. 2: in einer schematischen Darstellung zwei Ausführungsbeispiele für Geokoordinaten eines Vorzugsteilgebietes;
- Fig. 3: in einer schematischen Prinzipdarstellung ein Ausführungsbeispiel einer erfindungsgemäßen Nutzungssteuerung von Diensten für Kommunikationsverbindungen bei sich in einem Vorzugsgebiet aufhaltendem mobilen Endgerät und an dieses gerichtete Kommunikationsverbindungen;
- Fig. 4: in einer schematischen Prinzipdarstellung ein Ausführungsbeispiel einer erfindungsgemäßen Nutzungssteuerung von Diensten für Kommunikationsverbindungen bei sich außerhalb eines Vorzugsgebiets aufhaltendem mobilen Endgerät und an dieses gerichtete Kommunikationsverbindungen;
- Fig. 5: in einer schematischen Prinzipdarstellung ein Ausführungsbeispiel einer erfindungsgemäßen Nutzungssteuerung von Diensten für Kommunikationsverbindungen bei für sich in einem Vorzugsgebiet aufhaltendem mobilen Endgerät und von diesem abgehenden Kommunikationsverbindungen;
- Fig. 6: in einer schematischen Prinzipdarstellung ein Ausführungsbeispiel einer erfindungsgemäßen Nutzungssteuerung von Diensten für Kommunikationsverbindungen bei sich außerhalb eines Vorzugsgebiets aufhaltendem mobilen Endgerät und von diesem abgehenden Kommunikationsverbindungen;
- Fig. 7: in einer schematischen Blockdiagrammdarstellung ein Ausführungsbeispiel einer Nutzungssteuerung von Diensten für an ein mobiles Endgerät gerichtete Kommunikationsverbindungen;
- Fig. 8: in einer schematischen Blockdiagrammdarstellung ein weiteres Ausführungsbeispiel einer Nutzungssteuerung von Diensten für an ein mobiles Endgerät gerichtete Kommunikationsverbindungen;
- Fig.9: in einer schematischen Blockdiagrammdarstellung ein weiteres Ausführungsbeispiel einer Nutzungssteuerung von Diensten für an ein mobiles Endgerät gerichtete Kommunikationsverbindungen;
- Fig. 10: in einer schematischen Blockdiagrammdarstellung ein weiteres Ausführungsbeispiel einer Nutzungssteuerung von Diensten für an ein mobiles Endgerät gerichtete Kommunikationsverbindungen;
- Fig.11: in einer schematischen Blockdiagrammdarstellung ein weiteres Ausführungsbeispiel einer Nutzungssteuerung von Diensten für an ein mobiles Endgerät gerichtete Kommunikationsverbindungen;
- Fig. 12: in einer schematischen Blockdiagrammdarstellung ein weiteres Ausführungsbeispiel einer Nutzungssteuerung von Diensten für an ein mobiles Endgerät gerichtete Kommunikationsverbindungen;

- Fig. 13: in einer schematischen Blockdiagrammdarstellung ein weiteres Ausführungsbeispiel einer Nutzungssteuerung von Diensten für an ein mobiles Endgerät gerichtete Kommunikationsverbindungen;
- Fig. 14: in einer schematischen Blockdiagrammdarstellung ein weiteres Ausführungsbeispiel einer Nutzungssteuerung von Diensten für an ein mobiles Endgerät gerichtete Kommunikationsverbindungen;
- Fig. 15: in einer schematischen Blockdiagrammdarstellung ein weiteres Ausführungsbeispiel einer Nutzungssteuerung von Diensten für an ein mobiles Endgerät weiteres gerichtete Kommunikationsverbindungen;
- Fig. 16: in einer schematischen Blockdiagrammdarstellung ein Ausführungsbeispiel für erste Signalisierung des Aufenthalts eines mobilen Endgerätes innerhalb oder außerhalb eines Vorzugsgebietes;
- Fig. 17: in einer schematischen Blockdiagrammdarstellung ein weiteres Ausführungsbeispiel für Signalisierung des Aufenthalts eines mobilen Endgerätes innerhalb oder außerhalb eines Vorzugsgebietes;
- Fig. 18: in einer vereinfachten schematischen Darstellung ein Ausführungsbeispiel für eine netzbasierte Bestimmung des Aufenthaltsortes eines mobilen Endgerätes im Kommunikationsnetz;
- Fig. 19: in einer vereinfachten schematischen Darstellung ein Ausführungsbeispiel für eine netzunterstützte Bestimmung des Aufenthaltsortes eines mobilen Endgerätes im Kommunikationsnetz und
- Fig. 20: in einer schematischen Darstellung ein Ablaufdiagramm eines Ausführungsbeispiels einer Nutzungssteuerung von Diensten für von einem mobilen Endgerät abgehende Kommunikationsverbindungen.

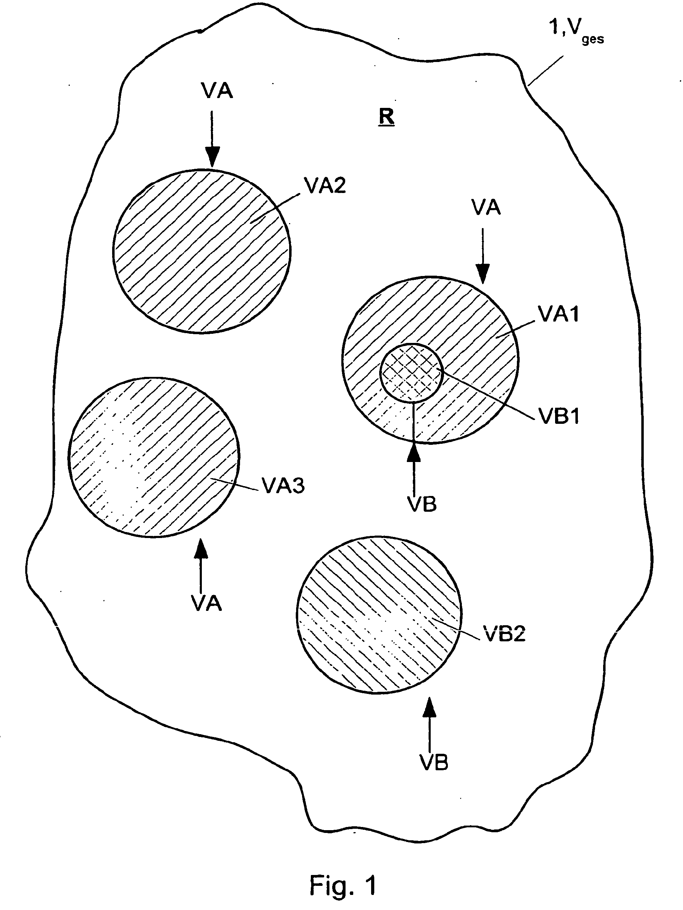

Fig. 1 zeigt in einer schematischen Darstellung die prinzipielle Aufteilung des gesamten Versorgungsgebiets Vges eines Kommunikationsnetzes 1 für mobile Endgeräte ortsveränderlicher Teilnehmer A und B in Vorzugsgebiete VA und VB sowie ein Restgebiet R außerhalb der Vorzugsgebiete VA bzw. VB der jeweiligen Teilnehmer A bzw. B im Versorgungsgebiet V gesamt. Im gesamtes Versorgungsgebiet Vges des Kommunikationsnetzes 1, vorliegend einem Mobilfunknetz gemäß dem GSM- und/oder dem UMTS-Funknetzstandard, werden ortsveränderlichen Teilnehmern A und B ein und/oder mehrere, zusammenhängende und/oder nicht zusammenhängende Vorzugsgebiete VA1, VA2, VA3 und VB1, VB2, sogenannte Vorzugsteilgebiete der Vorzugsgebiete VA und VB der Teilnehmer A und B, zugeordnet. Den Teilnehmern A und B stehen dabei in den jeweiligen Vorzugsgebieten VA und VB bzw. den jeweiligen Vorzugsteilgebieten VA1, VA2, VA3 und VB1, VB2 sowie dem jeweiligen Restgebiet R der Teilnehmer A bzw. B im Versorgungsgebiet V gesamt für Kommunikationsverbindungen unterschiedliche Nutzungen von Diensten des Kommunikationsnetzes 1 zur Verfügung, insbesondere hinsichtlich unterschiedlicher Kommunikationsdienste für Kommunikationsverbindungen und/oder hinsichtlich einer unterschiedlichen Vergebührung von Kommunikationsverbindungen in Abhängigkeit von dem jeweiligen Aufenthaltsort des jeweiligen Teilnehmers A bzw. B bzw. dessen mobilen Endgerätes im Versorgungsgebiet Vges des Kommunikationsnetzes 1.

Abweichend von der in Fig.1 aus Gründen der Übersichtlichkeit auf zwei Teilnehmer A und B begrenzten Darstellung weist das Kommunikationsnetz 1 selbstverständlich bis zu n mobile Endgeräte im Kommunikationsnetz 1 ortsveränderlicher Teilnehmer auf (n: natürliche Zahl, ≥ 1).

Jedes Vorzugsteilgebiet eines mobilen Endgerätes eines ortsveränderlichen Teilnehmers wird durch eine Gruppe von einem und/oder mehreren, im Kommunikationsnetz 1 unterscheidbaren geographischen Funkbereichen definiert und dargestellt, in einem zellularen Mobilfunknetz wie vorliegend beispielsweise durch Funkzellen, Location Areas und/oder VLR-Bereiche oder in einem Wireless-LAN beispielsweise durch Access-Bereiche. Diese Funkbereiche sind eindeutig durch dem Kommunikationsnetz 1 bekannte Funkbereichs-Kennzeichner gekennzeichnet, in dem zellularen Mobilfunknetz gemäß dem GSM-Funknetzstandard wie vorliegend beispielsweise durch Funkzellen-Kennzeichner wie die Cell-ID.

Die Darstellung der Vorzugsgebiete eines mobilen Endgerätes eines im Kommunikationsnetz 1 ortsveränderlichen Teilnehmers erfolgt durch eine Liste mit den Funkbereichs-Kennzeichnern der Funkbereiche, die die Vorzugsteilgebiete und damit das jeweilige gesamte Vorzugsgebiet des jeweiligen Teilnehmers bzw. dessen mobilen Endgerätes im Kommunikationsnetz 1 definieren. Ferner enthält die Liste die den jeweiligen Vorzugsteilgebieten zugeordneten Dienstnutzungen für Kommunikationsverbindungen, nachfolgend Dienstprofile P genannt. Dem Restgebiet R des jeweiligen Teilnehmers ist dabei ein standardgemäßes Dienstprofil zugeordnet. Die Liste wird vorliegend in einer Vorzugsgebiete-Datenbank seitens des Kommunikationsnetzes 1 gespeichert. Alternativ und/oder ergänzend erfolgt eine Speicherung der Liste der Vorzugsgebiete in einer Datenbank seitens des mobilen Endgerätes. Eine weitere Ausgestaltung der Erfindung sieht eine Kombination der Speicherung einer Liste mit entsprechenden Kennzeichnern und einer Vorzugsgebiete-Datenbank mit Vorzugsgebieten im Kommunikationsnetz seitens des mobilen Endgerätes vor. Dabei werden die Kennzeichner in der Liste des mobilen Endgerätes seitens des Kommunikationsnetzes zur entsprechenden Ermittlung der Vorzugsgebiete und/oder deren Dienstnutzungen für Kommunikationsverbindungen umgesetzt. Die Kennzeichner werden dabei vorteilhafterweise vom Kommunikationsnetz beim mobilen Endgerät selbst und/oder seitens einer dafür vorgesehenen Datenbank im Kommunikationsnetz abgefragt oder werden vom mobilen Endgerät an das Kommunikationsnetz, insbesondere die Datenbank des Kommunikationsnetzes übertragen. Die Übertragung und/oder Abfrage erfolgt vorteilhafterweise automatisch in periodischen Abständen und/oder ereignisgesteuert, vorzugsweise bei einem Wechsel des Aufenthalts des mobilen Endgerätes innerhalb und/oder außerhalb eines Vorzugsgebiets.

Die nachfolgende Tabelle zeigt ein Beispiel für eine entsprechende Liste:

| Vorzugsgebiet (Teilnehmer) | Vorzugsteilgebiet (Teilnehmer, Nummer) | Funkbereichs-Kennzeichner | Dienstprofil (Vorzugsgebiet) |
|---|---|---|---|
| V1 | V1_1 | A, B, C | P_V1 |
| V1 | V1_2 | D, E | P_V1 |
| V1 | V1_3 | F | P_V1 |
| V2 | V2_1 | G, H | P_V2 |
| V2 | V2_2 | I | P_V2 |
| (R) | (R) | | (P_R) |

In einer alternativen Ausgestaltung werden die Funkbereichs-Kennzeichner nicht zusammenhängender Vorzugsgebiete vorzugsweise Vorzugsgebiete an verschiedenen Orten, z. B. Adresse am Wohnort und Adresse am Ferienort und/oder in verschiedenen Ländern und/oder in unterschiedlichen Mobilfunknetzen. in einer Liste je Vorzugsgebiet zusammengefasst. Die nachfolgende Tabelle zeigt ein Beispiel für eine entsprechende Liste:

| Vorzugsgebiet (Teilnehmer) | Funkbereichs-Kennzeichner | Dienstprofil (Vorzugsgebiet) |
|---|---|---|
| V1 | A, B, C, D, E, F | P_V1 |
| V2 | G, H, I | P_V2 |
| (R) | | (P_R) |

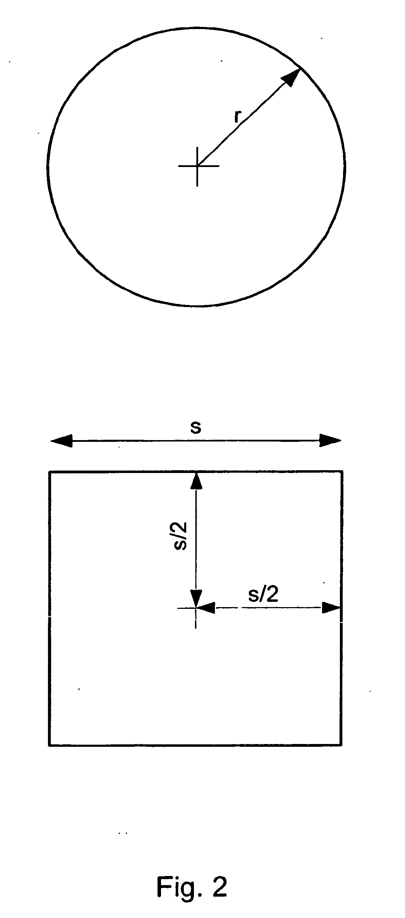

In einer weiteren alternativen Ausgestaltung wird jedes Vorzugsteilgebiet durch geographische Parameter, vorzugsweise einem zentralen geographischen Ortspunkt, beschrieben durch eine eindeutige Geokoordinate, sowie eine den Ortspunkt umgebende, parametrisierbare geometrische Figur, beispielsweise Ellipse, Kreis, Rechteck, Quadrat oder dergleichen geometrische Form, definiert und dargestellt. Fig. 2 zeigt zwei entsprechende Beispiele für entsprechende Geokoordinaten eines Vorzugsteilgebietes.

Je Vorzugsteilgebiet werden in der Vorzugsgebiete-Datenbank des Kommunikationsnetzes 1 und/oder des mobilen Endgerätes dann die entsprechenden geographischen Parameter, vorliegend die Geokoordinaten des Mittelpunktes bzw. der Eckpunkte, Parameter der umgebenden geometrischen Figur, vorliegend beispielsweise der Kreisradius r bzw. die Seitenlänge s eines Quadrats, sowie ein Kennzeichner für das zugeordnete Vorzugsgebiet und/oder Dienstprofil in einer Liste gespeichert. Die nachfolgende Tabelle zeigt ein Beispiel für eine entsprechende Liste:

| Vorzugsgebiet (Teilnehmer) | Vorzugsteilgebiet (Teilnehmer, Nummer) | Geokoordinate (Nummer) | Figurparameter (Nummer) | Dienstprofi (Vorzugsgebiet) |
|---|---|---|---|---|
| V1 | V1_1 | Länge_1, Breite 1 | Radius R1 | P_V1 |
| V1 | V1_2 | Länge_2, Breite_2 | Radius R2 | P_V1 |
| V1 | V1_3 | Länge_3, Breite_3 | Quadrat S3 | P_V1 |
| V2 | V2_1 | Länge_4, Breite_4 | Quadrat S4 | P_V2 |
| V2 | V2_2 | Länge_5, Breite_5 | Radius R5 | P_V2 |
| (P_R) | (R) | | (R) | |

In einer weiteren alternativen Ausgestaltung werden für alle oder bestimmte Gruppierungen von Teilnehmern und/oder Vorzugsteilgebieten die zu Grunde gelegte geometrische Figur sowie gegebenenfalls auch deren Abmessungsparameter, beispielsweise der Radius r oder die Seitenlänge s, einheitlich festgelegt. Diese Parameter brauchen dann nicht mehr für jeden Teilnehmer oder jedes Vorzugsteilgebiet gespeichert werden.

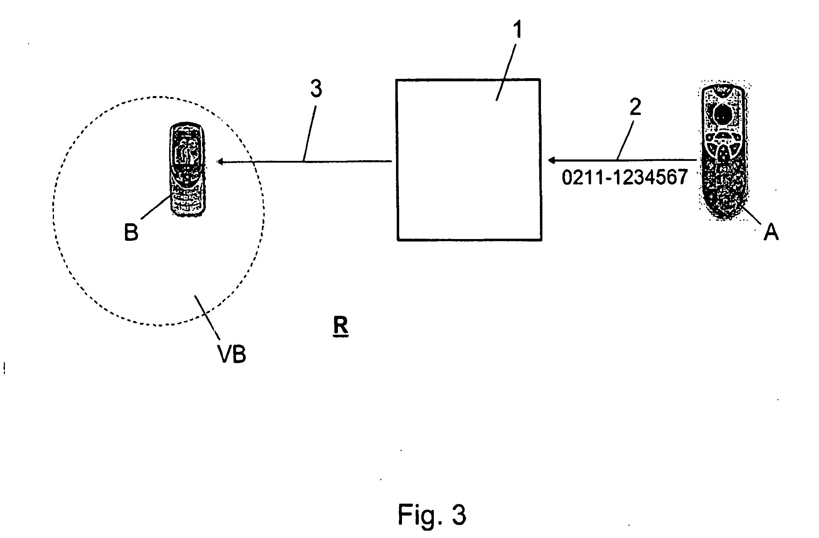

Die Fig. 3 bis 6 zeigen jeweils in einer Prinzipdarstellung einen Anwendungsfall einer Steuerung der Nutzung von einem mobilen Endgerät eines ortsveränderlichen Teilnehmers B in einem Kommunikationsnetz 1 für Kommunikationsverbindungen zur Verfügung stehenden Diensten, in Abhängigkeit des Aufenthaltsortes des mobilen Endgeräts B in einem Vorzugsgebiet VB des Teilnehmers B des Kommunikationsnetzes 1 beziehungsweise einem Restgebiet R des Kommunikationsnetzes 1. Dem mobilen Endgerät B stehen dabei vorliegend in dem Vorzugsgebiet VB des Kommunikationsnetzes 1 als Dienstnutzungen neben unterschiedlichen Kommunikationsdiensten für Kommunikationsverbindungen auch eine unterschiedliche Vergebührung von Kommunikationsverbindungen zur Verfügung als im Restgebiet R des Kommunikationsnetzes 1.

Bei dem in Fig. 3 dargestellten Anwendungsfall befindet sich das mobile Endgerät B innerhalb des für dieses seitens des Kommunikationsnetzes 1 für entsprechende Dienstnutzungen erfassten und verwalteten Vorzugsgebiets VB. In dem Vorzugsgebiet VB ist dem mobilen Endgerät B dabei seitens des Kommunikationsnetzes 1 eine zumindest für an das mobile Endgerät B gerichtete Kommunikationsverbindung nutzbare Rufnummer eines drahtgebundenen Fernsprechnetzes, vorliegend beispielhaft "0211-1234567" zugeordnet. Die Zuordnung der sogenannten Festnetzrufnummer "0211-1234567" erfolgt dabei unter Nutzung eines sogenannten Festnetzproviders über ein PSTN (PSTN: Public Standard Telefone Network), welches die Festnetzrufnummer in ein Mobilfunknetz des Kommunikationsnetzes durchroutet. Von einem Endgerät des Teilnehmers A, vorliegend einem ebenfalls in einem Mobilfunknetz betreibbaren beziehungsweise nutzbaren mobilen Endgerät A, wird der Aufbau einer Kommunikationsverbindung zu dem mobilen Endgerät B unter Nutzung der dem mobilen Endgerät B im Kommunikationsnetz 1 zugeordneten und verwalteten Festnetzrufnummer "0211-1234567" aufgebaut. Die von dem Endgerät A kommende Anforderung 2 für den Aufbau einer Kommunikationsverbindung wird dabei über das Kommunikationsnetz 1 über eine entsprechende Anforderung 3 für den Aufbau einer Kommunikationsverbindung über die sogenannte Luftschnittstelle des Mobilfunknetzes des Kommunikationsnetzes 1 an das sich im Vorzugsgebiet VB des Mobilfunknetzes des Kommunikationsnetzes 1 befindliche mobile Endgerät B durchgeroutet, also weiter- beziehungsweise umgeleitet, und die entsprechenden Kanäle für eine Kommunikationsverbindung aufgebaut und bereitgehalten, da sich das mobile Endgerät B im Vorzugsgebiet VB des Mobilfunknetzes des Kommunikationsnetzes 1 befindet.

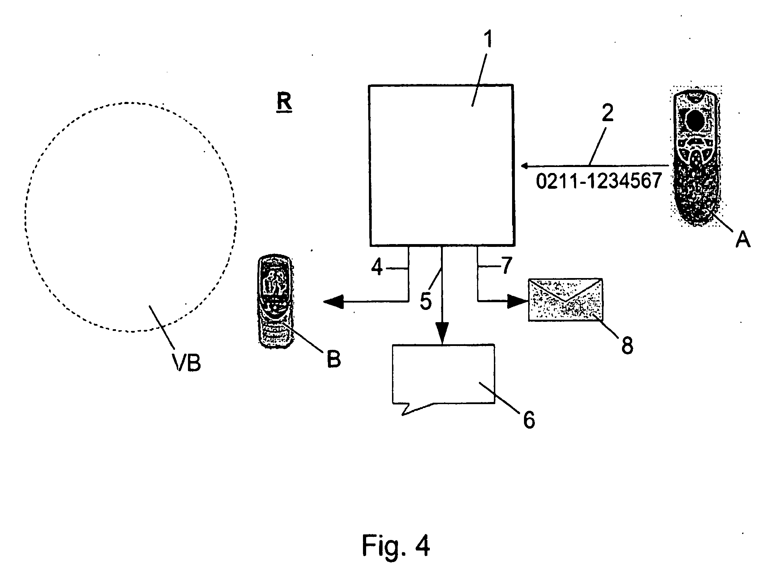

Bei dem in Fig. 4 dargestellten Anwendungsfall befindet sich das mobile Endgerät des im Kommunikationsnetz 1 ortsveränderlichen Teilnehmers B außerhalb des diesem seitens des Kommunikationsnetzes 1 und/oder seitens des mobilen Endgerätes zugeordneten und verwalteten Vorzugsgebiets VB, also dementsprechend in dem dem mobilen Endgerät B im Mobilfunknetz des Kommunikationsnetzes 1 entsprechend zugeordneten Restgebiet R. Von dem Endgerät A wird - wie im Zusammenhang mit Fig. 3 bereits beschrieben - unter Nutzung der dem mobilen Endgerät B im Kommunikationsnetz 1 zugeordneten und verwalteten Festnetzrufnummer "0211-1234567" eine von dem Endgerät des Teilnehmers A kommende Anforderung 2 für den Aufbau einer Kommunikationsverbindung an das Kommunikationsnetz 1 gerichtet. Da sich das mobile Endgerät B bei dem in Fig. 4 dargestellten Anwendungsfall außerhalb seines Vorzugsgebiets VB im Restgebiet R des Mobilfunknetzes des Kommunikationsnetzes 1 befindet, wird die Anforderung 2 für den Aufbau einer Kommunikationsverbindung mit dem mobilen Endgerät B von dem Mobilfunknetz des Kommunikationsnetzes 1, in Abhängigkeit der von dem Teilnehmer B vorzugsweise nutzerindividuell ausgewählten bzw. vorgegebenen Alternativen von dem Kommunikationsnetz 1 entweder über eine entsprechende Anforderung 4 für den Aufbau einer Kommunikationsverbindung über die sogenannte Luftschnittstelle des Mobilfunknetzes des Kommunikationsnetzes 1 an das sich im Restgebiet R des Mobilfunknetzes des Kommunikationsnetzes 1 befindliche mobile Endgerät B unter Nutzung der entsprechenden Mobilfunkrufnummer (MSISDN) des Endgerätes B im Mobilfunknetz des Kommunikationsnetzes 1, durchgeroutet oder dem Endgerät A als Dienstnutzung des mobilen Endgerätes B eine seitens des Kommunikationsnetzes 1 bereitgehaltene Ansage einer dafür vorgesehenen und eingerichteten Einrichtung 6 über eine geeignete Kommunikationsverbindung 5 des Kommunikationsnetzes 1 wiedergegeben oder dem Endgerät A als Dienstnutzung des mobilen Endgerätes B eine Kommunikationsverbindung 7 zu einer seitens des Mobilfunknetzes des Kommunikationsnetzes 1 für das mobile Endgerät B seitens des Mobilfunknetzes des Kommunikationsnetzes 1 eingerichteten und verwalteten Anrufbeantwortereinrichtung 8, einer sogenannten Mailbox 8, aufgebaut und zur Hinterlassung von Nachrichten zur Verfügung gestellt.

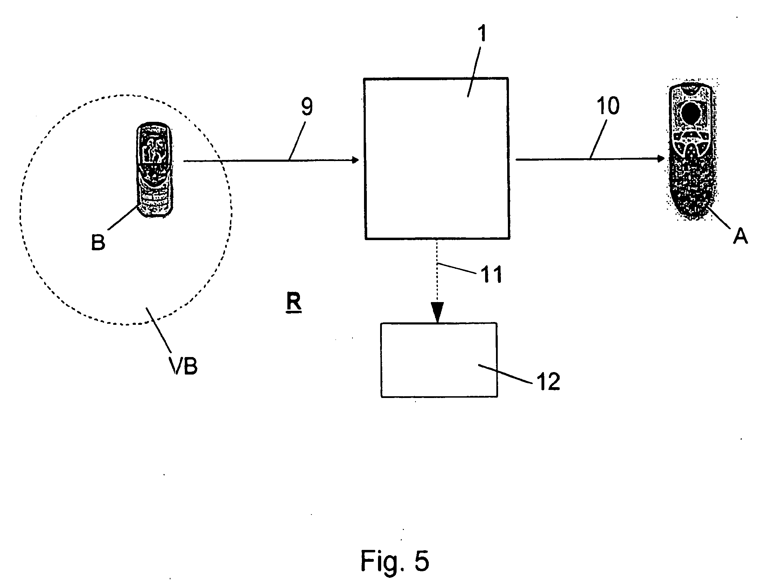

Bei dem in Fig. 5 dargestellten Anwendungsfall hält sich das mobile Endgerät B - wie bei dem in Fig. 3 dargestellten Anwendungsfall - innerhalb des für dieses seitens des Kommunikationsnetzes 1 und/oder seitens des mobilen Endgerätes für entsprechende Dienstnutzungen erfassten und verwalteten Vorzugsgebiets VB auf. Das mobile Endgerät B richtet dabei von dem Vorzugsgebiet VB aus eine Anforderung 9 für den Aufbau einer Kommunikationsverbindung mit dem Endgerät des Teilnehmers A an das Kommunikationsnetz 1. Seitens des Kommunikationsnetzes 1 wird die Anfrage 9 dann in eine entsprechende Anfrage 10 für den Aufbau der Kommunikationsverbindung mit dem Endgerät A umgesetzt und zu diesem zum Aufbau der Kommunikationsverbindung mit dem Endgerät A durchgeroutet. Vorliegend wird dabei seitens des Kommunikationsnetzes 1 aufgrund seitens des Kommunikationsnetzes 1 erfassten Aufenthaltes des mobilen Endgerätes B in dem für dieses seitens des Kommunikationsnetzes 1 zugeordneten und verwalteten Vorzugsgebiets VB eine entsprechende Aufenthalts- und/oder Vergebührungsinformation 11 erzeugt, welche vorliegend als Dienstnutzung für eine günstigere Vergebührung der Kommunikationsverbindung seitens einer entsprechenden Einrichtung 12 zur Erfassung von Kunden- und/oder Abrechnungsinformationen, vorliegend einem Kundeninformations- und Abrechnungssystem (KIAS) des Mobilfunknetzes des Kommunikationsnetzes 1, genutzt wird.

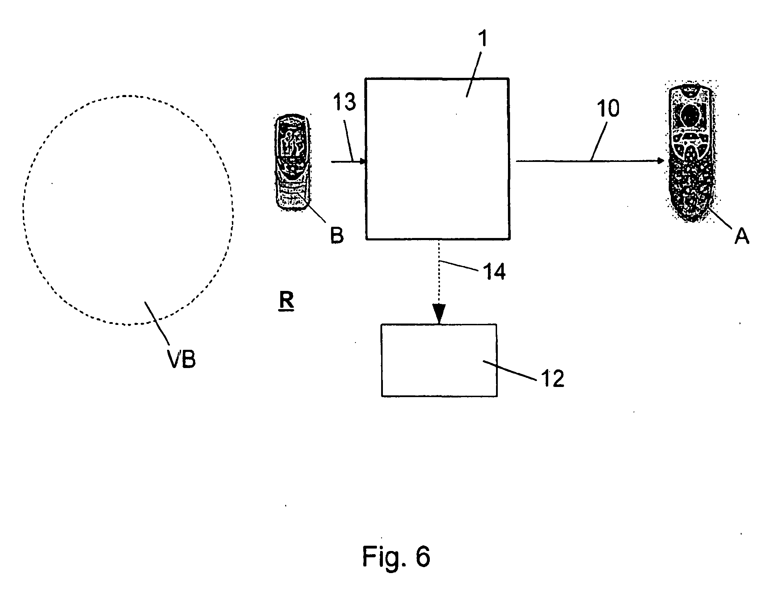

Bei dem in Fig. 6 dargestellten Anwendungsfall befindet sich das mobile Endgerät des im Kommunikationsnetz 1 ortsveränderlichen Teilnehmers B ― wie bei dem in Fig. 4 dargestellten Anwendungsfall - außerhalb des diesem seitens des Kommunikationsnetzes 1 und/oder seitens des mobilen Endgerätes zugeordneten und verwalteten Vorzugsgebiets VB, also dementsprechend in dem dem mobilen Endgerät B im Mobilfunknetz des Kommunikationsnetzes 1 entsprechend zugeordneten Restgebiet R. Das mobile Endgerät B richtet dabei von dem Restgebiet R aus eine Anforderung 13 für den Aufbau einer Kommunikationsverbindung mit dem Endgerät des Teilnehmers A an das Kommunikationsnetz 1. Seitens des Kommunikationsnetzes 1 wird die Anfrage 13 dann in eine entsprechende Anfrage 10 für den Aufbau der Kommunikationsverbindung mit dem Endgerät A umgesetzt und zu diesem zum Aufbau der Kommunikationsverbindung mit dem Endgerät A durchgeroutet.

Vorliegend wird dabei seitens des Kommunikationsnetzes 1 und/oder seitens des mobilen Endgerätes aufgrund des seitens des Kommunikationsnetzes 1 erfassten Aufenthaltes des mobilen Endgerätes B in dem für dieses seitens des Kommunikationsnetzes 1 zugeordneten und verwalteten Restgebiets R eine entsprechende Aufenthalts- und/oder Vergebührungsinformation 14 erzeugt, welche vorliegend als Dienstnutzung für eine standardgemäße Vergebührung der Kommunikationsverbindung im Mobilfunknetz des Kommunikationsnetzes seitens einer entsprechenden Einrichtung 12 zur Erfassung von Kunden- und/oder Abrechnungsinformationen, vorliegend einem Kundeninformations- und Abrechnungssystem (KIAS) des Mobilfunknetzes des Kommunikationsnetzes 1, genutzt wird. Die Vergebührung der Mobilfunkverbindungen des sich im Restgebiet R aufhaltenden mobilen Endgerätes B ist dabei abweichend von der Vergebührung von Mobilfunkverbindungen des mobilen Endgerätes B bei Aufenthalt desselben in seinem Vorzugsgebiet VB, die vorliegend kostengünstiger ist.

Im Rahmen der Steuerung der Nutzung von einem mobilen Endgerät in einem Kommunikationsnetz für Kommunikationsverbindungen zur Verfügung stehenden Diensten in Abhängigkeit des Aufenthaltsortes des mobilen Endgerätes im Kommunikationsnetz werden dabei seitens des Kommunikationsnetzes und dessen Einrichtungen beziehungsweise Komponenten und/oder seitens des mobilen Endgerätes und dessen Einrichtungen beziehungsweise Komponenten die nachfolgend näher beschriebenen beziehungsweise erläuterten Abläufe beziehungsweise Verfahrensschritte einzeln und/oder in Kombination miteinander realisiert:
a) Festlegung und/oder Speicherung der Vorzugsgebiete der jeweiligen Teilnehmer im Kommunikationsnetz und/oder im mobilen Endgerät der Teilnehmer.
b) Bestimmung des jeweiligen Aufenthaltsortes des mobilen Endgerätes im Kommunikationsnetz; die Bestimmung des Aufenthaltsortes erfolgt dabei kommunikationsnetzseitig und/oder endgeräteseitig und/oder wird kommunikationsnetzseitig und/oder endgeräteseitig ausgelöst beziehungsweise initiiert.
c) Feststellung des Aufenthaltsortes des mobilen Endgerätes innerhalb und/oder außerhalb eines Vorzugsgebietes; die Feststellung des Aufenthaltsortes innerhalb oder außerhalb eines Vorzugsgebietes erfolgt dabei kommunikationsnetzseitig und/oder endgerätesseitig, vorzugsweise durch wenigstens einen Vergleich.
d) Wiedergabe beziehungsweise Anzeige des Aufenthaltsortes des mobilen Endgerätes im Kommunikationsnetz seitens des mobilen Endgerätes, vorzugsweise in optischer und/oder akustischer Form.
e) Steuerung der Nutzung von einem mobilen Endgerät in einem Kommunikationsnetz für Kommunikationsverbindung zur Verfügung stehenden Diensten in Abhängigkeit des Aufenthaltsortes des mobilen Endgerätes im Kommunikationsnetz, insbesondere für eine Vergebührung der Kommunikationsverbindung.

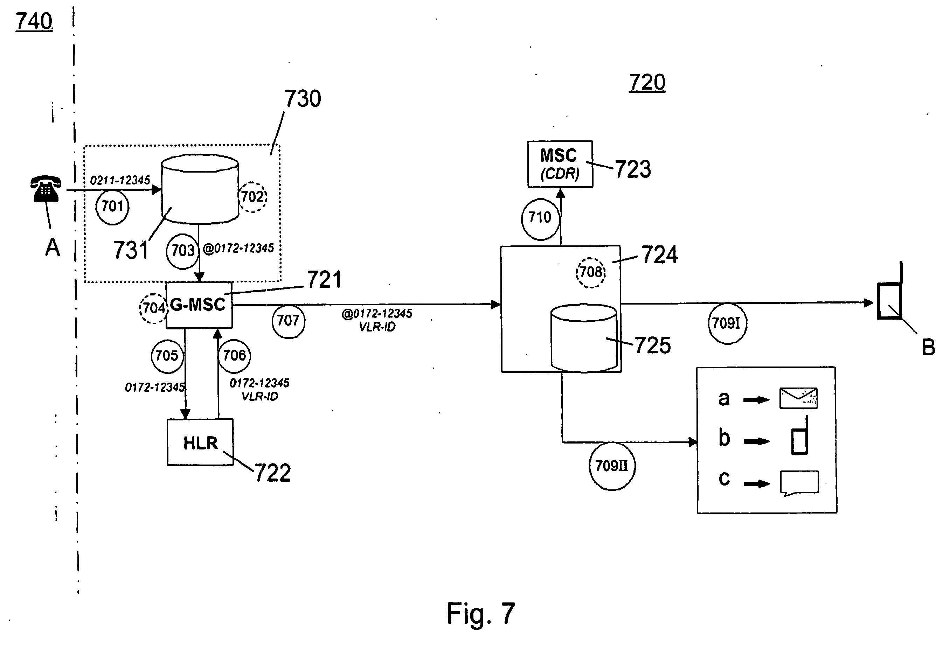

Fig. 7 zeigt ein Ausführungsbeispiel einer Nutzungssteuerung von Diensten für an ein mobiles Endgerät B gerichtete Kommunikationsverbindungen, wenn sich das mobile Endgerät B innerhalb oder außerhalb eines für dieses seitens des Kommunikationsnetzes zugeordneten Vorzugsgebietes befindet. Dabei wird die Kommunikationsverbindung vorliegend von einem Teilnehmer A bzw. dessen Endgerät an eine dem mobilen Endgerät B für dessen Vorzugsgebiet und/oder Vorzugsgebiete zugeordnete Festnetzrufnummer "0211-12345" gerichtet. Dabei sind seitens des Kommunikationsnetzes und dessen Einrichtungen die folgenden Abläufe bzw. Verfahrensschritte 701 bis 710 realisiert:
- 701:: Die von dem Teilnehmer A bzw. dessen Endgerät A kommende Anforderung nach einem Aufbau einer Kommunikationsverbindung zu bzw. mit dem mobilen Endgerät B wird mittels der Festnetzrufnummer "0211-12345" über ein PSTN (Public Standard Telefone Network) 740 zu einem die Festnetzrufnummer "0211-12345" verwaltenden Festnetzbetreiber bzw. -provider 730 durchgeroutet.
- 702:: Seitens einer von dem Festnetzbetreiber 730 unterhaltenen, eine Datenbank 731 umfassenden Einrichtung erfolgt dann ein sogenanntes Mapping der Festnetzrufnummer mit der dieser im Mobilfunknetz zugeordneten Mobilfunknetzrufnummer (MSISDN) des mobilen Endgerätes B. In der Datenbank 731 ist dazu eine Liste gespeichert, in der der einem Teilnehmer B für dessen Vorzugsgebiet und/oder Vorzugsgebieten im Mobilfunknetz 720 zugeordneten Festnetzrufnummer die entsprechende Mobilfunknetzrufnummer (MSISDN) zugeordnet ist. Im Rahmen des Aufbaus der Kommunikationsverbindung wird dabei aus der Datenbank 731 anhand der Festnetzrufnummer die Mobilfunknetzrufnummer (MSISDN) durch eine entsprechend geeignete Datenbankabfrage ermittelt.
- 703:: Die so aus der Datenbank 731 ermittelte Mobilfunknetzrufnummer (MSISDN), vorliegend "0172-12345", wird anschließend zum Aufbau der Kommunikationsverbindung seitens der Einrichtungen des Festnetzbetreibers 730 mit einer Kennung, vorliegend einem exemplarisch durch "@" gekennzeichneten Präfix, versehen und an eine als Übergangseinheit (Gateway) dienende mobile Vermittlungsstelle (MSC (Mobile Switching Center)) 721 des Mobilfunknetzes 720, vorliegend einem G-MSC 721 (Gateway MSC (Mobile Switching Center)) weitergeleitet. Die Kennung dient dabei zur Identifizierung des Festnetzbetreibers 730 seitens des Mobilfunknetzes 720. Die Kennung, also das der Mobilfunknetzrufnummer (MSISDN) "0172-12345" vorangestellte Präfix "@", muss dazu entsprechend seitens der Einrichtungen des Mobilfunknetzes, 720 interpretiert werden können.
- 704:: Seitens des G-MSC 721 wird die der Mobilfunknetzrufnummer (MSISDN) "0172-12345" als Präfix vorangestellte Kennung "@" dann abgeschnitten und die Mobilfunknetzrufnummer (MSISDN) "0172-12345" für eine anschließende Bestimmung des Aufenthaltsortes des mobilen Endgerätes B im Mobilfunknetz 720 als auch der zur Verfügung stehenden Dienstnutzungen für Kommunikationsverbindungen genutzt.
- 705:: Dazu sendet das G-MSC 721 eine Anfrage mit der Mobilfunknetzrufnummer (MSISDN) "0172-12345" an die Teilnehmerdatenbank HLR (HLR: Home Location Register) 722 des Mobilfunknetzes 720.
- 706:: Die Teilnehmerdatenbank HLR 722 des Mobilfunknetzes 720 antwortet auf diese Anfrage 705 mit der in dieser zu der Mobilfunknetzrufnummer (MSISDN) "0172-12345" gespeicherten bzw. erfassten Kennung der hier nicht dargestellten Teilnehmerdatenbank VLR (VLR: Visitor Location Register), der sogenannten VLR-ID, und sendet diese an das G-MSC 721. Dem GMSC 721 wird mit der VLR-ID dabei signalisiert um was für einen Teilnehmer B es sich handelt und wo, das heißt in welcher Einrichtung 724 des Mobilfunknetzes 720 für diesen Teilnehmer B weitere Informationen für einen Aufbau der Kommunikationsverbindung verwaltet sind. Vorliegend handelt es sich bei der Einrichtung 724 des Mobilfunknetzes 720 um eine sogenannte IN-Anlage 724 (IN: Intelligent Network Subsystem), welche unter anderem sogenannte zusätzliche Dienste bereitstellende SCP-Datenbanken (SCP: Service Control Points) 725 aufweist.
- 707:: Das G-MSC 721 routet anschließend die mit der Kennung "@" versehene Mobilfunknetzrufnummer (MSISDN) "0172-12345" und die VLR-ID an die IN-Anlage 724.
- 708:: Seitens der IN-Anlage 724 wird die der Mobilfunknetzrufnummer (MSISDN) "0172-12345" als Präfix vorangestellte Kennung "@" dann wieder abgeschnitten und anhand der VLR-ID überprüft, ob sich der Teilnehmer B bzw. dessen mobiles Endgerät innerhalb oder außerhalb eines seiner Vorzugsgebiete befindet. Diese Überprüfung erfolgt dabei durch entsprechende Abfrage in der SCP-Datenbank 725, welche dazu eine Liste aufweist, in welcher zu der jeweiligen VLR-ID des Teilnehmers B eine entsprechende den Aufenthalt innerhalb oder außerhalb eines Vorzugsgebietes repräsentierende Kennung gespeichert ist.
- 709:: In Abhängigkeit von dem Ergebnis der Abfrage (708) der SCP-Datenbank 725 sind folgende Dienstnutzungen für die Kommunikationsverbindung gegeben:
709 I: Die von dem Teilnehmer A aus dem PSTN 740 angeforderte Kommunikationsverbindung wird zu dem mobilen Endgerät B durchgeroutet, wenn sich dieses in dem Vorzugsgebiet befindet, welchem für das mobile Endgerät B die Festnetzrufnummer "0211-12345" zugeordnet ist.
709 II: Die von dem Teilnehmer A aus dem PSTN 740 angeforderte Kommunikationsverbindung wird zu in der SCP-Datenbank 725 von dem Teilnehmer B des mobilen Endgerätes B individuell ausgewählten bzw. vorgegebenen Alternativen weitergehender Dienstnutzungen durchgeroutet, wenn sich dieses außerhalb des Vorzugsgebiets befindet. Die vorliegend genutzten, bereits im Zusammenhang mit Fig. 4 beschriebenen alternativen Dienstnutzungen umfassen dabei:
709 II a: Ein Durchrouten der von dem Teilnehmer A geforderten Kommunikationsverbindung zu einer seitens des Mobilfunknetzes 720 für das mobile Endgerät B eingerichteten und verwalteten Mailbox.
709 II b: Ein vorzugsweise für den Teilnehmer B kostenpflichtiges Durchrouten der von dem Teilnehmer A geforderten Kommunikationsverbindung zu dem sich außerhalb des Vorzugsgebiets im Restgebiet aufhaltenden mobilen Endgerätes B unter Nutzung der entsprechenden Mobilfunkrufnummer (MSISDN) des mobilen Endgerätes B.
709 II c: Ein Durchrouten der von dem Teilnehmer A geforderten Kommunikationsverbindung zu einer seitens des Mobilfunknetzes 720 für das mobile Endgerät B seitens des Mobilfunknetzes 720 bereitgehaltenen Ansage einer dafür vorgesehenen und eingerichteten Einrichtung seitens des Mobilfunknetzes 720.
- 710:: Wenn sich das mobile Endgerät des Teilnehmer B außerhalb seines Vorzugsgebiets im Restgebiet des Mobilfunknetzes 720 befindet und von dem Teilnehmer B eine Weiter- bzw. Umleitung von an im Vorzugsgebiet gerichteten Kommunikationsverbindungen an das sich außerhalb des Vorzugsgebiets im Restgebiet aufhaltende mobile Endgerät gemäß der Dienstnutzungsalternative nach 709 II b aktiviert ist, wird in der für die Vermittlung der Kommunikationsverbindung zu dem mobilen Endgerät B zuständigen mobilen Vermittlungseinrichtung, vorliegend exemplarisch das MSC 723 des Mobilfunknetzes 720, eine Kennung für eine entsprechende Abrechnung der Weiter- bzw. Umleitung erzeugt. Vorliegend wird dabei in der entsprechenden seitens des MSC 723 geführten und verwalteten Datei für Kommunikationsverbindungen, dem sogenannten CDR (CDR: Call Detail Record), ein Flag zur entsprechenden Kennzeichnung für die Vergebührung (Billing) gesetzt.

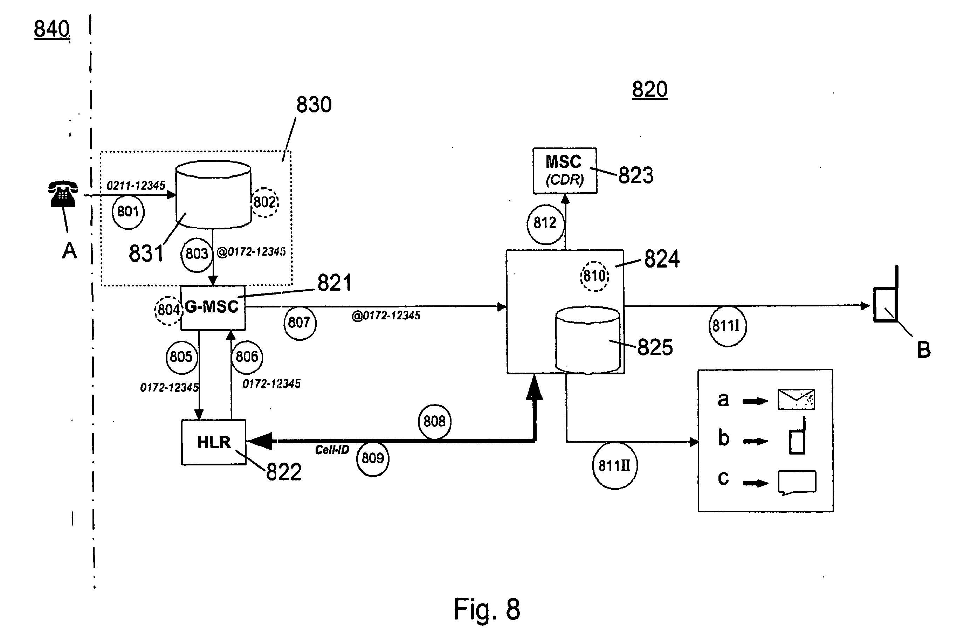

Fig. 8 zeigt ein weiteres Ausführungsbeispiel einer Nutzungssteuerung von Diensten für an ein mobiles Endgerät B gerichtete Kommunikationsverbindungen, wenn sich das mobile Endgerät B innerhalb oder außerhalb eines für dieses seitens des Kommunikationsnetzes zugeordneten Vorzugsgebietes befindet. Dabei wird die Kommunikationsverbindung vorliegend von einem Teilnehmer A bzw. dessen Endgerät A an eine dem mobilen Endgerät B für dessen Vorzugsgebiet und/oder Vorzugsgebiete zugeordnete Festnetzrufnummer "0211-12345" gerichtet. Bei der Nutzungssteuerung von Diensten für Kommunikationsverbindungen gemäß dem Ausführungsbeispiel nach Fig. 8 ist gegenüber der Nutzungssteuerung von Diensten für Kommunikationsverbindungen gemäß dem Ausführungsbeispiel nach Fig. 7 eine vorgezogene Teilnehmersuchruf-Funktionalität, ein sogenanntes Prepaging, eingebunden, um eine genauere Eingrenzung des Aufenthaltsortes des mobilen Endgerätes B im Mobilfunknetz 820 zu ermöglichen. Dabei sind seitens des Kommunikationsnetzes und dessen Einrichtungen die folgenden Abläufe bzw. Verfahrensschritte 801 bis 812 realisiert:
- 801:: Die von dem Teilnehmer A bzw. dessen Endgerät A kommende Anforderung nach einem Aufbau einer Kommunikationsverbindung zu bzw. mit dem mobilen Endgerät B wird mittels der Festnetzrufnummer "0211-12345" über ein PSTN (Public Standard Telefone Network) 840 zu einem die Festnetzrufnummer "0211-12345" verwaltenden Festnetzbetreiber bzw. ―provider 830 durchgeroutet.
- 802:: Seitens einer von dem Festnetzbetreiber 830 unterhaltenen, eine Datenbank 831 umfassenden Einrichtung erfolgt dann ein sogenanntes Mapping der Festnetzrufnummer mit der dieser im Mobilfunknetz 820 zugeordneten Mobilfunknetzrufnummer (MSISDN) des mobilen Endgerätes B. In der Datenbank 831 ist dazu eine Liste gespeichert, in der der einem Teilnehmer B für dessen Vorzugsgebiet und/oder Vorzugsgebieten im Mobilfunknetz 820 zugeordneten Festnetzrufnummer die entsprechende Mobilfunknetzrufnummer (MSISDN) zugeordnet ist. Im Rahmen des Aufbaus der Kommunikationsverbindung wird dabei aus der Datenbank 831 anhand der Festnetzrufnummer die Mobilfunknetzrufnummer (MSISDN) durch eine entsprechend geeignete Datenbankabfrage ermittelt.
- 803:: Die so aus der Datenbank 831 ermittelte Mobilfunknetzrufnummer (MSISDN), vorliegend "0172-12345", wird anschließend zum Aufbau der Kommunikationsverbindung seitens der Einrichtungen des Festnetzbetreibers 830 mit einer Kennung, vorliegend einem exemplarisch durch "@" gekennzeichneten Präfix, versehen und an eine als Übergangseinheit (Gateway) dienende mobile Vermittlungsstelle (MSC (Mobile Switching Center)) 821 des Mobilfunknetzes 820, vorliegend einem G-MSC 821 (Gateway MSC (Mobile Switching Center)) weitergeleitet. Die Kennung dient dabei zur Identifizierung des Festnetzbetreibers 830 seitens des Mobilfunknetzes 820. Die Kennung, also das der Mobilfunknetzrufnummer (MSISDN) "0172-12345" vorangestellte Präfix "@", muss dazu entsprechend seitens der Einrichtungen des Mobilfunknetzes, 820 interpretiert werden können.
- 804:: Seitens des G-MSC 821 wird die der Mobilfunknetzrufnummer (MSISDN) "0172-12345" als Präfix vorangestellte Kennung "@" dann abgeschnitten und die Mobilfunknetzrufnummer (MSISDN) "0172-12345" für eine anschließende Bestimmung des Aufenthaltsortes des mobilen Endgerätes B im Mobilfunknetz 820 als auch der zur Verfügung stehenden Dienstnutzungen, für Kommunikationsverbindungen genutzt.
- 805:: Dazu sendet das G-MSC 821 eine Anfrage mit der Mobilfunknetzrufnummer (MSISDN) "0172-12345" an die Teilnehmerdatenbank HLR (HLR: Home Location Register) 822 des Mobilfunknetzes 820.
- 806:: Die Teilnehmerdatenbank HLR 822 des Mobilfunknetzes 820 antwortet auf diese Anfrage 805 mit einer in dieser zu der Mobilfunknetzrufnummer (MSISDN) "0172-12345" gespeicherten bzw. erfassten Kennung und sendet diese an das G-MSC 821. Dem G-MSC 821 wird mit der Kennung dabei signalisiert um was für einen Teilnehmer B es sich handelt und wo, das heißt in welcher Einrichtung 824 des Mobilfunknetzes 820 für diesen Teilnehmer B weitere Informationen für einen Aufbau der Kommunikationsverbindung verwaltet sind. Vorliegend handelt es sich bei der Einrichtung 824 des Mobilfunknetzes um eine sogenannte IN-Anlage 824 (IN: Intelligent Network Subsystem), welche unter anderem sogenannte zusätzliche Dienste bereitstellende SCP-Datenbanken (SCP: Service Control Points) 825 aufweist.
- 807:: Das G-MSC 821 routet anschließend die mit der Kennung "@" versehene Mobilfunknetzrufnummer (MSISDN) "0172-12345" an die IN-Anlage 824. Seitens der IN-Anlage 724 wird die der Mobilfunknetzrufnummer (MSISDN) "0172-12345" als Präfix vorangestellte Kennung "@" dann wieder abgeschnitten.
- 808:: Die IN-Anlage 824 richtet im Rahmen eines sogenannten Prepaging, einer vorgezogenen Teilnehmersuchruf-Funktionalität, eine entsprechende Anfrage nach dem Aufenthaltsort des mobilen Endgerätes B an die Teilnehmerdatenbank HLR 822 des Mobilfunknetzes.
- 809:: Die Teilnehmerdatenbank HLR 822 des Mobilfunknetzes 820 antwortet auf diese Anfrage 808 mit der in der Teilnehmerdatenbank HLR 822 zu der Mobilfunknetzrufnummer (MSISDN) "0172-12345" gespeicherten bzw. erfassten aktuellen Kennung des Aufenthaltsortes des mobilen Endgerätes B, vorliegend der sogenannten Location Number (Cell-ID) des mobilen Endgerätes B, vorzugsweise unter Nutzung der sogenannten MSRN (MSRN: Mobile Station Roaming Number). Dabei wird die Location Number des mobilen Endgerätes B von der Teilnehmerdatenbank HLR 822 dann an die IN-Anlage 824 gesendet.
- 810:: Seitens der IN-Anlage 824 wird anhand der von der Teilnehmerdatenbank HLR 822 im Rahmen des Verfahrensschrittes 809 gelieferten Location Number (Cell-ID) des mobilen Endgerätes B überprüft, ob sich der Teilnehmer B bzw. dessen mobiles Endgerät innerhalb oder außerhalb eines seiner Vorzugsgebiete befindet. Diese Überprüfung erfolgt dabei durch entsprechende Abfrage in der SCP-Datenbank 825, welche dazu eine Liste aufweist, in welcher zu der jeweiligen mittels Prepaging (808, 809) ermittelten Location Number (Cell-ID) des Teilnehmers B eine entsprechende, den Aufenthalt innerhalb oder außerhalb eines Vorzugsgebietes repräsentierende Kennung gespeichert ist.
- 811:: In Abhängigkeit von dem Ergebnis der Abfrage 810 der SCP-Datenbank 825 sind folgende Dienstnutzungen für die Kommunikationsverbindung gegeben:
811 I: Die von dem Teilnehmer A aus dem PSTN 840 angeforderte Kommunikationsverbindung wird zu dem mobilen Endgerät B durchgeroutet, wenn sich dieses in dem Vorzugsgebiet befindet, welchem für das mobile Endgerät B die Festnetzrufnummer "0211-12345" zugeordnet ist.
811 II: Die von dem Teilnehmer A aus dem PSTN 840 angeforderte Kommunikationsverbindung wird zu in der SCP-Datenbank 825 von dem Teilnehmer B des mobilen Endgerätes B individuell ausgewählten bzw. vorgegebenen Alternativen weitergehender Dienstnutzungen durchgeroutet, wenn sich dieses außerhalb des Vorzugsgebiets befindet. Die vorliegend genutzten, bereits im Zusammenhang mit Fig. 4 beschriebenen alternativen Dienstnutzungen umfassen dabei:
811 II a: Ein Durchrouten der von dem Teilnehmer A geforderten Kommunikationsverbindung zu einer seitens des Mobilfunknetzes 820 für das mobile Endgerät B eingerichteten und verwalteten Mailbox.
811 II b: Ein vorzugsweise für den Teilnehmer B kostenpflichtiges Durchrouten der von dem Teilnehmer A geforderten Kommunikationsverbindung zu dem sich außerhalb des Vorzugsgebiets im Restgebiet aufhaltenden mobilen Endgerätes B unter Nutzung der entsprechenden Mobilfunkrufnummer (MSISDN) des mobilen Endgerätes B.
811 II c: Ein Durchrouten der von dem Teilnehmer A geforderten Kommunikationsverbindung zu einer seitens des Mobilfunknetzes 820 für das mobile Endgerät B seitens des Mobilfunknetzes 820 bereitgehaltene Ansage einer dafür vorgesehenen und eingerichteten Einrichtung seitens des Mobilfunknetzes 820.
- 812:: Wenn sich das mobile Endgerät des Teilnehmer B außerhalb seines Vorzugsgebiets im Restgebiet des Mobilfunknetzes 820 befindet und von dem Teilnehmer B eine Weiter- bzw. Umleitung von an im Vorzugsgebiet gerichteten Kommunikationsverbindungen an das sich außerhalb des Vorzugsgebiets im Restgebiet aufhaltende mobile Endgerät B gemäß der Dienstnutzungsalternative nach 811 II b aktiviert ist, wird in der für die Vermittlung der Kommunikationsverbindung zu dem mobilen Endgerät B zuständigen mobilen Vermittlungseinrichtung, vorliegend exemplarisch das MSC 823 des Mobilfunknetzes 820, eine Kennung für eine entsprechende Abrechnung der Weiter- bzw. Umleitung erzeugt. Vorliegend wird dabei in der entsprechenden seitens des MSC 823 geführten und verwalteten Datei für Kommunikationsverbindungen, dem sogenannten CDR (CDR: Call Detail Record) ein Flag zur entsprechenden Kennzeichnung für die Vergebührung (Billing) gesetzt.

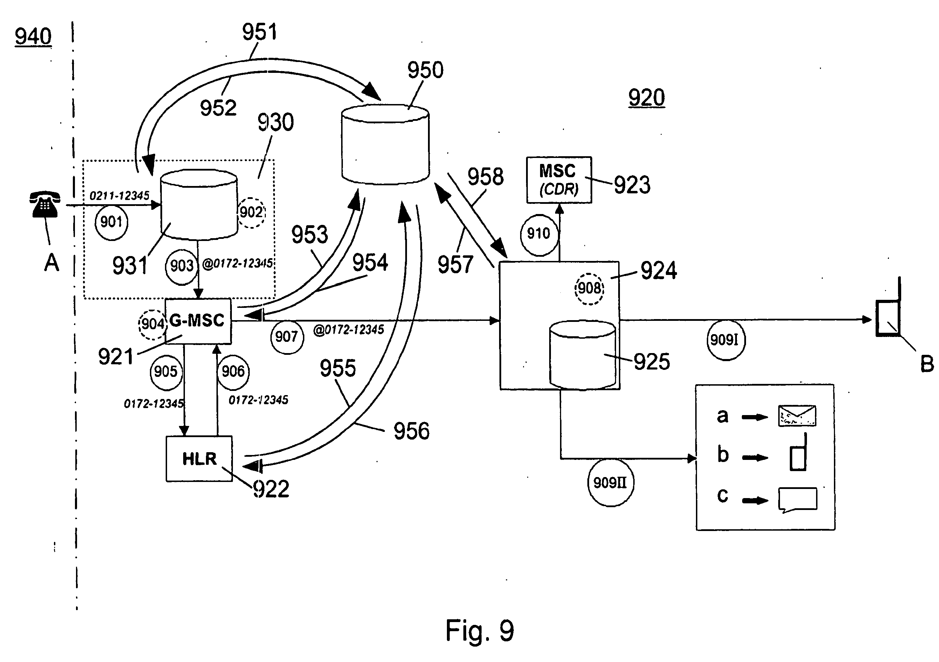

Fig. 9 zeigt ein weiteres, besonders bevorzugtes Ausführungsbeispiel einer Nutzungssteuerung von Diensten für an ein mobiles Endgerät B gerichtete Kommunikationsverbindungen, wenn sich das mobile Endgerät B innerhalb oder außerhalb eines für dieses seitens des Kommunikationsnetzes zugeordneten Vorzugsgebietes befindet. Dabei wird die Kommunikationsverbindung vorliegend von einem Teilnehmer A bzw. dessen Endgerät an eine dem mobilen Endgerät B für dessen Vorzugsgebiet und/oder Vorzugsgebiete zugeordnete Festnetzrufnummer "0211-12345" gerichtet. Bei der Nutzungssteuerung von Diensten für Kommunikationsverbindungen gemäß dem Ausführungsbeispiel nach Fig. 9 sind gegenüber der Nutzungssteuerung von Diensten für Kommunikationsverbindungen gemäß dem Ausführungsbeispiel nach Fig. 7 Teilnehmer bzw. deren mobile Endgeräte, denen im Mobilfunknetz 920 für Dienstnutzungen von Kommunikationsverbindungen wenigstens ein gleiches Vorzugsgebiet zugeordnet ist, als Gruppe in einem sogenannten VPN (VPN: Virtual Private Network) zusammengefasst und verwaltet. Eine Gruppennutzung von Diensten für Kommunikationsverbindungen in Abhängigkeit des Aufenthaltsortes einzelner und/oder mehrerer Gruppenmitglieder ermöglicht dabei insbesondere umfangreichere und individuellere Dienstnutzungen für Kommunikationsverbindungen von Gruppenmitgliedern, wie Familienmitgliedern, Firmenangehörigen und/oder dergleichen Gruppen, untereinander und/oder an gemeinsamen und/oder unterschiedlichen Aufenthaltsorten.

Fig. 9 zeigt exemplarisch eine Datenbank 950 in der eine Liste gespeichert ist, in bzw. mittels welcher einer einen Teilnehmer B identifizierenden Kennung, einer sogenannten Teilnehmer-ID, eine den Teilnehmer als Mitglied einer Gruppe und/oder mehrerer Gruppen identifizierende Kennung, eine sogenannte Gruppen-ID bzw. VPN-ID, zugeordnet ist. Die Datenbank 950 kann sich dabei seitens der verschiedenen, an einem Aufbau einer Kommunikationsverbindung beteiligten Einrichtungen des Mobilfunknetzes 920, des Festnetzes 930 und/oder des PSTN 940 befinden, Bestandteil derselben sein und/oder von diesen genutzt werden. Dabei sind in Abhängigkeit der jeweiligen Ausgestaltung die entsprechend nutzbaren Einträge der Teilnehmer-ID in der in der Datenbank 950 gespeicherten Liste und die entsprechende Nutzung der der jeweiligen Teilnehmer-ID zugeordneten VPN-ID an die jeweiligen Anfragen und Antworten der an einem Aufbau einer Kommunikationsverbindung beteiligten Einrichtungen und deren verwendeten Protokolle angepasst. Seitens des Kommunikationsnetzes und dessen Einrichtungen sind dabei vorliegend die nachfolgenden Abläufe bzw. Verfahrensschritte 901 bis 910 realisiert:
- 901:: Die von dem Teilnehmer A bzw. dessen Endgerät A kommende Anforderung nach einem Aufbau einer Kommunikationsverbindung zu bzw. mit dem mobilen Endgerät B wird mittels der Festnetzrufnummer "0211-12345" über ein PSTN (Public Standard Telefone Network) 940 zu einem die Festnetzrufnummer "0211-12345" verwaltenden Festnetzbetreiber bzw. ―provider 930 durchgeroutet.
Bei entsprechender Anordnung und Ausgestaltung der Datenbank 950 seitens des Festnetzbetreibers 930 ist dabei in der Datenbank 950 der Festnetzrufnummer "0211-12345" eine entsprechende VPN-ID zugeordnet. Diese wird im Rahmen des Aufbaus der Kommunikationsverbindung anhand der Festnetzrufnummer aus der Datenbank 950 durch Abfrage 951 ermittelt. Die Datenbank liefert dann als Antwort 952 auf die Anfrage 951 die VPN-ID. Die VPN-ID wird dann für bzw. mit dem weiteren Aufbau der Kommunikationsverbindung genutzt.
- 902:: Seitens einer von dem Festnetzbetreiber 930 unterhaltenen, eine Datenbank 931 umfassenden Einrichtung erfolgt dann ein sogenanntes Mapping der Festnetzrufnummer mit der dieser im Mobilfunknetz 920 zugeordneten Mobilfunknetzrufnummer (MSISDN) des mobilen Endgerätes B. In der Datenbank 931 ist dazu eine Liste gespeichert, in der der einem Teilnehmer B für dessen Vorzugsgebiet und/oder Vorzugsgebieten im Mobilfunknetz 920 zugeordneten Festnetzrufnummer die entsprechende Mobilfunknetzrufnummer (MSISDN) zugeordnet ist. Im Rahmen des Aufbaus der Kommunikationsverbindung wird dabei aus der Datenbank 931 anhand der Festnetzrufnummer die Mobilfunknetzrufnummer (MSISDN) durch eine entsprechend geeignete Datenbankabfrage ermittelt.
- 903:: Die so aus der Datenbank 931 ermittelte Mobilfunknetzrufnummer (MSISDN), vorliegend "0172-12345", wird anschließend zum Aufbau der Kommunikationsverbindung seitens der Einrichtungen des Festnetzbetreibers 930 mit einer Kennung, vorliegend einem exemplarisch durch "@" gekennzeichneten Präfix, versehen und an eine als Übergangseinheit (Gateway) dienende mobile Vermittlungsstelle (MSC (Mobile Switching Center)) 921 des Mobilfunknetzes 920, vorliegend einem G-MSC 921 (Gateway MSC (Mobile Switching Center)) weitergeleitet. Die Kennung dient dabei zur Identifizierung des Festnetzbetreibers 930 seitens des Mobilfunknetzes 920. Die Kennung, also das der Mobilfunknetzrufnummer (MSISDN) "0172-12345" vorangestellte Präfix "@", muss dazu entsprechend seitens der Einrichtungen des Mobilfunknetzes 920 interpretiert werden können. Bei entsprechender Anordnung der Datenbank 950 seitens des Festnetzbetreibers 930 wird dabei die VPN-ID mit an das G-MSC 921 übertragen.
- 904:: Seitens des G-MSC 921 wird die der Mobilfunknetzrufnummer (MSISDN) "0172-12345" als Präfix vorangestellte Kennung "@" dann abgeschnitten und die Mobilfunknetzrufnummer (MSISDN) "0172-12345" für eine anschließende Bestimmung des Aufenthaltsortes des mobilen Endgerätes B im Mobilfunknetz 920 als auch der zur Verfügung stehenden Dienstnutzungen genutzt. Bei entsprechender alternativer und/oder ergänzender Anordnung und Ausgestaltung der Datenbank 950 seitens des G-MSC 921 ist in der Datenbank 950 der Mobilfunknetzrufnummer (MSISDN) "0172-12345" mit oder ohne vorangestelltem Präfix "@" eine entsprechende VPN-ID zugeordnet. Diese wird im Rahmen des Aufbaus der Kommunikationsverbindung anhand der Mobilfunknetzrufnummer (MSISDN) "0172-12345" mit oder ohne vorangestelltem Präfix "@" aus der Datenbank 950 durch von dem G-MSC 921 an die Datenbank 950 gerichtete Abfrage 953 ermittelt. Die Datenbank 950 liefert dann als Antwort 954 auf die Anfrage 953 die VPN-ID an das G-MSC 922 zurück. Die VPN-ID wird dann für bzw. mit dem weiteren Aufbau der Kommunikationsverbindung genutzt und bzw. mit durchgeroutet.
- 905:: Für die Bestimmung des Aufenthaltsortes sendet das G-MSC 921 eine Anfrage mit der Mobilfunknetzrufnummer (MSISDN) "0172-12345" an die Teilnehmerdatenbank HLR (HLR: Home Location Register) 922 des Mobilfunknetzes 920.
Bei entsprechender alternativer und/oder ergänzender Anordnung und Ausgestaltung der Datenbank 950 seitens der Teilnehmerdatenbank HLR 922 ist in der Datenbank 950 der Mobilfunknetzrufnummer (MSISDN) "0172-12345" eine entsprechende VPN-ID zugeordnet. Diese wird im Rahmen des Aufbaus der Kommunikationsverbindung anhand der Mobilfunknetzrufnummer (MSISDN) "0172-12345" aus der Datenbank 950 durch von der Teilnehmerdatenbank HLR 922 an die Datenbank 950 gerichtete Abfrage 955 ermittelt. Die Datenbank 950 liefert dann als Antwort 956 auf die Anfrage 955 die VPN-ID an die Teilnehmerdatenbank HLR 922 zurück. Die VPN-ID wird dann für bzw. mit dem weiteren Aufbau der Kommunikationsverbindung genutzt und entsprechend weiter mit durchgeroutet.
- 906:: Die Teilnehmerdatenbank HLR 922 des Mobilfunknetzes 920 antwortet auf die von dem G-MSC 921 mit der Mobilfunknetzrufnummer (MSISDN) "0172-12345" kommenden Anfrage 905 mit der in die Teilnehmerdatenbank HLR 922 zu der Mobilfunknetzrufnummer (MSISDN) "0172-12345" gespeicherten bzw. erfassten Kennung der Teilnehmerdatenbank VLR (VLR: Visitor Location Register), der sogenannten VLR-ID, und sendet diese an das G-MSC 921, bei entsprechender Anordnung und Ausgestaltung der Datenbank 950 gemeinsam mit der durch die Antwort 956 gelieferten VPN-ID. Dem G-MSC 921 wird mit der VLR-ID dabei signalisiert um was für einen Teilnehmer B es sich handelt und wo, das heißt in welcher Einrichtung 924 des Mobilfunknetzes 920 für diesen Teilnehmer B weitere Informationen für einen Aufbau der Kommunikationsverbindung verwaltet sind. Vorliegend handelt es sich bei der Einrichtung 924 des Mobilfunknetzes um eine sogenannte IN-Anlage 924 (IN: Intelligent Network Subsystem), welche unter anderem sogenannte zusätzliche Dienste bereitstellende SCP-Datenbanken (SCP: Service Control Points) 925 aufweist.
- 907:: Das G-MSC 921 routet anschließend die mit der Kennung "@" versehene Mobilfunknetzrufnummer (MSISDN) "0172-12345" mit der VLR-ID und bei entsprechender Anordnung und Ausgestaltung der Datenbank 950 gemeinsam mit der durchgerouteten VPN-ID an die IN-Anlage 924.
- 908:: Seitens der IN-Anlage 724 wird die der Mobilfunknetzrufnummer (MSISDN) "0172-12345" als Präfix vorangestellte Kennung "@" dann wieder abgeschnitten und anhand der VLR-ID und/oder der durchgerouteten VPN-ID überprüft, ob sich der Teilnehmer B bzw. dessen mobiles Endgerät B innerhalb oder außerhalb eines seiner Gruppe zugeordneten Vorzugsgebiete befindet.
Bei entsprechender alternativer Anordnung und Ausgestaltung der Datenbank 950 seitens der IN-Anlage 924 ist in der Datenbank 950 der Mobilfunknetzrufnummer (MSISDN) "0172-12345" mit oder ohne vorangestelltem Präfix "@" oder der VLR-ID eine entsprechende VPN-ID zugeordnet. Diese wird im Rahmen des Aufbaus der Kommunikationsverbindung anhand der Mobilfunknetzrufnummer (MSISDN) "0172-12345" mit oder ohne vorangestelltem Präfix "@" und/oder der VLR-ID aus der Datenbank 950 durch von der IN-Anlage 924 an die Datenbank 950 gerichtete Abfrage 957 ermittelt. Die Datenbank 950 liefert dann als Antwort 958 auf die Anfrage 957 die VPN-ID an die IN-Anlage 924 zurück.
Im Rahmen der seitens der IN-Anlage 924 erfolgenden Überprüfung des Aufenthalts des mobilen Endgerätes B innerhalb oder außerhalb der diesem zur Verfügung stehenden Vorzugsgebiete im Mobilfunknetz 920 erfolgt eine entsprechende Abfrage in der SCP-Datenbank 925, welche dazu eine Liste aufweist, in welcher zu der jeweiligen VPN-ID der jeweiligen Gruppe des Teilnehmers B eine entsprechende den Aufenthalt innerhalb oder außerhalb eines Vorzugsgebietes repräsentierende Kennung gespeichert hat.
- 909:: In Abhängigkeit von dem Ergebnis der zur Überprüfung des Aufenthaltsorts innerhalb oder außerhalb eines Vorzugsgebiets erfolgenden Abfrage 908 der SCP-Datenbank 925 sind folgende Dienstnutzungen für die Kommunikationsverbindung gegeben:
- 909 I:: Die von dem Teilnehmer A aus dem PSTN 940 angeforderte Kommunikationsverbindung wird zu dem mobilen Endgerät B durchgeroutet, wenn sich dieses in dem Vorzugsgebiet befindet, welchem für das mobile Endgerät B die Festnetzrufnummer "0211-12345" zugeordnet ist.
- 909 II:: Die von dem Teilnehmer A aus dem PSTN 940 angeforderte Kommunikationsverbindung wird zu in der SCP-Datenbank 925 von dem Teilnehmer B des mobilen Endgerätes B oder dessen Gruppe ausgewählten bzw. vorgegebenen Alternativen weitergehender Dienstnutzungen durchgeroutet, wenn sich dieses außerhalb des Vorzugsgebiets befindet. Die vorliegend genutzten, bereits im Zusammenhang mit Fig. 4 beschriebenen alternativen Dienstnutzungen umfassen dabei:
909 II a: Ein Durchrouten der von dem Teilnehmer A geforderten Kommunikationsverbindung zu einer seitens des Mobilfunknetzes 920 für das mobile Endgerät B bzw. der Gruppe eingerichteten und verwalteten Mailbox.
909 II b: Ein vorzugsweise für den Teilnehmer B kostenpflichtiges Durchrouten der von dem Teilnehmer A geforderten Kommunikationsverbindung zu dem sich außerhalb des Vorzugsgebiets im Restgebiet aufhaltenden mobilen Endgerätes B unter Nutzung der entsprechenden Mobilfunkrufnummer (MSISDN) des mobilen Endgerätes B.
909 II c: Ein Durchrouten der von dem Teilnehmer A geforderten Kommunikationsverbindung zu einer seitens des Mobilfunknetzes 920 für das mobile Endgerät B oder dessen Gruppe seitens des Mobilfunknetzes 920 bereitgehaltene Ansage einer dafür vorgesehenen und eingerichteten Einrichtung seitens des Mobilfunknetzes 920.
- 910:: Wenn sich das mobile Endgerät des Teilnehmer B außerhalb eines seiner Gruppe zugeordneten Vorzugsgebiets im Restgebiet des Mobilfunknetzes 920 befindet und von dem Teilnehmer B eine Weiter- bzw. Umleitung von an im Vorzugsgebiet gerichteten Kommunikationsverbindungen an das sich außerhalb des Vorzugsgebiets im Restgebiet aufhaltende mobile Endgerät gemäß der Dienstnutzungsalternative nach 909 II b aktiviert ist, wird in der für die Vermittlung der Kommunikationsverbindung zu dem mobilen Endgerät B zuständigen mobilen Vermittlungseinrichtung, vorliegend exemplarisch das MSC 923 des Mobilfunknetzes 920, eine Kennung für eine entsprechende Abrechnung der Weiter- bzw. Umleitung erzeugt. Vorliegend wird dabei in der entsprechenden seitens des MSC 923 geführten und verwalteten Datei für Kommunikationsverbindungen, dem sogenannten CDR (CDR: Call Detail Record), ein Flag zur entsprechenden Kennzeichnung für die Vergebührung (Billing) gesetzt.

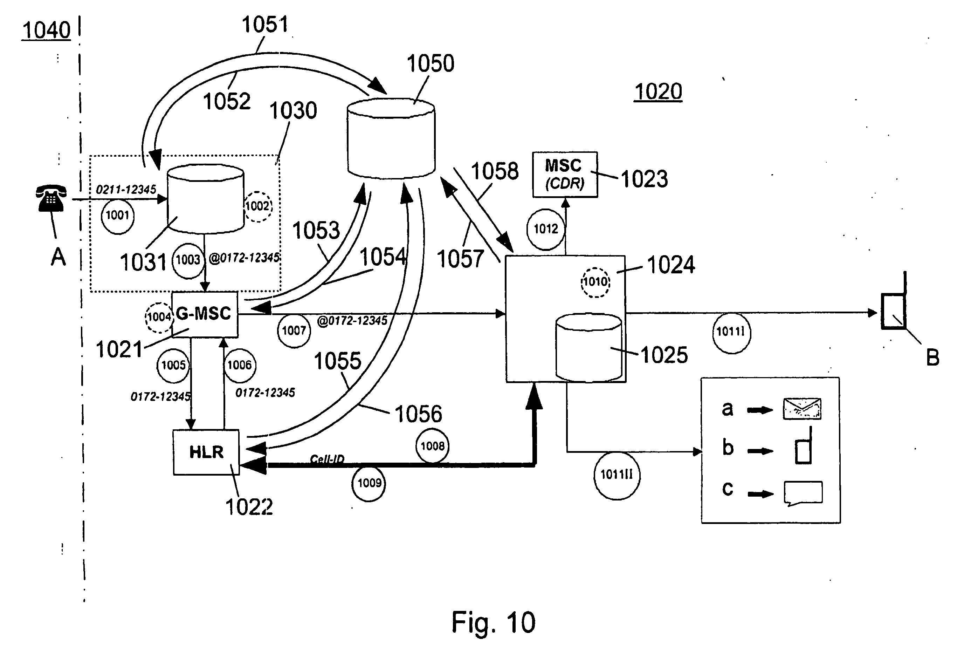

Fig. 10 zeigt ein weiteres Ausführungsbeispiel einer Nutzungssteuerung von Diensten für an ein mobiles Endgerät B gerichtete Kommunikationsverbindungen, wenn sich das mobile Endgerät B innerhalb oder außerhalb eines für dieses seitens des Kommunikationsnetzes zugeordneten Vorzugsgebietes befindet. Dabei wird die Kommunikationsverbindung vorliegend von einem Teilnehmer A bzw. dessen Endgerät an eine dem mobilen Endgerät B für dessen Vorzugsgebiet und/oder Vorzugsgebiete zugeordnete Festnetzrufnummer "0211-12345" gerichtet.

Wie bei der Nutzungssteuerung von Diensten für Kommunikationsverbindungen gemäß dem Ausführungsbeispiel nach Fig. 9 sind bei dem Ausführungsbeispiel nach Fig. 10 Teilnehmer bzw. deren mobile Endgeräte, denen im Mobilfunknetz 1020 für Dienstnutzungen von Kommunikationsverbindungen wenigstens ein gleiches Vorzugsgebiet zugeordnet ist, als Gruppe in einem sogenannten VPN (VPN: Virtual Private Network) zusammengefasst und verwaltet. Eine Gruppennutzung von Diensten für Kommunikationsverbindungen in Abhängigkeit des Aufenthaltsortes einzelner und/oder mehrerer Gruppenmitglieder ermöglicht dabei insbesondere umfangreichere und individuellere Dienstnutzungen für Kommunikationsverbindungen von Gruppenmitgliedern, wie Familienmitgliedern, Firmenangehörigen und/oder dergleichen Gruppen, untereinander und/oder an gemeinsamen und/oder unterschiedlichen Aufenthaltsorten.

Fig. 10 zeigt exemplarisch eine Datenbank 1050 in der eine Liste gespeichert ist, in bzw. mittels welcher einer einen Teilnehmer B identifizierenden Kennung, einer sogenannten Teilnehmer-ID, eine den Teilnehmer als Mitglied einer Gruppe und/oder mehrerer Gruppen identifizierende Kennung, eine sogenannte Gruppen-ID bzw. VPN-ID, zugeordnet ist. Die Datenbank 1050 kann sich dabei seitens der verschiedenen, an einem Aufbau einer Kommunikationsverbindung beteiligten Einrichtungen des Mobilfunknetzes 1020, des Festnetzes 1030 und/oder des PSTN 1040 befinden, Bestandteil derselben sein und/oder von diesen genutzt werden. Dabei sind in Abhängigkeit der jeweiligen Ausgestaltung die entsprechend nutzbaren Einträge der Teilnehmer-ID in der in der Datenbank 1050 gespeicherten Liste und die entsprechende Nutzung der der jeweiligen Teilnehmer-ID zugeordneten VPN-ID an die jeweiligen Anfragen und Antworten der an einem Aufbau einer Kommunikationsverbindung beteiligten Einrichtungen und deren verwendeten Protokolle angepasst.

Bei der Nutzungssteuerung von Diensten für Kommunikationsverbindungen gemäß dem Ausführungsbeispiel nach Fig. 10 ist ferner gegenüber der Nutzungssteuerung von Diensten für Kommunikationsverbindungen gemäß dem Ausführungsbeispiel nach Fig. 9 eine vorgezogene Teilnehmersuchruf-Funktionalität, ein sogenanntes Prepaging, eingebunden, um eine genauere Eingrenzung des Aufenthaltsortes des mobilen Endgerätes B im Mobilfunknetz 920 zu ermöglichen.

Dabei sind seitens des in Fig. 10 dargestellten Ausführungsbeispiels des Kommunikationsnetzes und dessen Einrichtungen die folgenden Abläufe bzw. Verfahrensschritte 1001 bis 1012 realisiert:
- 1001:: Die von dem Teilnehmer A bzw. dessen Endgerät A kommende Anforderung nach einem Aufbau einer Kommunikationsverbindung zu bzw. mit dem mobilen Endgerät B wird mittels der Festnetzrufnummer "0211-12345" über ein PSTN (Public Standard Telefone Network) 1040 zu einem die Festnetzrufnummer "0211-12345" verwaltenden Festnetzbetreiber bzw. ―provider 1030 durchgeroutet.
Bei entsprechender Anordnung und Ausgestaltung der Datenbank 1050 seitens des Festnetzbetreibers 1030 ist dabei in der Datenbank 1050 der Festnetzrufnummer "0211-12345" eine entsprechende VPN-ID zugeordnet. Diese wird im Rahmen des Aufbaus der Kommunikationsverbindung anhand der Festnetzrufnummer aus der Datenbank 1050 durch Abfrage 1051 ermittelt. Die Datenbank liefert dann als Antwort 1052 auf die Anfrage 1051 die VPN-ID. Die VPN-ID wird dann für bzw. mit dem weiteren Aufbau der Kommunikationsverbindung genutzt.
- 1002:: Seitens einer von dem Festnetzbetreiber 1030 unterhaltenen, eine Datenbank 1031 umfassenden Einrichtung erfolgt dann ein sogenanntes Mapping der Festnetzrufnummer mit der dieser im Mobilfunknetz zugeordneten Mobilfunknetzrufnummer (MSISDN) des mobilen Endgerätes B. In der Datenbank 1031 ist dazu eine Liste gespeichert, in der der einem Teilnehmer B für dessen Vorzugsgebiet und/oder Vorzugsgebieten im Mobilfunknetz 1020 zugeordneten Festnetzrufnummer die entsprechende Mobilfunknetzrufnummer (MSISDN) zugeordnet ist. Im Rahmen des Aufbaus der Kommunikationsverbindung wird dabei aus der Datenbank 1031 anhand der Festnetzrufnummer die Mobilfunknetzrufnummer (MSISDN) durch eine entsprechend geeignete Datenbankabfrage ermittelt.
- 1003:: Die so aus der Datenbank 1031 ermittelte Mobilfunknetzrufnummer (MSISDN), vorliegend "0172-12345" wird anschließend zum Aufbau der Kommunikationsverbindung seitens der Einrichtungen des Festnetzbetreibers 1030 mit einer Kennung, vorliegend einem exemplarisch durch "@" gekennzeichneten Präfix, versehen und an eine als Übergangseinheit (Gateway) dienende mobile Vermittlungsstelle (MSC (Mobile Switching Center)) 1021 des Mobilfunknetzes 1020, vorliegend einem G-MSC 1021 (Gateway MSC (Mobile Switching Center)) weitergeleitet. Die Kennung dient dabei zur Identifizierung des Festnetzbetreibers 1030 seitens des Mobilfunknetzes 1020. Die Kennung, also das der Mobilfunknetzrufnummer (MSISDN) "0172-12345" vorangestellte Präfix "@", muss dazu entsprechend seitens der Einrichtungen des Mobilfunknetzes interpretiert werden können. Bei entsprechender Anordnung der Datenbank 1050 seitens des Festnetzbetreibers 1030 wird dabei die VPN-ID mit an das G-MSC 1021 übertragen.
- 1004:: Seitens des G-MSC 1021 wird die der Mobilfunknetzrufnummer (MSISDN) "0172-12345" als Präfix vorangestellte Kennung "@" dann abgeschnitten und die Mobilfunknetzrufnummer (MSISDN) "0172-12345" für eine anschließende Bestimmung des Aufenthaltsortes des mobilen Endgerätes B im Mobilfunknetz 1020 als auch der zur Verfügung stehenden Dienstnutzungen genutzt. Bei entsprechender alternativer Anordnung und Ausgestaltung der Datenbank 1050 seitens des G-MSC 1021 ist in der Datenbank 1050 der Mobilfunknetzrufnummer (MSISDN) "0172-12345" mit oder ohne vorangestelltem Präfix "@" eine entsprechende VPN-ID zugeordnet. Diese wird im Rahmen des Aufbaus der Kommunikationsverbindung anhand der Mobilfunknetzrufnummer (MSISDN) "0172-12345" mit oder ohne vorangestelltem Präfix "@" aus der Datenbank 1050 durch von dem G-MSC 1021 an die Datenbank 1050 gerichtete Abfrage 1053 ermittelt. Die Datenbank 1050 liefert dann als Antwort 1054 auf die Anfrage 1053 die VPN-ID an das G-MSC 1022 zurück. Die VPN-ID wird dann für bzw. mit dem weiteren Aufbau der Kommunikationsverbindung genutzt bzw. mit durchgeroutet.
- 1005:: Zur Bestimmung des Aufenthaltsortes sendet das G-MSC 1021 eine Anfrage mit der Mobilfunknetzrufnummer (MSISDN) "0172-12345" an die Teilnehmerdatenbank HLR (HLR: Home Location Register) 1022 des Mobilfunknetzes 1020.
Bei entsprechender alternativer Anordnung und Ausgestaltung der Datenbank 1050 seitens der Teilnehmerdatenbank HLR 1022 ist in der Datenbank 1050 der Mobilfunknetzrufnummer (MSISDN) "0172-12345" eine entsprechende VPN-ID zugeordnet. Diese wird im Rahmen des Aufbaus der Kommunikationsverbindung anhand der Mobilfunknetzrufnummer (MSISDN) "0172-12345" aus der Datenbank 1050 durch von der Teilnehmerdatenbank HLR 1022 an die Datenbank 1050 gerichtete Abfrage 1055 ermittelt. Die Datenbank 1050 liefert dann als Antwort 1056 auf die Anfrage 1055 die VPN-ID an die Teilnehmerdatenbank HLR 1022 zurück. Die VPN-ID wird dann für bzw. mit dem weiteren Aufbau der Kommunikationsverbindung genutzt und entsprechend weiter mit durchgeroutet.
- 1006:: Die Teilnehmerdatenbank HLR 1022 des Mobilfunknetzes 1020 antwortet auf diese Anfrage 1005 mit einer in dieser zu der Mobilfunknetzrufnummer (MSISDN) "0172-12345" gespeicherten bzw. erfassten Kennung und sendet diese an das G-MSC 1021, bei entsprechender Anordnung und Ausgestaltung der Datenbank 1050 gemeinsam mit der durch die Antwort 1056 gelieferten VPN-ID. Dem G-MSC 1021 wird mit der Kennung dabei signalisiert um was für einen Teilnehmer B es sich handelt und wo, das heißt in welcher Einrichtung 1024 des Mobilfunknetzes 1020 für diesen Teilnehmer B weitere Informationen für einen Aufbau der Kommunikationsverbindung verwaltet sind. Vorliegend handelt es sich bei der Einrichtung 1024 des Mobilfunknetzes um eine sogenannte IN-Anlage 1024 (IN: Intelligent Network Subsystem), welche unter anderem sogenannte zusätzliche Dienste bereitstellende SCP-Datenbanken (SCP: Service Control Points) 1025 aufweist.
- 1007:: Das G-MSC 1021 routet anschließend die mit der Kennung "@" versehene Mobilfunknetzrufnummer (MSISDN)"0172-12345" und bei entsprechender Anordnung und Ausgestaltung der Datenbank 1050 gemeinsam mit der durchgerouteten VPN-ID an die IN-Anlage 1024. Seitens der IN-Anlage 1024 wird die der Mobilfunknetzrufnummer (MSISDN) "0172-12345" als Präfix vorangestellte Kennung "@" dann wieder abgeschnitten.
- 1008:: Die IN-Anlage 1024 richtet im Rahmen eines sogenannten Prepaging, einer vorgezogenen Teilnehmersuchruf-Funktionalität, eine entsprechende Anfrage nach dem Aufenthaltsort des mobilen Endgerätes B an die Teilnehmerdatenbank HLR 1022 des Mobilfunknetzes 1020.
- 1009:: Die Teilnehmerdatenbank HLR 1022 des Mobilfunknetzes 1020 antwortet auf diese Anfrage 1008 mit der in der Teilnehmerdatenbank HLR 1022 zu der Mobilfunknetzrufnummer (MSISDN) "0172-12345" gespeicherten bzw. erfassten aktuellen Kennung des Aufenthaltsortes des mobilen Endgerätes B, vorliegend der sogenannten Location Number (Cell-ID) des mobilen Endgerätes B, vorzugsweise unter Nutzung der sogenannten MSRN (MSRN: Mobile Station Roaming Number). Dabei wird die Location Number des mobilen Endgerätes B von der Teilnehmerdatenbank HLR 1022 dann an die IN-Anlage 1024 gesendet.
- 1010:: Seitens der IN-Anlage 1024 wird anhand der von der Teilnehmerdatenbank HLR 1022 im Rahmen des Verfahrensschrittes 1009 gelieferten Location Number (Cell-ID) des mobilen Endgerätes B überprüft, ob sich der Teilnehmer B bzw. dessen mobiles Endgerät innerhalb oder außerhalb eines seiner Gruppe zugeordneten Vorzugsgebiete befindet.
Bei entsprechender alternativer Anordnung und Ausgestaltung der Datenbank 1050 seitens der IN-Anlage 1024 ist in der Datenbank 1050 der Location Number (Cell-ID) eine entsprechende VPN-ID zugeordnet. Diese wird im Rahmen des Aufbaus der Kommunikationsverbindung anhand der Location Number (Cell-ID) aus der Datenbank 1050 durch von der IN-Anlage 1024 an die Datenbank 1050 gerichtete Abfrage 1057 ermittelt. Die Datenbank 1050 liefert dann als Antwort 1058 auf die Anfrage 1057 die VPN-ID an die IN-Anlage 1024 zurück.
Im Rahmen der seitens der IN-Anlage 1024 erfolgenden Überprüfung des Aufenthalts des mobilen Endgerätes B innerhalb oder außerhalb der diesem zur Verfügung stehenden Vorzugsgebiete im Mobilfunknetz 1020 erfolgt eine entsprechende Abfrage in der SCP-Datenbank 1025, welche dazu eine Liste aufweist, in welcher zu der jeweiligen mittels Prepaging (1008, 1009) ermittelten Location Number (Cell-ID) des Teilnehmers eine entsprechende den Aufenthalt innerhalb oder außerhalb eines Vorzugsgebietes der Gruppe repräsentierende Kennung gespeichert ist.
- 1011:: In Abhängigkeit von dem Ergebnis der zur Überprüfung des Aufenthaltsorts innerhalb oder außerhalb eines Vorzugsgebiets erfolgenden Abfrage 1010 der SCP-Datenbank 1025 sind folgende Dienstnutzungen für die Kommunikationsverbindung gegeben:
1011 I: Die von dem Teilnehmer A aus dem PSTN 1040 angeforderte Kommunikationsverbindung wird zu dem mobilen Endgerät B durchgeroutet, wenn sich dieses in dem Vorzugsgebiet befindet, welchem für das mobile Endgerät B die Festnetzrufnummer "0211-12345" zugeordnet ist.
1011 II: Die von dem Teilnehmer A aus dem PSTN 1040 angeforderte Kommunikationsverbindung wird zu in der SCP-Datenbank 1025 von dem Teilnehmer B des mobilen Endgerätes B oder dessen Gruppe ausgewählten bzw. vorgegebenen Alternativen weitergehender Dienstnutzungen durchgeroutet, wenn sich dieses außerhalb des Vorzugsgebiets befindet. Die vorliegend genutzten, bereits im Zusammenhang mit Fig. 4 beschriebenen alternativen Dienstnutzungen umfassen dabei:
1011 II a: Ein Durchrouten der von dem Teilnehmer A geforderten Kommunikationsverbindung zu einer seitens des Mobilfunknetzes 1020 für das mobile Endgerät B bzw. der Gruppe eingerichteten und verwalteten Mailbox.
1011 II b: Ein vorzugsweise für den Teilnehmer B kostenpflichtiges Durchrouten der von dem Teilnehmer A geforderten Kommunikationsverbindung zu dem sich außerhalb des Vorzugsgebiets im Restgebiet aufhaltenden mobilen Endgerätes B unter Nutzung der entsprechenden Mobilfunkrufnummer (MSISDN) des mobilen Endgerätes B.
1011 II c: Ein Durchrouten der von dem Teilnehmer A geforderten Kommunikationsverbindung zu einer seitens des Mobilfunknetzes 1020 für das mobile Endgerät B oder dessen Gruppe seitens des Mobilfunknetzes 1020 bereitgehaltene Ansage einer dafür vorgesehenen und eingerichteten Einrichtung seitens des Mobilfunknetzes 1020.
- 1012:: Wenn sich das mobile Endgerät des Teilnehmer B außerhalb eines seiner Gruppe zugeordneten Vorzugsgebiets im Restgebiet des Mobilfunknetzes 1020 befindet und von dem Teilnehmer B eine Weiter- bzw. Umleitung von an im Vorzugsgebiet gerichteten Kommunikationsverbindungen an das sich außerhalb des Vorzugsgebiets im Restgebiet aufhaltende mobile Endgerät B gemäß der Dienstnutzungsalternative nach 1011 II b aktiviert ist, wird in der für die Vermittlung der Kommunikationsverbindung zu dem mobilen Endgerät B zuständige mobile Vermittlungseinrichtung, vorliegend exemplarisch das MSC 1023 des Mobilfunknetzes 1020, eine Kennung für eine entsprechende Abrechnung der Weiter- bzw. Umleitung erzeugt. Vorliegend wird dabei in der entsprechenden seitens des MSC 1023 geführten und verwalteten Datei für Kommunikationsverbindungen, dem sogenannten CDR (CDR: Call Detail Record) ein Flag zur entsprechenden Kennzeichnung für die Vergebührung (Billing) gesetzt.

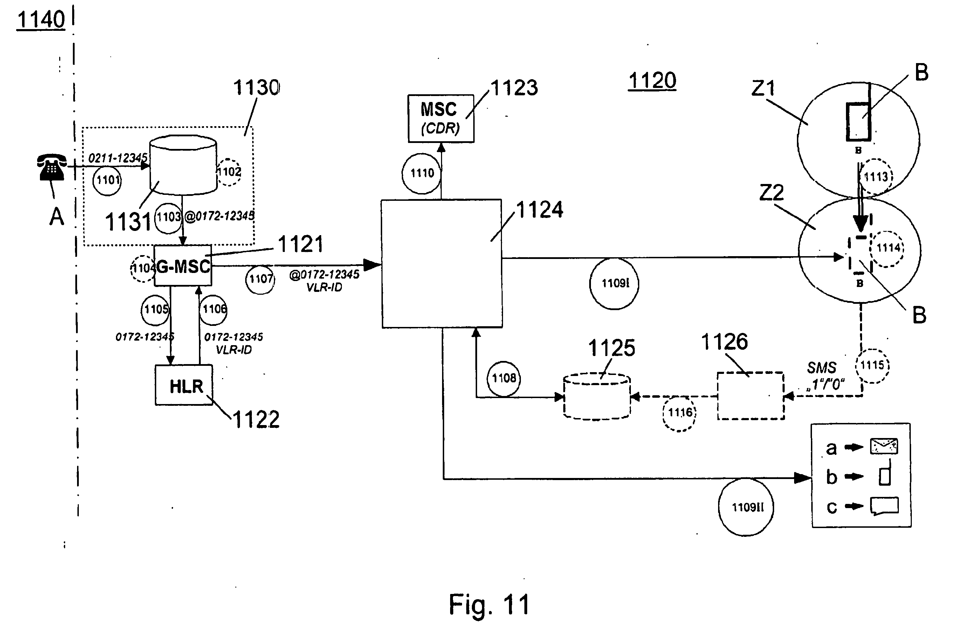

Fig. 11 zeigt ein weiteres Ausführungsbeispiel einer Nutzungssteuerung von Diensten für an ein mobiles Endgerät B gerichtete Kommunikationsverbindungen, wenn sich das mobile Endgerät B innerhalb oder außerhalb eines für dieses seitens des Kommunikationsnetzes zugeordneten Vorzugsgebietes befindet. Dabei wird die Kommunikationsverbindung vorliegend von einem Teilnehmer A bzw. dessen Endgerät an eine dem mobilen Endgerät B für dessen Vorzugsgebiet und/oder Vorzugsgebiete zugeordnete Festnetzrufnummer "0211-12345" gerichtet.

Bei dem in Fig. 11 dargestellten Ausführungsbeispiel sind seitens des mobilen Endgerätes B die diesem seitens des Kommunikationsnetzes zugeordneten Vorzugsgebiete in einem Speicherbereich des mobilen Endgerätes B abgelegt. Vorliegend ist die Liste der Vorzugsgebiete auf der sogenannten SIM-Karte (SIM: Subscriber Identity Module) abgelegt, welches in das mobile Endgerät B eingesetzt diesem einen Zugang zu dem Mobilfunknetz 1120 zur Nutzung beziehungsweise zum Betrieb des mobilen Endgerätes B in dem Mobilfunknetz 1120 ermöglicht, vorliegend gemäß dem GSM-Funknetzstandard. Vorliegend sind dabei auf der SIM-Karte des mobilen Endgerätes B Vorzugsgebiete in einer Liste abgespeichert, die die sogenannte Cell-ID der Funkzelle des jeweiligen Vorzugsgebiets des mobilen Endgerätes B aufweist. Seitens der SIM-Karte ist ferner eine seitens des mobilen Endgerätes B ausführbare Anwendung realisiert, vorliegend mit Hilfe beziehungsweise unter Nutzung einer sogenannten SIM-Toolkit-Applikation, welche Positionsänderungen des mobilen Endgerätes B in bzw. ein Wechseln von Funkzellen Z1, Z2 des Mobilfunknetzes 1120 automatisch erkennt und mit den auf der SIM-Karte des mobilen Endgerätes B in der Liste der Vorzugsgebiete gespeicherten Cell-IDs vergleicht. Die entsprechend von der SIM-Toolkit-Applikation verglichenen Werte der seitens der SIM-Karte erfassten Cell-IDs von Vorzugsgebieten des mobilen Endgerätes B und der erfassten aktuellen Cell-ID der jeweils aktuellen Funkzelle des Mobilfunknetzes 1120, in welchem sich das mobile Endgerät B befindet, werden bei Positionsänderungen des mobilen Endgerätes B, das heißt bei Funkzellenwechseln des mobilen Endgerätes B, automatisch erkannt. Die Erkennung löst dabei seitens des mobilen Endgerätes B einen Status beziehungsweise Statuswechsel aus, welcher über eine von der SIM-Toolkit-Applikation benutzten verdeckten SMS-Nachricht, vorliegend einer sogenannten "0" - SMS oder "1"-SMS, mittels einer OTA-Anwendung (OTA: Over The Air) 1126 in einer dieser zugeordneten beziehungsweise von dieser genutzten Status-Datenbank 1125 eines hier nicht explizit dargestellten OTA-Servers genutzt wird. In der Status-Datenbank 1125 ist dabei für das jeweilige mobile Endgerät B eine entsprechende Statusinformation gespeichert, welche Auskunft darüber gibt, ob sich das mobile Endgerät B in einem seiner Vorzugsgebiete aufhält oder nicht.

Dabei sind seitens des Kommunikationsnetzes und dessen Einrichtungen im Rahmen der Steuerung von Dienstnutzungen für Kommunikationsverbindungen die Abläufe bzw. Verfahrensschritte 1101 bis 1110 und denen vorgelagert die Abläufe 1113 bis 1116 realisiert:
- 1113:: Der Teilnehmer B bzw. dessen mobiles Endgerät B verändert seine Position bzw. seinen Aufenthaltsort im Mobilfunknetz 1120 und wechselt dabei von der Funkzelle Z1 des Mobilfunknetzes 1120 in die Funkzelle Z2 des Mobilfunknetzes 1120. Dabei wird die Cell-ID der Funkzelle Z2 automatisch seitens des mobilen Endgerätes B erfasst.
- 1114:: Die erfasste Cell-ID der Funkzelle Z2 wird von der auf der SIM-Karte des mobilen Endgerätes B ausgeführten Anwendung (SIM-Toolkit-Applikation) mit den in der auf der SIM-Karte abgespeicherten Liste von Cell-IDs von Vorzugsgebieten des mobilen Endgerätes B im Mobilfunknetz 1120 verglichen.
- 1115:: In Abhängigkeit des Ergebnisses des Vergleichs 1114 wird von dem mobilen Endgerät B eine verdeckte SMS mit einer entsprechenden Status-Information an den OTA-Server 1126 gesendet. Bei Übereinstimmung der in Verfahrensschritt 1113 erfassten Cell-ID mit einer der in der Liste von Cell-IDs von Vorzugsgebieten des mobilen Endgerätes B im Mobilfunknetz 1120 gespeicherten Cell-ID wird eine verdeckte Status-SMS mit einer "1" an den OTA-Server 1126 gesendet. Bei fehlender Übereinstimmung der in Verfahrensschritt 1113 erfassten Cell-ID mit einer der in der Liste von Cell-IDs von Vorzugsgebieten des mobilen Endgerätes B im Mobilfunknetz 1120 gespeicherten Cell-ID wird eine verdeckte Status-SMS mit einer "0" an den OTA-Server 1126 gesendet.
- 1116:: Der OTA-Server 1126 speichert den jeweils aktuellen Status in einer von diesem unterhaltenen bzw. diesem zugeordneten Status-Datenbank 1125. Die Speicherung erfolgt in einem sogenannten Überschreibmodus, so dass nur der aktuelle Status in der Datenbank für das jeweilige mobile Endgerät B enthalten bzw. gespeichert ist.
- 1101:: Die von dem Teilnehmer A bzw. dessen Endgerät A kommende Anforderung nach einem Aufbau einer Kommunikationsverbindung zu bzw. mit dem mobilen Endgerät B wird mittels der Festnetzrufnummer "0211-12345" über ein PSTN (Public Standard Telefone Network) 1140 zu einem die Festnetzrufnummer "0211-12345" verwaltenden Festnetzbetreiber bzw. -provider 1130 durchgeroutet.
- 1102:: Seitens einer von dem Festnetzbetreiber 1130 unterhaltenen, eine Datenbank 1131 umfassenden Einrichtung erfolgt dann ein sogenanntes Mapping der Festnetzrufnummer mit der dieser im Mobilfunknetz 1120, zugeordneten Mobilfunknetzrufnummer (MSISDN) des mobilen Endgerätes B. In der Datenbank 1131 ist dazu eine Liste gespeichert, in der der einem Teilnehmer B für dessen Vorzugsgebiet und/oder Vorzugsgebieten im Mobilfunknetz 1120 zugeordneten Festnetzrufnummer die entsprechende Mobilfunknetzrufnummer (MSISDN) zugeordnet ist. Im Rahmen des Aufbaus der Kommunikationsverbindung wird dabei aus der Datenbank 1131 anhand der Festnetzrufnummer die Mobilfunknetzrufnummer (MSISDN) durch eine entsprechend geeignete Datenbankabfrage ermittelt.
- 1103:: Die so aus der Datenbank 1131 ermittelte Mobilfunknetzrufnummer (MSISDN), vorliegend "0172-12345", wird anschließend zum Aufbau der Kommunikationsverbindung seitens der Einrichtungen des Festnetzbetreibers 1130 mit einer Kennung, vorliegend einem exemplarisch durch "@" gekennzeichneten Präfix, versehen und an eine als Übergangseinheit (Gateway) dienende mobile Vermittlungsstelle (MSC (Mobile Switching Center)) 1121 des Mobilfunknetzes 1120, vorliegend einem G-MSC 1121 (Gateway MSC (Mobile Switching Center)) weitergeleitet. Die Kennung dient dabei zur Identifizierung des Festnetzbetreibers 1130 seitens des Mobilfunknetzes 1120. Die Kennung, also das der Mobilfunknetzrufnummer (MSISDN) "0172-12345" vorangestellte Präfix "@" muss dazu entsprechend seitens der Einrichtungen des Mobilfunknetzes 1120, interpretiert werden können.
- 1104:: Seitens des G-MSC 1121 wird die der Mobilfunknetzrufnummer (MSISDN) "0172-12345" als Präfix vorangestellte Kennung "@" dann abgeschnitten und die Mobilfunknetzrufnummer (MSISDN) "0172-12345" für eine anschließende Bestimmung des Aufenthaltsortes des mobilen Endgerätes B im Mobilfunknetz 1120 als auch der dem mobilen Endgerät B zur Verfügung stehenden Dienstnutzungen genutzt.
- 1105:: Dazu sendet das G-MSC 1121 eine Anfrage mit der Mobilfunknetzrufnummer (MSISDN) "0172-12345" an die Teilnehmerdatenbank HLR (HLR: Home Location Register) 1122 des Mobilfunknetzes 1120.
- 1106:: Die Teilnehmerdatenbank HLR 1122 des Mobilfunknetzes 1120 antwortet auf diese Anfrage (1105) mit der in dieser zu der Mobilfunknetzrufnummer (MSISDN) "0172-12345" gespeicherten bzw. erfassten Kennung der Teilnehmerdatenbank VLR (VLR: Visitor Location Register), der sogenannten VLR-ID, und sendet diese an das G-MSC 1121. Dem G-MSC 1121 wird mit der VLR-ID dabei signalisiert um was für einen Teilnehmer B es sich handelt und wo, das heißt in welcher Einrichtung 1124 des Mobilfunknetzes 1120, für diesen Teilnehmer B weitere Informationen für einen Aufbau der Kommunikationsverbindung verwaltet sind. Vorliegend handelt es sich bei der Einrichtung 1124 des Mobilfunknetzes um eine sogenannte IN-Anlage 1124 (IN: Intelligent Network Subsystem), welche unter anderem sogenannte zusätzliche Dienste bereitstellende - hier nicht dargestellte - SCP-Datenbanken (SCP: Service Control Points) aufweist.
- 1107:: Das G-MSC 1121 routet anschließend die mit der Kennung "@" versehene Mobilfunknetzrufnummer (MSISDN) "0172-12345" und die VLR-ID an die IN-Anlage 1124.
- 1108:: Die IN-Anlage 1124 fragt in der Status-Datenbank 1125 den dort gespeicherten aktuellen Status des Aufenthalts des mobilen Endgerätes B innerhalb oder außerhalb eines seiner Vorzugsgebiete ab, welcher in dem vorgelagerten Prozess gemäß Ablauf bzw. Verfahrensschritt 1116 in der Status-Datenbank gespeichert wurde. Die Status-Datenbank 1125, weist dazu eine Liste auf, in welcher zu der jeweiligen VLR-ID des Teilnehmers eine entsprechende den Aufenthalt innerhalb oder außerhalb eines Vorzugsgebietes repräsentierende Status-Kennung gespeichert ist.
- 1109:: In Abhängigkeit von dem Ergebnis der Abfrage 1108 der Status-Datenbank 1125 sind folgende Dienstnutzungen für die Kommunikationsverbindung gegeben:
1109 I: Die von dem Teilnehmer A aus dem PSTN 1140 angeforderte Kommunikationsverbindung wird zu dem mobilen Endgerät B durchgeroutet, wenn sich dieses in dem Vorzugsgebiet befindet, welchem für das mobile Endgerät B die Festnetzrufnummer "0211-12345" zugeordnet ist.
1109 II: Die von dem Teilnehmer A aus dem PSTN 1140 angeforderte Kommunikationsverbindung wird zu in einer SCP-Datenbank der IN-Anlage 1124 von dem Teilnehmer B des mobilen Endgerätes B individuell ausgewählten bzw. vorgegebenen Alternativen weitergehender Dienstnutzungen durchgeroutet, wenn sich dieses außerhalb des Vorzugsgebiets befindet. Die vorliegend genutzten, bereits im Zusammenhang mit Fig. 4 beschriebenen alternativen Dienstnutzungen umfassen dabei:
1109 II a: Ein Durchrouten der von dem Teilnehmer A geforderten Kommunikationsverbindung zu einer seitens des Mobilfunknetzes 1120 für das mobile Endgerät B seitens des Mobilfunknetzes 1120 eingerichteten und verwalteten Mailbox.
1109 II b: Ein vorzugsweise für den Teilnehmer B kostenpflichtiges Durchrouten der von dem Teilnehmer A geforderten Kommunikationsverbindung zu dem sich außerhalb des Vorzugsgebiets im Restgebiet aufhaltenden mobilen Endgerätes B unter Nutzung der entsprechenden Mobilfunkrufnummer (MSISDN) des mobilen Endgerätes B.
1109 II c: Ein Durchrouten der von dem Teilnehmer A geforderten Kommunikationsverbindung zu einer seitens des Mobilfunknetzes 1120 für das mobile Endgerät B bereitgehaltene Ansage einer dafür vorgesehenen und eingerichteten Einrichtung seitens des Mobilfunknetzes 1120.
- 1110:: Wenn sich das mobile Endgerät des Teilnehmer B außerhalb seines Vorzugsgebiets im Restgebiet des Mobilfunknetzes 1120 befindet und von dem Teilnehmer B eine Weiter- bzw. Umleitung von an im Vorzugsgebiet gerichteten Kommunikationsverbindungen an das sich außerhalb des Vorzugsgebiets im Restgebiet aufhaltende mobile Endgerät gemäß der Dienstnutzungsalternative nach 1109 II b aktiviert ist, wird in der für die Vermittlung der Kommunikationsverbindung zu dem mobilen Endgerät B zuständigen mobilen Vermittlungseinrichtung, vorliegend exemplarisch das MSC 1123 des Mobilfunknetzes 1120, eine Kennung für eine entsprechende Abrechnung der Weiter- bzw. Umleitung erzeugt. Vorliegend wird dabei in der entsprechenden seitens des MSC 1123 geführten und verwalteten Datei für Kommunikationsverbindungen, dem sogenannten CDR (CDR: Call Detail Record), ein Flag zur entsprechenden Kennzeichnung für die Vergebührung (Billing) gesetzt.

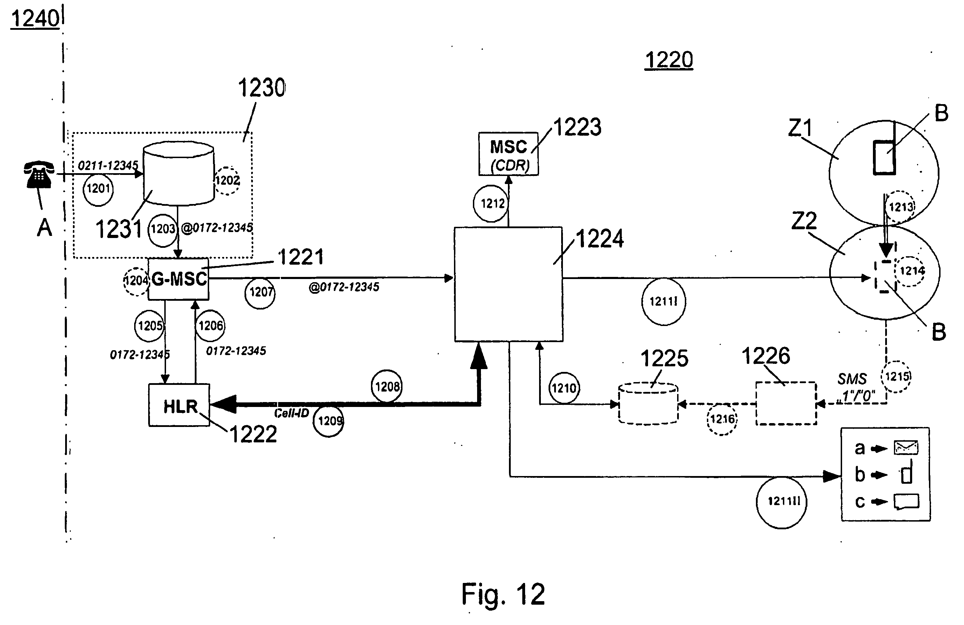

Fig. 12 zeigt ein weiteres Ausführungsbeispiel einer Nutzungssteuerung von Diensten für an ein mobiles Endgerät B gerichtete Kommunikationsverbindungen, wenn sich das mobile Endgerät B innerhalb oder außerhalb eines für dieses seitens des Kommunikationsnetzes zugeordneten Vorzugsgebietes befindet. Dabei wird die Kommunikationsverbindung vorliegend von einem Teilnehmer A bzw. dessen Endgerät an eine dem mobilen Endgerät B für dessen Vorzugsgebiet und/oder Vorzugsgebiete zugeordnete Festnetzrufnummer "0211-12345" gerichtet. Bei der Nutzungssteuerung von Diensten für Kommunikationsverbindungen gemäß dem Ausführungsbeispiel nach Fig. 12 ist gegenüber der Nutzungssteuerung von Diensten für Kommunikationsverbindungen gemäß dem Ausführungsbeispiel nach Fig. 11 eine vorgezogene Teilnehmersuchruf-Funktionalität, ein sogenanntes Prepaging, eingebunden, um eine genauere Eingrenzung des Aufenthaltsortes des mobilen Endgerätes B im Mobilfunknetz 1220 zu ermöglichen.

Bei dem in Fig. 12 dargestellten Ausführungsbeispiel sind seitens des mobilen Endgerätes B die diesem seitens des Kommunikationsnetzes zugeordneten Vorzugsgebiete in einem Speicherbereich des mobilen Endgerätes B abgelegt. Vorliegend ist die Liste der Vorzugsgebiete auf der sogenannten SIM-Karte (SIM: Subscriber Identity Module) abgelegt, welches in das mobile Endgerät B eingesetzt diesem einen Zugang zu dem Mobilfunknetz 1220 zur Nutzung beziehungsweise zum Betrieb des mobilen Endgerätes B in dem Mobilfunknetz 1220 ermöglicht, vorliegend gemäß dem GSM-Funknetzstandard. Vorliegend sind dabei auf der SIM-Karte des mobilen Endgerätes B Vorzugsgebiete in einer Liste abgespeichert, die die sogenannte Cell-ID der Funkzelle des jeweiligen Vorzugsgebiets des mobilen Endgerätes B aufweist. Seitens der SIM-Karte ist ferner eine seitens des mobilen Endgerätes B ausführbare Anwendung realisiert, vorliegend mit Hilfe beziehungsweise unter Nutzung einer sogenannten SIM-Toolkit-Applikation, welche Positionsänderungen des mobilen Endgerätes B in bzw. ein Wechseln von Funkzellen Z1, Z2 des Mobilfunknetzes 1220 automatisch erkennt und mit den auf der SIM-Karte des mobilen Endgerätes B in der Liste der Vorzugsgebiete gespeicherten Cell-IDs vergleicht. Die entsprechend von der SIM-Toolkit-Applikation verglichenen Werte der seitens der SIM-Karte erfassten Cell-IDs von Vorzugsgebieten des mobilen Endgerätes B und der erfassten aktuellen Cell-ID der jeweils aktuellen Funkzelle des Mobilfunknetzes 1220, in welchem sich das mobile Endgerät B befindet, werden bei Positionsänderungen des mobilen Endgerätes B, das heißt bei Funkzellenwechseln des mobilen Endgerätes B, automatisch erkannt. Die Erkennung löst dabei seitens des mobilen Endgerätes B einen Status beziehungsweise Statuswechsel aus, welcher über eine von der SIM-Toolkit-Applikation benutzten verdeckten SMS-Nachricht, vorliegend einer sogenannten "0" ― SMS oder "1"-SMS, mittels einer OTA-Anwendung (OTA: Over The Air) 1226 in einer dieser zugeordneten beziehungsweise von dieser genutzten Status-Datenbank 1225 eines hier nicht explizit dargestellten OTA-Servers genutzt wird. In der Status-Datenbank 1225 ist dabei für das jeweilige mobile Endgerät B eine entsprechende Statusinformation gespeichert, welche Auskunft darüber gibt, ob sich das mobile Endgerät B in einem seiner Vorzugsgebiete aufhält oder nicht.

Dabei sind seitens des Kommunikationsnetzes und dessen Einrichtungen im Rahmen der Steuerung von Dienstnutzungen für Kommunikationsverbindungen die Abläufe bzw. Verfahrensschritte 1201 bis 1212 und denen vorgelagert die Abläufe 1213 bis 1216 realisiert:
- 1213:: Der Teilnehmer B bzw. dessen mobiles Endgerät B verändert seine Position bzw. seinen Aufenthaltsort im Mobilfunknetz 1220 und wechselt dabei von der Funkzelle Z1 des Mobilfunknetzes 1220 in die Funkzelle Z2 des Mobilfunknetzes 1220. Dabei wird die Cell-ID der Funkzelle Z2 automatisch seitens des mobilen Endgerätes B erfasst.
- 1214:: Die erfasste Cell-ID der Funkzelle Z2 wird von der auf der SIM-Karte des mobilen Endgerätes B ausgeführten Anwendung (SIM-Toolkit-Applikation) mit den in der auf der SIM-Karte abgespeicherten Liste von Cell-Ids von Vorzugsgebieten des mobilen Endgerätes B im Mobilfunknetz 1220 verglichen.
- 1215:: In Abhängigkeit des Ergebnisses des Vergleichs 1214 wird von dem mobilen Endgerät B eine verdeckte SMS mit einer entsprechenden Status-Information an den OTA-Server 1226 gesendet. Bei Übereinstimmung der in Verfahrensschritt 1213 erfassten Cell-ID mit einer der in der Liste von Cell-IDs von Vorzugsgebieten des mobilen Endgerätes B im Mobilfunknetz 1220 gespeicherten Cell-ID wird eine verdeckte Status-SMS mit einer "1" an den OTA-Server 1226 gesendet. Bei fehlender Übereinstimmung der in Verfahrensschritt 1213 erfassten Cell-ID mit einer der in der Liste von Cell-IDs von Vorzugsgebieten des mobilen Endgerätes B im Mobilfunknetz 1220 gespeicherten Cell-ID wird eine verdeckte Status-SMS mit einer "0" an den OTA-Server 1226 gesendet.
- 1216:: Der OTA-Server 1226 speichert den jeweils aktuellen Status in einer von diesem unterhaltenen bzw. diesem zugeordneten Status-Datenbank 1225. Die Speicherung erfolgt in einem sogenannten Überschreibmodus, so dass nur der aktuelle Status in der Datenbank für das jeweilige mobile Endgerät B enthalten bzw. gespeichert ist.
- 1201:: Die von dem Teilnehmer A bzw. dessen Endgerät A kommende Anforderung nach einem Aufbau einer Kommunikationsverbindung zu bzw. mit dem mobilen Endgerät B wird mittels der Festnetzrufnummer "0211-12345" über ein PSTN (Public Standard Telefone Network) 1240 zu einem die Festnetzrufnummer "0211-12345" verwaltenden Festnetzbetreiber bzw. ―provider 1230 durchgeroutet.
- 1202:: Seitens einer von dem Festnetzbetreiber 1230 unterhaltenen, eine Datenbank 1231 umfassenden Einrichtung erfolgt dann ein sogenanntes Mapping der Festnetzrufnummer mit der dieser im Mobilfunknetz 1220 zugeordneten Mobilfunknetzrufnummer (MSISDN) des mobilen Endgerätes B. In der Datenbank 1231 ist dazu eine Liste gespeichert, in der der einem Teilnehmer B für dessen Vorzugsgebiet und/oder Vorzugsgebieten im Mobilfunknetz 1220 zugeordneten Festnetzrufnummer die entsprechende Mobilfunknetzrufnummer (MSISDN) zugeordnet ist. Im Rahmen des Aufbaus der Kommunikationsverbindung wird dabei aus der Datenbank 1231 anhand der Festnetzrufnummer die Mobilfunknetzrufnummer (MSISDN) durch eine entsprechend geeignete Datenbankabfrage ermittelt.
- 1203:: Die so aus der Datenbank 1231 ermittelte Mobilfunknetzrufnummer (MSISDN), vorliegend "0172-12345", wird anschließend zum Aufbau der Kommunikationsverbindung seitens der Einrichtungen des Festnetzbetreibers 1230 mit einer Kennung, vorliegend einem exemplarisch durch "@" gekennzeichneten Präfix, versehen und an eine als Übergangseinheit (Gateway) dienende mobile Vermittlungsstelle (MSC (Mobile Switching Center)) 1221 des Mobilfunknetzes 1220, vorliegend einem G-MSC 1221 (Gateway MSC (Mobile Switching Center)) weitergeleitet. Die Kennung dient dabei zur Identifizierung des Festnetzbetreibers 1230 seitens des Mobilfunknetzes 1220. Die Kennung, also das der Mobilfunknetzrufnummer (MSISDN) "0172-12345" vorangestellte Präfix "@" muss dazu entsprechend seitens der Einrichtungen des Mobilfunknetzes 1220 interpretiert werden können.
- 1204:: Seitens des G-MSC 1221 wird die der Mobilfunknetzrufnummer (MSISDN) "0172-12345" als Präfix vorangestellte Kennung "@" dann abgeschnitten und die Mobilfunknetzrufnummer (MSISDN) "0172-12345" für eine anschließende Bestimmung des Aufenthaltsortes des mobilen Endgerätes B im Mobilfunknetz 1220 als auch der dem mobilen Endgerät B zur Verfügung stehenden Dienstnutzungen genutzt.
- 1205:: Dazu sendet das G-MSC 1221 eine Anfrage mit der Mobilfunknetzrufnummer (MSISDN) "0172-12345" an die Teilnehmerdatenbank HLR (HLR: Home Location Register) 1222 des Mobilfunknetzes 1220.
- 1206:: Die Teilnehmerdatenbank HLR 1222 des Mobilfunknetzes 1220 antwortet auf diese Anfrage (1205) mit einer in dieser zu der Mobilfunknetzrufnummer (MSISDN) "0172-12345" gespeicherten bzw. erfassten Kennung und sendet diese an das G-MSC 1221. Dem G-MSC 1221 wird mit der Kennung dabei signalisiert um was für einen Teilnehmer B es sich handelt und wo, das heißt in welcher Einrichtung 1224 des Mobilfunknetzes 1220, für diesen Teilnehmer B weitere Informationen für einen Aufbau der Kommunikationsverbindung verwaltet sind. Vorliegend handelt es sich bei der Einrichtung 1224 des Mobilfunknetzes um eine sogenannte IN-Anlage 1224 (IN: Intelligent Network Subsystem), welche unter anderem sogenannte zusätzliche Dienste bereitstellende SCP-Datenbanken (SCP: Service Control Points) aufweist.
- 1207:: Das G-MSC 1221 routet anschließend die mit der Kennung "@" versehene Mobilfunknetzrufnummer (MSISDN) "0172-12345" an die IN-Anlage 1224. Seitens der IN-Anlage 724 wird die der Mobilfunknetzrufnummer (MSISDN) "0172-12345" als Präfix vorangestellte Kennung "@" dann wieder abgeschnitten.
- 1208:: Die IN-Anlage 1224 richtet im Rahmen eines sogenannten Prepaging, einer Teilnehmersuchruf-Funktionalität, eine entsprechende Anfrage nach dem Aufenthaltsort des mobilen Endgerätes B an die Teilnehmerdatenbank HLR 1222 des Mobilfunknetzes.
- 1209:: Die Teilnehmerdatenbank HLR 1222 des Mobilfunknetzes 1220 antwortet auf diese Anfrage 1208 mit der in der Teilnehmerdatenbank HLR 1222 zu der Mobilfunknetzrufnummer (MSISDN) "0172-12345" gespeicherten bzw. erfassten aktuellen Kennung des Aufenthaltsortes des mobilen Endgerätes B, vorliegend der sogenannten Location Number (Cell-ID) des mobilen Endgerätes B, vorzugsweise unter Nutzung der sogenannten MSRN (MSRN: Mobile Station Roaming Number). Dabei wird die Location Number des mobilen Endgerätes B von der Teilnehmerdatenbank HLR 1222 dann an die IN-Anlage 1224 gesendet.
- 1210:: Die IN-Anlage 1224 fragt in der Status-Datenbank 1225 den dort gespeicherten aktuellen Status des Aufenthalts des mobilen Endgerätes B innerhalb oder außerhalb eines seiner Vorzugsgebiete ab, welcher in dem vorgelagerten Prozess gemäß Ablauf bzw. Verfahrensschritt 1215 in der Status-Datenbank gespeichert wurde. Die Status-Datenbank 1225, weist dazu eine Liste auf, in welcher zu der jeweiligen anhand der von der Teilnehmerdatenbank HLR 1222 im Rahmen des Verfahrensschrittes 1209 gelieferten Location Number (Cell-ID) des mobilen Endgerätes B eine entsprechende den Aufenthalt innerhalb oder außerhalb eines Vorzugsgebietes repräsentierende Status-Kennung gespeichert ist.
- 1211:: In Abhängigkeit von dem Ergebnis der Abfrage 1210 der Status-Datenbank 1225 sind folgende Dienstnutzungen für die Kommunikationsverbindung gegeben:
1211 I: Die von dem Teilnehmer A aus dem PSTN 1240 angeforderte Kommunikationsverbindung wird zu dem mobilen Endgerät B durchgeroutet, wenn sich dieses in dem Vorzugsgebiet befindet, welchem für das mobile Endgerät B die Festnetzrufnummer "0211-12345" zugeordnet ist.
1211 II: Die von dem Teilnehmer A aus dem PSTN 1240 angeforderte Kommunikationsverbindung wird zu in der Status-Datenbank 1225 von dem Teilnehmer B des mobilen Endgerätes B individuell ausgewählten bzw. vorgegebenen Alternativen weitergehender Dienstnutzungen durchgeroutet, wenn sich dieses außerhalb des Vorzugsgebiets befindet. Die vorliegend genutzten, bereits im Zusammenhang mit Fig. 4 beschriebenen alternativen Dienstnutzungen umfassen dabei:
1211 II a: Ein Durchrouten der von dem Teilnehmer A geforderten Kommunikationsverbindung zu einer seitens des Mobilfunknetzes 1220 für das mobile Endgerät B seitens des Mobilfunknetzes 1220 eingerichteten und verwalteten Mailbox.
1211 II b: Ein vorzugsweise für den Teilnehmer B kostenpflichtiges Durchrouten der von dem Teilnehmer A geforderten Kommunikationsverbindung zu dem sich außerhalb des Vorzugsgebiets im Restgebiet aufhaltenden mobilen Endgerätes B unter Nutzung der entsprechenden Mobilfunkrufnummer (MSISDN) des mobilen Endgerätes B.
1211 II c: Ein Durchrouten der von dem Teilnehmer A geforderten Kommunikationsverbindung zu einer seitens des Mobilfunknetzes 1220 für das mobile Endgerät B bereitgehaltene Ansage einer dafür vorgesehenen und eingerichteten Einrichtung seitens des Mobilfunknetzes 1220.
- 1212:: Wenn sich das mobile Endgerät des Teilnehmer B außerhalb seines Vorzugsgebiets im Restgebiet des Mobilfunknetzes 1220 befindet und von dem Teilnehmer B eine Weiter- bzw. Umleitung von an im Vorzugsgebiet gerichteten Kommunikationsverbindungen an das sich außerhalb des Vorzugsgebiets im Restgebiet aufhaltende mobile Endgerät gemäß der Dienstnutzungsalternative nach 1211 II b aktiviert ist, wird in der für die Vermittlung der Kommunikationsverbindung zu dem mobilen Endgerät B zuständigen mobilen Vermittlungseinrichtung, vorliegend exemplarisch das MSC 1223 des Mobilfunknetzes 1220, eine Kennung für eine entsprechende Abrechnung der Weiter- bzw. Umleitung erzeugt. Vorliegend wird dabei in der entsprechenden seitens des MSC 1223 geführten und verwalteten Datei für Kommunikationsverbindungen, dem sogenannten CDR (CDR: Call Detail Record), ein Flag zur entsprechenden Kennzeichnung für die Vergebührung (Billing) gesetzt.

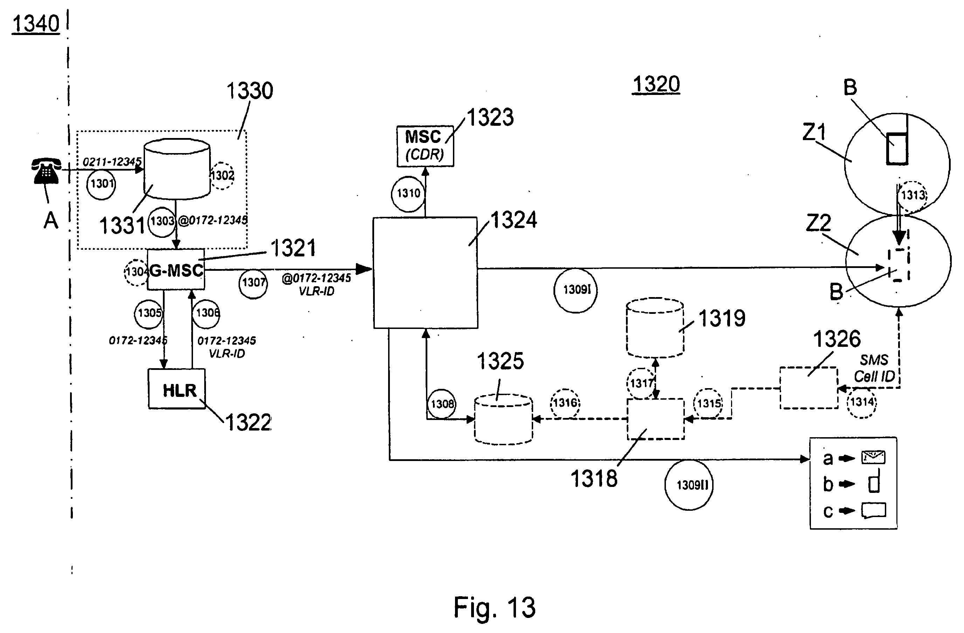

Fig. 13 zeigt ein weiteres Ausführungsbeispiel einer Nutzungssteuerung von Diensten für an ein mobiles Endgerät B gerichtete Kommunikationsverbindungen, wenn sich das mobile Endgerät B innerhalb oder außerhalb eines für dieses seitens des Kommunikationsnetzes zugeordneten Vorzugsgebietes befindet. Dabei wird die Kommunikationsverbindung vorliegend von einem Teilnehmer A bzw. dessen Endgerät an eine dem mobilen Endgerät B für dessen Vorzugsgebiet und/oder Vorzugsgebiete zugeordnete Festnetzrufnummer "0211-12345" gerichtet.

Bei dem in Fig. 13 dargestellten Ausführungsbeispiel sind in einer Vorzugsgebiete-Datenbank 1319 die Funkzellenkennzeichner (Cell-IDs) der dem mobilen Endgerät B im Mobilfunknetz 1320 zugeordneten Vorzugsgebiete in einer Liste abgespeichert, in der die sogenannte Cell-ID der Funkzelle des jeweiligen Vorzugsgebiets eines mobilen Endgerätes dem jeweiligen mobilen Endgerät zugeordnet ist.

Seitens der SIM-Karte des mobilen Endgerätes B ist eine seitens des mobilen Endgerätes B ausführbare Anwendung realisiert, vorliegend mit Hilfe beziehungsweise unter Nutzung einer sogenannten SIM-Toolkit-Applikation, welche Positionsänderungen des mobilen Endgerätes B in bzw. ein Wechseln von Funkzellen Z1, Z2 des Mobilfunknetzes 1320 automatisch erkennt und die dabei jeweils erfasste Funkzellenkennung (Cell-ID) mittels einer von der SIM-Toolkit-Applikation benutzten SMS-Nachricht, vorzugsweise einer sogenannten verdecken SMS, über eine OTA-Anwendung (OTA: Over The Air) einem OTA-Server 1326 übermittelt. Der OTA-Server 1326 hat dabei über eine Vergleichseinrichtung und/oder -anwendung 1318 Zugriff auf die Vorzugsgebiete-Datenbank 1319, die die Funkzellenkennzeichner (Cell-IDs) und die mittels der SMS-Nachricht von dem mobilen Endgerät B erhaltene Cell-ID mit der bzw. den entsprechend seitens der Vorzugsgebiete-Datenbank 1319 gespeicherten Funkzellenkennzeichner (Cell-IDs) vergleicht. Der Vergleich liefert bzw. erzeugt dabei eine Statusinformation, die in einer Status-Datenbank 1325 für das jeweilige mobile Endgerät B gespeichert wird. Die in der Status-Datenbank 1325 gespeicherte Statusinformation gibt dabei darüber Auskunft, ob sich das mobile Endgerät B in einem seiner Vorzugsgebiete aufhält oder nicht. Auf die Status-Datenbank greift die IN-Anlage 1324 dann zur entsprechenden Überprüfung des Aufenthalts des mobilen Endgerätes B innerhalb oder außerhalb eines seiner Vorzugsgebiete zu.

Dabei sind seitens des Kommunikationsnetzes und dessen Einrichtungen im Rahmen der Steuerung von Dienstnutzungen für Kommunikationsverbindungen die Abläufe bzw. Verfahrensschritte 1301 bis 1310 und denen vorgelagert die Abläufe 1313 bis 1317 realisiert:
- 1313:: Der Teilnehmer B bzw. dessen mobiles Endgerät B verändert seine Position bzw. seinen Aufenthaltsort im Mobilfunknetz 1320 und wechselt dabei von der Funkzelle Z1 des Mobilfunknetzes 1320 in die Funkzelle Z2 des Mobilfunknetzes 1320. Dabei wird die Cell-ID der Funkzelle Z2 automatisch seitens des mobilen Endgerätes B erfasst.
- 1314:: Die erfasste Cell-ID der Funkzelle Z2 wird von der auf der SIM-Karte des mobilen Endgerätes B ausgeführten Anwendung (SIM-Toolkit-Applikation) mit einer SMS, vorzugsweise einer verdeckten SMS, oder dergleichen Kommunikationsdienst des Mobilfunknetzes 1320 an den OTA-Server 1326 gesendet.
- 1315:: Der OTA-Server 1326 übergibt die Cell-ID zur Überprüfung an eine Vergleichseinrichtung 1318. Die Vergleichseinrichtung 1318 kann dabei mit dem OTA-Server 1326 verbindbar oder Bestandteil des OTA-Servers 1326 sein.
- 1317:: Die Vergleichseinrichtung 1318 vergleicht die von dem OTA-Server 1326 erhaltene (1315) Cell-ID mit in einer dieser zugeordneten, angeschlossenen und/oder integrierten Vorzugsgebiete-Datenbank 1319, welche eine Liste aufweist, in welcher dem mobilen Endgerät B zugeordnete Vorzugsgebiete mit der jeweiligen Cell-ID der Vorzugsgebiete des mobilen Endgerätes B gespeichert ist. In Abhängigkeit des Ergebnisses des Vergleichs wird seitens der Vergleichseinrichtung 1318 eine entsprechende Status-Information erzeugt, welche eine Übereinstimmung oder eine fehlende Übereinstimmung der in Verfahrensschritt 1313 erfassten Cell-ID mit einer der in der Liste von Cell-IDs von Vorzugsgebieten des mobilen Endgerätes B im Mobilfunknetz 1320 signalisiert.
- 1316:: Die Statusinformation wird dann von der Vergleichseinrichtung 1318 in einer dieser zugeordneten, angeschlossenen und/oder integrierten Status-Datenbank 1325 gespeichert. Die Speicherung erfolgt in einem sogenannten Überschreibmodus, so dass nur der aktuelle Status in der Datenbank für das jeweilige mobile Endgerät B enthalten bzw. gespeichert ist. Auf die Status-Datenbank greift die IN-Anlage 1324 gemäß Ablauf- bzw. Verfahrenschritt 1308 dann entsprechend zu.
- 1301:: Die von dem Teilnehmer A bzw. dessen Endgerät A kommende Anforderung nach einem Aufbau einer Kommunikationsverbindung zu bzw. mit dem mobilen Endgerät B wird mittels der Festnetzrufnummer "0211-12345" über ein PSTN (Public Standard Telefone Network) 1340 zu einem die Festnetzrufnummer "0211-12345" verwaltenden Festnetzbetreiber bzw. ―provider 1330 durchgeroutet.
- 1302:: Seitens einer von dem Festnetzbetreiber 1330 unterhaltenen, eine Datenbank 1331 umfassenden Einrichtung erfolgt dann ein sogenanntes Mapping der Festnetzrufnummer mit der dieser im Mobilfunknetz 1320 zugeordneten Mobilfunknetzrufnummer (MSISDN) des mobilen Endgerätes B: In der Datenbank 1331 ist dazu eine Liste gespeichert, in der der einem Teilnehmer B für dessen Vorzugsgebiet und/oder Vorzugsgebieten im Mobilfunknetz 1320 zugeordneten Festnetzrufnummer die entsprechende Mobilfunknetzrufnummer (MSISDN) zugeordnet ist. Im Rahmen des Aufbaus der Kommunikationsverbindung wird dabei aus der Datenbank 1331 anhand der Festnetzrufnummer die Mobilfunknetzrufnummer (MSISDN) durch eine entsprechend geeignete Datenbankabfrage ermittelt.
- 1303:: Die so aus der Datenbank 1331 ermittelte Mobilfunknetzrufnummer (MSISDN), vorliegend "0172-12345", wird anschließend zum Aufbau der Kommunikationsverbindung seitens der Einrichtungen des Festnetzbetreibers 1330 mit einer Kennung, vorliegend einem exemplarisch durch "@" gekennzeichneten Präfix, versehen und an eine als Übergangseinheit (Gateway) dienende mobile Vermittlungsstelle (MSC (Mobile Switching Center)) 1321 des Mobilfunknetzes 1320, vorliegend einem G-MSC 1321 (Gateway MSC (Mobile Switching Center)) weitergeleitet. Die Kennung dient dabei zur Identifizierung des Festnetzbetreibers 1330 seitens des Mobilfunknetzes 1320. Die Kennung, also das der Mobilfunknetzrufnummer (MSISDN) "0172-12345" vorangestellte Präfix "@" muss dazu entsprechend seitens der Einrichtungen des Mobilfunknetzes 1320 interpretiert werden können.
- 1304:: Seitens des G-MSC 1321 wird die der Mobilfunknetzrufnummer (MSISDN) "0172-12345" als Präfix vorangestellte Kennung "@" dann abgeschnitten und die Mobilfunknetzrufnummer (MSISDN) "0172-12345" für eine anschließende Bestimmung des Aufenthaltsortes des mobilen Endgerätes B im Mobilfunknetz 1320 als auch der zur Verfügung stehenden Dienstnutzungen genutzt.
- 1305:: Dazu sendet das G-MSC 1321 eine Anfrage mit der Mobilfunknetzrufnummer (MSISDN) "0172-12345" an die Teilnehmerdatenbank HLR (HLR: Home Location Register) 1322 des Mobilfunknetzes 1320.
- 1306:: Die Teilnehmerdatenbank HLR 1322 des Mobilfunknetzes 1320 antwortet auf diese Anfrage (1305) mit der in dieser zu der Mobilfunknetzrufnummer (MSISDN) "0172-12345" gespeicherten bzw. erfassten Kennung der Teilnehmerdatenbank VLR (VLR: Visitor Location Register), der sogenannten VLR-ID, und sendet diese an das G-MSC 1321. Dem G-MSC 1321 wird mit der VLR-ID dabei signalisiert um was für einen Teilnehmer B es sich handelt und wo, das heißt in welcher Einrichtung 1324 des Mobilfunknetzes 1320, für diesen Teilnehmer B weitere Informationen für einen Aufbau der Kommunikationsverbindung verwaltet sind. Vorliegend handelt es sich bei der Einrichtung 1324 des Mobilfunknetzes um eine sogenannte IN-Anlage 1324 (IN: Intelligent Network Subsystem), welche unter anderem sogenannte zusätzliche Dienste bereitstellende ― hier nicht dargestellte - SCP-Datenbanken (SCP: Service Control Points) aufweist.
- 1307:: Das G-MSC 1321 routet anschließend die mit der Kennung "@" versehene Mobilfunknetzrufnummer (MSISDN) "0172-12345" und die VLR-ID an die IN-Anlage 1324.
- 1308:: Die IN-Anlage 1324 fragt in der Status-Datenbank 1325 den dort gespeicherten aktuellen Status des Aufenthalts des mobilen Endgerätes B innerhalb oder außerhalb eines seiner Vorzugsgebiete ab, welcher in dem vorgelagerten Prozess gemäß Ablauf bzw. Verfahrensschritt 1316 in der Status-Datenbank 1325 gespeichert wurde. Die Status-Datenbank 1325, weist dazu eine Liste auf, in welcher zu der jeweiligen VLR-ID des Teilnehmers eine entsprechende den Aufenthalt innerhalb oder außerhalb eines Vorzugsgebietes repräsentierende Status-Kennung gespeichert ist.
- 1309:: In Abhängigkeit von dem Ergebnis der Abfrage 1308 der Status-Datenbank 1325 sind folgende Dienstnutzungen für die Kommunikationsverbindung gegeben:
1309 I: Die von dem Teilnehmer A aus dem PSTN 1340 angeforderte Kommunikationsverbindung wird zu dem mobilen Endgerät B durchgeroutet, wenn sich dieses in dem Vorzugsgebiet befindet, welchem für das mobile Endgerät B die Festnetzrufnummer "0211-12345" zugeordnet ist.
1309 II: Die von dem Teilnehmer A aus dem PSTN 1340 angeforderte Kommunikationsverbindung wird zu in einer SCP-Datenbank der IN-Anlage 1324 von dem Teilnehmer B des mobilen Endgerätes B individuell ausgewählten bzw. vorgegebenen Alternativen weitergehender Dienstnutzungen durchgeroutet, wenn sich dieses außerhalb des Vorzugsgebiets befindet. Die vorliegend genutzten, bereits im Zusammenhang mit Fig. 4 beschriebenen alternativen Dienstnutzungen umfassen dabei:
1309 II a: Ein Durchrouten der von dem Teilnehmer A geforderten Kommunikationsverbindung zu einer seitens des Mobilfunknetzes 1320 für das mobile Endgerät B seitens des Mobilfunknetzes 1320 eingerichteten und verwalteten Mailbox.
1309 II b: Ein vorzugsweise für den Teilnehmer B kostenpflichtiges Durchrouten der von dem Teilnehmer A geforderten Kommunikationsverbindung zu dem sich außerhalb des Vorzugsgebiets im Restgebiet aufhaltenden mobilen Endgerätes B unter Nutzung der entsprechenden Mobilfunkrufnummer (MSISDN) des mobilen Endgerätes B.
1309 II c: Ein Durchrouten der von dem Teilnehmer A geforderten Kommunikationsverbindung zu einer seitens des Mobilfunknetzes 1320 für das mobile Endgerät B bereitgehaltene Ansage einer dafür vorgesehenen und eingerichteten Einrichtung seitens des Mobilfunknetzes 1320.
- 1310:: Wenn sich das mobile Endgerät des Teilnehmer B außerhalb seines Vorzugsgebiets im Restgebiet des Mobilfunknetzes 1320 befindet und von dem Teilnehmer B eine Weiter- bzw. Umleitung von an im Vorzugsgebiet gerichteten Kommunikationsverbindungen an das sich außerhalb des Vorzugsgebiets im Restgebiet aufhaltende mobile Endgerät gemäß der Dienstnutzungsalternative nach 1309 II b aktiviert ist, wird in der für die Vermittlung der Kommunikationsverbindung zu dem mobilen Endgerät B zuständigen mobilen Vermittlungseinrichtung, vorliegend exemplarisch das MSC 1323 des Mobilfunknetzes 1320, eine Kennung für eine entsprechende Abrechnung der Weiter- bzw. Umleitung erzeugt. Vorliegend wird dabei in der entsprechenden seitens des MSC 1323 geführten und verwalteten Datei für Kommunikationsverbindungen, dem sogenannten CDR (CDR: Call Detail Record), ein Flag zur entsprechenden Kennzeichnung für die Vergebührung (Billing) gesetzt.

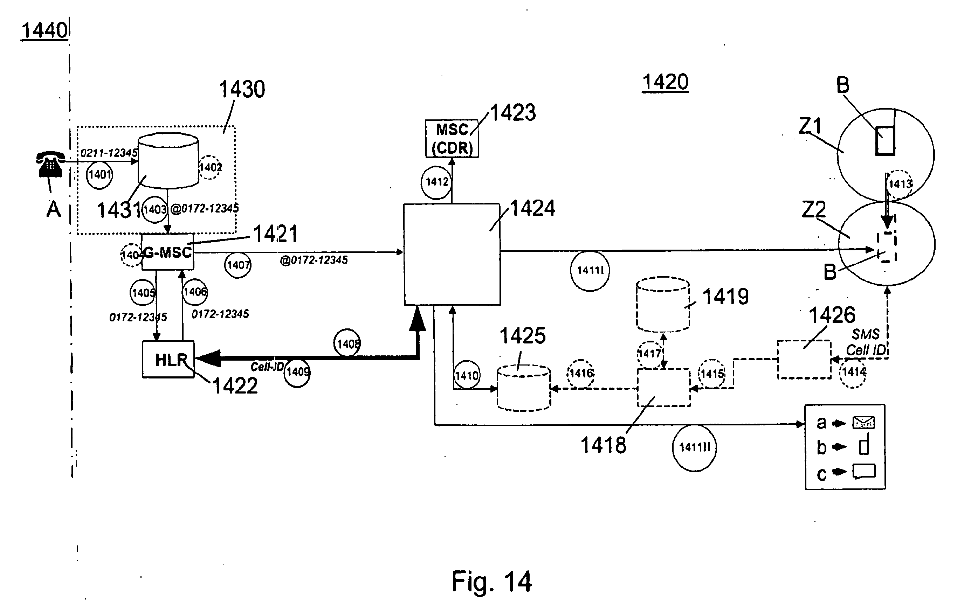

Fig. 14 zeigt ein weiteres Ausführungsbeispiel einer Nutzungssteuerung von Diensten für an ein mobiles Endgerät B gerichtete Kommunikationsverbindungen, wenn sich das mobile Endgerät B innerhalb oder außerhalb eines für dieses seitens des Kommunikationsnetzes zugeordneten Vorzugsgebietes befindet. Dabei wird die Kommunikationsverbindung vorliegend von einem Teilnehmer A bzw. dessen Endgerät an eine dem mobilen Endgerät B für dessen Vorzugsgebiet und/oder Vorzugsgebiete zugeordnete Festnetzrufnummer "0211-12345" gerichtet. Bei der Nutzungssteuerung von Diensten für Kommunikationsverbindungen gemäß dem Ausführungsbeispiel nach Fig. 14 ist gegenüber der Nutzungssteuerung von Diensten für Kommunikationsverbindungen gemäß dem Ausführungsbeispiel nach Fig. 13 eine vorgezogene Teilnehmersuchruf-Funktionalität, ein sogenanntes Prepaging, eingebunden, um eine genauere Eingrenzung des Aufenthaltsortes des mobilen Endgerätes B im Mobilfunknetz 1420 zu ermöglichen.

Bei dem in Fig. 14 dargestellten Ausführungsbeispiel sind in einer Vorzugsgebiete-Datenbank 1419 die Funkzellenkennzeichner (Cell-IDs) der dem mobilen Endgerät B im Mobilfunknetz 1420 zugeordneten Vorzugsgebiete in einer Liste abgespeichert, in der die sogenannte Cell-ID der Funkzelle des jeweiligen Vorzugsgebiets eines mobilen Endgerätes dem jeweiligen mobilen Endgerät zugeordnet ist.

Seitens der SIM-Karte des mobilen Endgerätes B ist eine seitens des mobilen Endgerätes B ausführbare Anwendung realisiert, vorliegend mit Hilfe beziehungsweise unter Nutzung einer sogenannten SIM-Toolkit-Applikation, welche Positionsänderungen des mobilen Endgerätes B in bzw. ein Wechseln von Funkzellen Z1, Z2 des Mobilfunknetzes 1420 automatisch erkennt und die dabei jeweils erfasste Funkzellenkennung (Cell-ID) mittels einer von der SIM-Toolkit-Applikation benutzten SMS-Nachricht, vorzugsweise einer sogenannten verdecken SMS, über eine OTA-Anwendung (OTA: Over The Air) einem OTA-Server 1426 übermittelt. Der OTA-Server 1426 hat dabei über eine Vergleichseinrichtung und/oder -anwendung 1418 Zugriff auf die Vorzugsgebiete-Datenbank 1419, die die Funkzellenkennzeichner (Cell-IDs) und die mittels der SMS-Nachricht von dem mobilen Endgerät B erhaltene Cell-ID mit der bzw. den entsprechend seitens der Vorzugsgebiete-Datenbank 1419 gespeicherten Funkzellenkennzeichner (Cell-IDs) vergleicht. Der Vergleich liefert bzw. erzeugt dabei eine Statusinformation, die in einer Status-Datenbank 1425 für das jeweilige mobile Endgerät B gespeichert wird. Die in der Status-Datenbank 1425 gespeicherte Statusinformation gibt dabei darüber Auskunft, ob sich das mobile Endgerät B in einem seiner Vorzugsgebiete aufhält oder nicht. Auf die Status-Datenbank greift die IN-Anlage 1424 dann zur entsprechenden Überprüfung des Aufenthalts des mobilen Endgerätes B innerhalb oder außerhalb eines seiner Vorzugsgebiete zu.

Dabei sind seitens des Kommunikationsnetzes und dessen Einrichtungen im Rahmen der Steuerung von Dienstnutzungen für Kommunikationsverbindungen die Abläufe bzw. Verfahrensschritte 1401 bis 1412 und denen vorgelagert die Abläufe 1413 bis 1417 realisiert:
- 1413:: Der Teilnehmer B bzw. dessen mobiles Endgerät B verändert seine Position bzw. seinen Aufenthaltsort im Mobilfunknetz 1420 und wechselt dabei von der Funkzelle Z1 des Mobilfunknetzes 1420 in die Funkzelle Z2 des Mobilfunknetzes 1420. Dabei wird die Cell-ID der Funkzelle Z2 automatisch seitens des mobilen Endgerätes B erfasst.
- 1414:: Die erfasste Cell-ID der Funkzelle Z2 wird von der auf der SIM-Karte des mobilen Endgerätes B ausgeführten Anwendung (SIM-Toolkit-Applikation) mit einer SMS, vorzugsweise einer verdeckten SMS, oder dergleichen Kommunikationsdienst des Mobilfunknetzes 1420 an den OTA-Server 1426 gesendet.
- 1415:: Der OTA-Server 1426 übergibt die Cell-ID zur Überprüfung an eine Vergleichseinrichtung 1418. Die Vergleichseinrichtung 1418 kann dabei mit dem OTA-Server 1426 verbindbar oder Bestandteil des OTA-Servers 1426 sein.
- 1417:: Die Vergleichseinrichtung 1418 vergleicht die von dem OTA-Server 1426 erhaltene (1415) Cell-ID mit in einer dieser zugeordneten, angeschlossenen und/oder integrierten Vorzugsgebiete-Datenbank 1419, welche eine Liste aufweist, in welcher dem mobilen Endgerät B zugeordnete Vorzugsgebiete mit der jeweiligen Cell-ID der Vorzugsgebiete des mobilen Endgerätes B gespeichert ist. In Abhängigkeit des Ergebnisses des Vergleichs wird seitens der Vergleichseinrichtung 1418 eine entsprechende Status-Information erzeugt, welche eine Übereinstimmung oder eine fehlende Übereinstimmung der in Verfahrensschritt 1413 erfassten Cell-ID mit einer der in der Liste von Cell-IDs von Vorzugsgebieten des mobilen Endgerätes B im Mobilfunknetz 1420 signalisiert.
- 1416:: Die Statusinformation wird dann von der Vergleichseinrichtung 1418 in einer dieser zugeordneten, angeschlossenen und/oder integrierten Status-Datenbank 1425 gespeichert. Die Speicherung erfolgt in einem sogenannten Überschreibmodus, so dass nur der aktuelle Status in der Datenbank für das jeweilige mobile Endgerät B enthalten bzw. gespeichert ist. Auf die Status-Datenbank greift die IN-Anlage 1424 gemäß Ablauf- bzw. Verfahrenschritt 1410 dann entsprechend zu.
- 1401:: Die von dem Teilnehmer A bzw. dessen Endgerät A kommende Anforderung nach einem Aufbau einer Kommunikationsverbindung zu bzw. mit dem mobilen Endgerät B wird mittels der Festnetzrufnummer "0211-12345" über ein PSTN (Public Standard Telefone Network) 1440 zu einem die Festnetzrufnummer "0211-12345" verwaltenden Festnetzbetreiber bzw. ―provider 1430 durchgeroutet.
- 1402:: Seitens einer von dem Festnetzbetreiber 1430 unterhaltenen, eine Datenbank 1431 umfassenden Einrichtung erfolgt dann ein sogenanntes Mapping der Festnetzrufnummer mit der dieser im Mobilfunknetz 1420 zugeordneten Mobilfunknetzrufnummer (MSISDN) des mobilen Endgerätes B. In der Datenbank 1431 ist dazu eine Liste gespeichert, in der der einem Teilnehmer B für dessen Vorzugsgebiet und/oder Vorzugsgebieten im Mobilfunknetz 1420 zugeordneten Festnetzrufnummer die entsprechende Mobilfunknetzrufnummer (MSISDN) zugeordnet ist. Im Rahmen des Aufbaus der Kommunikationsverbindung wird dabei aus der Datenbank 1431 anhand der Festnetzrufnummer die Mobilfunknetzrufnummer (MSISDN) durch eine entsprechend geeignete Datenbankabfrage ermittelt.
- 1403:: Die so aus der Datenbank 1431 ermittelte Mobilfunknetzrufnummer (MSISDN), vorliegend "0172-12345", wird anschließend zum Aufbau der Kommunikationsverbindung seitens der Einrichtungen des Festnetzbetreibers 1430 mit einer Kennung, vorliegend einem exemplarisch durch "@" gekennzeichneten Präfix, versehen und an eine als Übergangseinheit (Gateway) dienende mobile Vermittlungsstelle (MSC (Mobile Switching Center)) 1421 des Mobilfunknetzes 1420, vorliegend einem G-MSC 1421 (Gateway MSC (Mobile Switching Center) weitergeleitet. Die Kennung dient dabei zur Identifizierung des Festnetzbetreibers 1430 seitens des Mobilfunknetzes 1420. Die Kennung, also das der Mobilfunknetzrufnummer (MSISDN) "0172-14345" vorangestellte Präfix "@" muss dazu entsprechend seitens der Einrichtungen des Mobilfunknetzes 1420 interpretiert werden können.
- 1404:: Seitens des G-MSC 1421 wird die der Mobilfunknetzrufnummer (MSISDN) "0172-12345" als Präfix vorangestellte Kennung "@" dann abgeschnitten und die Mobilfunknetzrufnummer (MSISDN) "0172-12345" für eine anschließende Bestimmung des Aufenthaltsortes des mobilen Endgerätes B im Mobilfunknetz 1420 als auch der zur Verfügung stehenden Dienstnutzungen genutzt.
- 1405:: Dazu sendet das G-MSC 1421 eine Anfrage mit der Mobilfunknetzrufnummer (MSISDN) "0172-12345" an die Teilnehmerdatenbank HLR (HLR: Home Location Register) 1422 des Mobilfunknetzes 1420.
- 1406:: Die Teilnehmerdatenbank HLR 1422 des Mobilfunknetzes 1420 antwortet auf diese Anfrage (1405) mit einer in dieser zu der Mobilfunknetzrufnummer (MSISDN) "0172-12345" gespeicherten bzw. erfassten Kennung und sendet diese an das G-MSC 1421. Dem G-MSC 1421 wird mit der Kennung dabei signalisiert um was für einen Teilnehmer B es sich handelt und wo, das heißt in welcher Einrichtung 1424 des Mobilfunknetzes 1420, für diesen Teilnehmer B weitere Informationen für einen Aufbau der Kommunikationsverbindung verwaltet sind. Vorliegend handelt es sich bei der Einrichtung 1424 des Mobilfunknetzes um eine sogenannte IN-Anlage 1424 (IN: Intelligent Network Subsystem), welche unter anderem sogenannte zusätzliche Dienste bereitstellende SCP-Datenbanken (SCP: Service Control Points) aufweist.
- 1407:: Das G-MSC 1421 routet anschließend die mit der Kennung "@" versehene Mobilfunknetzrufnummer (MSISDN) "0172-12345" an die IN-Anlage 1424. Seitens der IN-Anlage 724 wird die der Mobilfunknetzrufnummer (MSISDN) "0172-12345" als Präfix vorangestellte Kennung "@" dann wieder abgeschnitten.
- 1408:: Die IN-Anlage 1424 richtet im Rahmen eines sogenannten Prepaging, einer Teilnehmersuchruf-Funktionalität, eine entsprechende Anfrage nach dem Aufenthaltsort des mobilen Endgerätes B an die Teilnehmerdatenbank HLR 1422 des Mobilfunknetzes 1420.
- 1409:: Die Teilnehmerdatenbank HLR 1422 des Mobilfunknetzes 1420 antwortet auf diese Anfrage 1408 mit der in der Teilnehmerdatenbank HLR 1422 zu der Mobilfunknetzrufnummer (MSISDN) "0172-12345" gespeicherten bzw. erfassten aktuellen Kennung des Aufenthaltsortes des mobilen Endgerätes B, vorliegend der sogenannten Location Number (Cell-ID) des mobilen Endgerätes B, vorzugsweise unter Nutzung der sogenannten MSRN (MSRN: Mobile Station Roaming Number). Dabei wird die Location Number des mobilen Endgerätes B von der Teilnehmerdatenbank HLR 1422 dann an die IN-Anlage 1424 gesendet.
- 1410:: Die IN-Anlage 1424 fragt in der Status-Datenbank 1425 den dort gespeicherten aktuellen Status des Aufenthalts des mobilen Endgerätes B innerhalb oder außerhalb eines seiner Vorzugsgebiete ab, welcher in dem vorgelagerten Prozess gemäß Ablauf bzw. Verfahrensschritt 1416 in der Status-Datenbank 1425 gespeichert wurde. Die Status-Datenbank 1425, weist dazu eine Liste auf, in welcher zu der jeweiligen anhand der von der Teilnehmerdatenbank HLR 1422 im Rahmen des Verfahrensschrittes 1409 gelieferten Location Number (Cell-ID) des mobilen Endgerätes B eine entsprechende den Aufenthalt innerhalb oder außerhalb eines Vorzugsgebietes repräsentierende Status-Kennung gespeichert ist.
1411: In Abhängigkeit von dem Ergebnis der Abfrage 1410 der Status-Datenbank 1425 sind folgende Dienstnutzungen für die Kommunikationsverbindung gegeben:
1411 I: Die von dem Teilnehmer A aus dem PSTN 1440 angeforderte Kommunikationsverbindung wird zu dem mobilen Endgerät B durchgeroutet, wenn sich dieses in dem Vorzugsgebiet befindet, welchem für das mobile Endgerät B die Festnetzrufnummer "0211-12345" zugeordnet ist.
1411 II: Die von dem Teilnehmer A aus dem PSTN 1440 angeforderte Kommunikationsverbindung wird zu in der Status-Datenbank 1425 von dem Teilnehmer B des mobilen Endgerätes B individuell ausgewählten bzw. vorgegebenen Alternativen weitergehender Dienstnutzungen durchgeroutet, wenn sich dieses außerhalb des Vorzugsgebiets befindet. Die vorliegend genutzten, bereits im Zusammenhang mit Fig. 4 beschriebenen alternativen Dienstnutzungen umfassen dabei:
1411 II a: Ein Durchrouten der von dem Teilnehmer A geforderten Kommunikationsverbindung zu einer seitens des Mobilfunknetzes 1420 für das mobile Endgerät B seitens des Mobilfunknetzes 1420 eingerichteten und verwalteten Mailbox.
1411 II b: Ein vorzugsweise für den Teilnehmer B kostenpflichtiges Durchrouten der von dem Teilnehmer A geforderten Kommunikationsverbindung zu dem sich außerhalb des Vorzugsgebiets im Restgebiet aufhaltenden mobilen Endgerätes B unter Nutzung der entsprechenden Mobilfunkrufnummer (MSISDN) des mobilen Endgerätes B.
1411 II c: Ein Durchrouten der von dem Teilnehmer A geforderten Kommunikationsverbindung zu einer seitens des Mobilfunknetzes 1420 für das mobile Endgerät B seitens des Mobilfunknetzes 1420 bereitgehaltene Ansage einer dafür vorgesehenen und eingerichteten Einrichtung seitens des Mobilfunknetzes 1420.
- 1412:: Wenn sich das mobile Endgerät des Teilnehmer B außerhalb seines Vorzugsgebiets im Restgebiet des Mobilfunknetzes 1420 befindet und von dem Teilnehmer B eine Weiter- bzw. Umleitung von an im Vorzugsgebiet gerichteten Kommunikationsverbindungen an das sich außerhalb des Vorzugsgebiets im Restgebiet aufhaltende mobile Endgerät gemäß der Dienstnutzungsalternative nach 1411 II b aktiviert ist, wird in der für die Vermittlung der Kommunikationsverbindung zu dem mobilen Endgerät B zuständigen mobilen Vermittlungseinrichtung, vorliegend exemplarisch das MSC 1423 des Mobilfunknetzes 1420, eine Kennung für eine entsprechende Abrechnung der Weiter- bzw. Umleitung erzeugt. Vorliegend wird dabei in der entsprechenden seitens des MSC 1423 geführten und verwalteten Datei für Kommunikationsverbindungen, dem sogenannten CDR (CDR: Call Detail Record), ein Flag zur entsprechenden Kennzeichnung für die Vergebührung (Billing) gesetzt.

Weitere vorteilhafte Ausgestaltungen der vorliegenden Erfindung sind durch entsprechende Ergänzung der in den Fig. 11 und/oder Fig. 13 dargestellten Ausführungsbeispiele der Nutzungssteuerung von Diensten für Kommunikationsverbindungen von in Gruppen zusammengefassten und verwalteten Teilnehmern bzw. deren mobilen Endgeräten B gegeben. Vorteilhafterweise sind bei derartigen Ausführungsbeispielen gegenüber der Nutzungssteuerung von Diensten für Kommunikationsverbindungen gemäß den Ausführungsbeispielen nach Fig. 11 und/oder Fig. 13 Teilnehmer bzw. deren mobile Endgeräte, denen im Mobilfunknetz für Dienstnutzungen von Kommunikationsverbindungen wenigstens ein gleiches Vorzugsgebiet zugeordnet ist, als Gruppe in einem sogenannten VPN (VPN: Virtual Private Network) zusammengefasst und verwaltet, entsprechend dem in Fig. 9 dargestellten Ausführungsbeispiel. Eine Gruppennutzung von Diensten für Kommunikationsverbindungen in Abhängigkeit des Aufenthaltsortes einzelner und/oder mehrerer Gruppenmitglieder ermöglicht dabei insbesondere umfangreichere und individuellere Dienstnutzungen für Kommunikationsverbindungen von Gruppenmitgliedern, wie Familienmitgliedern, Firmenangehörigen und dergleichen Gruppen, untereinander und/oder an gemeinsamen und/oder unterschiedlichen Aufenthaltsorten.

Seitens derartiger Ausführungsbeispiele sind vorteilhafterweise wie bei dem in Fig. 9 dargestellten und oben erläuterten Ausführungsbeispiel jeweils eine Datenbank vorgesehen, in der eine Liste gespeichert ist, in bzw. mittels welcher einer einen Teilnehmer B identifizierenden Kennung, einer sogenannten Teilnehmer-ID, eine den Teilnehmer als Mitglied einer Gruppe und/oder mehrerer Gruppen identifizierende Kennung, eine sogenannte Gruppen-ID bzw. VPN-ID, zugeordnet ist. Die Datenbank kann sich dabei wie bei dem in Fig. 9 dargestellten Ausführungsbeispiel die Datenbank 950, seitens der verschiedenen, an einem Aufbau einer Kommunikationsverbindung beteiligten Einrichtungen des Mobilfunknetzes 1120 bzw. 1320, des Festnetzes 1130 bzw. 1330 und/oder des PSTN 1140 bzw. 1340 befinden, Bestandteil derselben sein und/oder von diesen genutzt werden. Dabei sind in Abhängigkeit der jeweiligen Ausgestaltung die entsprechend nutzbaren Einträge der Teilnehmer-ID in der in der jeweiligen Datenbank gespeicherten Liste und die entsprechende Nutzung der der jeweiligen Teilnehmer-ID zugeordneten VPN-ID an die jeweiligen Anfragen und Antworten der an einem Aufbau einer Kommunikationsverbindung beteiligten Einrichtungen und deren verwendeten Protokolle angepasst. Seitens des Kommunikationsnetzes und dessen Einrichtungen werden dabei die entsprechend geeigneten Abläufe bzw. Verfahrensschritte für die Datenbankabfragen und/oder ―antworten gemäß dem Ausführungsbeispiel nach Fig. 9 realisiert.

Weitere vorteilhafte Ausgestaltungen der vorliegenden Erfindung sind durch entsprechende Ergänzung der in den Fig. 12 und/oder Fig. 14 dargestellten Ausführungsbeispiele der Nutzungssteuerung von Diensten für Kommunikationsverbindungen von in Gruppen zusammengefassten und verwalteten Teilnehmern bzw. deren mobilen Endgeräten B gegeben. Vorteilhafterweise sind bei derartigen Ausführungsbeispielen gegenüber der Nutzungssteuerung von Diensten für Kommunikationsverbindungen gemäß den Ausführungsbeispielen nach Fig. 12 und/oder Fig. 14 Teilnehmer bzw. deren mobile Endgeräte, denen im Mobilfunknetz für Dienstnutzungen von Kommunikationsverbindungen wenigstens ein gleiches Vorzugsgebiet zugeordnet ist, als Gruppe in einem sogenannten VPN (VPN: Virtual Private Network) zusammengefasst und verwaltet, entsprechend dem in Fig. 10 dargestellten Ausführungsbeispiel. Eine Gruppennutzung von Diensten für Kommunikationsverbindungen in Abhängigkeit des Aufenthaltsortes einzelner und/oder mehrerer Gruppenmitglieder ermöglicht dabei insbesondere umfangreichere und individuellere Dienstnutzungen für Kommunikationsverbindungen von Gruppenmitgliedern, wie Familienmitgliedern, Firmenangehörigen und dergleichen Gruppen, untereinander und/oder an gemeinsamen und/oder unterschiedlichen Aufenthaltsorten.

Seitens derartiger Ausführungsbeispiele sind vorteilhafterweise wie bei dem in Fig. 10 dargestellten und oben erläuterten Ausführungsbeispiel jeweils eine Datenbank vorgesehen, in der eine Liste gespeichert ist, in bzw. mittels welcher einer einen Teilnehmer B identifizierenden Kennung, einer sogenannten Teilnehmer-ID, eine den Teilnehmer als Mitglied einer Gruppe und/oder mehrerer Gruppen identifizierende Kennung, eine sogenannte Gruppen-ID bzw. VPN-ID, zugeordnet ist. Die Datenbank kann sich dabei wie bei dem in Fig. 10 dargestellten Ausführungsbeispiel die Datenbank 1050, seitens der verschiedenen, an einem Aufbau einer Kommunikationsverbindung beteiligten Einrichtungen des Mobilfunknetzes 1220 bzw. 1420, des Festnetzes 1230 bzw. 1430 und/oder des PSTN 1240 bzw. 1440 befinden, Bestandteil derselben sein und/oder von diesen genutzt werden. Dabei sind in Abhängigkeit der jeweiligen Ausgestaltung die entsprechend nutzbaren Einträge der Teilnehmer-ID in der in der jeweiligen Datenbank gespeicherten Liste und die entsprechende Nutzung der der jeweiligen Teilnehmer-ID zugeordneten VPN-ID an die jeweiligen Anfragen und Antworten der an einem Aufbau einer Kommunikationsverbindung beteiligten Einrichtungen und deren verwendeten Protokolle angepasst. Seitens des Kommunikationsnetzes und dessen Einrichtungen werden dabei die entsprechend geeigneten Abläufe bzw. Verfahrensschritte für die Datenbankabfragen und/oder ―antworten gemäß dem Ausführungsbeispiel nach Fig. 10 realisiert.

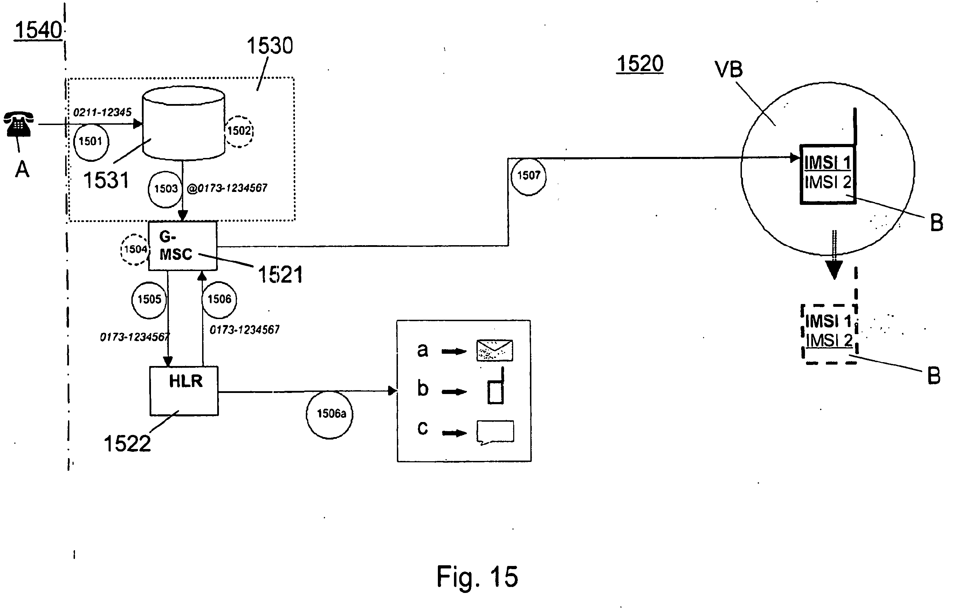

Fig. 15 zeigt ein weiteres Ausführungsbeispiel einer Nutzungssteuerung von Diensten für an ein mobiles Endgerät B gerichtete Kommunikationsverbindungen, wenn sich das mobile Endgerät B innerhalb oder außerhalb eines für dieses seitens des Kommunikationsnetzes zugeordneten Vorzugsgebietes befindet. Dabei wird die Kommunikationsverbindung vorliegend von einem Teilnehmer A bzw. dessen Endgerät an eine dem mobilen Endgerät B für dessen Vorzugsgebiet und/oder Vorzugsgebiete zugeordnete Festnetzrufnummer "0211-12345" gerichtet.

Bei der Nutzungssteuerung von Diensten für Kommunikationsverbindungen gemäß dem Ausführungsbeispiel nach Fig. 15 weist das mobile Endgerät B dabei eine SIM-Karte auf, die vorliegend mit zwei IMSIs (IMSI: International Mobile Subscriber Identity), der IMSI1 und der IMSI2, ausgestattet ist. In Abhängigkeit des jeweiligen Aufenthaltsorts des mobilen Endgerätes B im Mobilfunknetz 1520 wird dabei entweder die eine oder die andere der IMSIs, also entweder IMSI1 oder IMSI 2 aktiviert. Die jeweils aktivierte IMSI des mobilen Endgerätes B ist bei dem in Fig. 15 dargestellten Ausführungsbeispiel durch Unterstreichung gekennzeichnet. Im vorliegenden Fall ist bei Aufenthalt des mobilen Endgerätes B innerhalb eines für dieses seitens des Mobilfunknetzes 1520 eingerichteten Vorzugsgebiets VB die ISMSI1 mit der zugeordneten Mobilfunknetzrufnummer (MSISDN) "0173-1234567" und außerhalb des Vorzugsgebiets VB des mobilen Endgerätes B die IMSI2 mit einer anderen zugeordneten Mobilfunknetzrufnummer (MSISDN) aktiviert. Die Aktivierung der jeweiligen IMSI1 oder IMSI2 der SIM-Karte des mobilen Endgerätes B wird dabei von einer sogenannten SIM-Toolkit-Applikation der SIM-Karte ermöglicht und erfolgt vorteilhafterweise automatisch bei entsprechendem Aufenthalt und/oder Wechsel innerhalb und/oder außerhalb des Vorzugsgebiets VB. Vorteilhafterweise ist die IMSI1 der SIM-Karte des mobilen Endgerätes B seitens eines Festnetzbetreibers 1530 einer von diesem in einer Datenbank 1531 verwalteten Festnetzrufnummer zugeordnet, so dass das mobile Endgerät B bei Aufenthalt in dem ihm seitens des Mobilfunknetzes 1520 zugeordneten Vorzugsgebiet VB unter einer Festnetzrufnummer erreichbar ist.

Dabei sind seitens des Kommunikationsnetzes und dessen Einrichtungen im Rahmen der Steuerung von Dienstnutzungen für Kommunikationsverbindungen die Abläufe bzw. Verfahrensschritte 1501 bis 1507 realisiert:
- 1501:: Die von dem Teilnehmer A bzw. dessen Endgerät A kommende Anforderung nach einem Aufbau einer Kommunikationsverbindung zu bzw. mit dem mobilen Endgerät B wird mittels der Festnetzrufnummer "0211-12345" über ein PSTN (Public Standard Telefone Network) 1540 zu einem die Festnetzrufnummer "0211-12345" verwaltenden Festnetzbetreiber bzw. ―provider 1530 durchgeroutet.
- 1502:: Seitens einer von dem Festnetzbetreiber 1530 unterhaltenen, eine Datenbank 1531 umfassenden Einrichtung erfolgt dann ein sogenanntes Mapping der Festnetzrufnummer mit der dieser im Mobilfunknetz 1520 zugeordneten Mobilfunknetzrufnummer (MSISDN) der IMSI1 des mobilen Endgerätes B ("0173-1234567"). In der Datenbank 1531 ist dazu eine Liste gespeichert, in der dem Teilnehmer B für dessen Vorzugsgebiet und/oder Vorzugsgebieten im Mobilfunknetz 1520 zugeordneten Festnetzrufnummer die entsprechende Mobilfunknetzrufnummer (MSISDN) der IMSI1 zugeordnet ist. Im Rahmen des Aufbaus der Kommunikationsverbindung wird dabei aus der Datenbank 1531 anhand der Festnetzrufnummer die Mobilfunknetzrufnummer (MSISDN) der IMSI1 durch eine entsprechend geeignete Datenbankabfrage ermittelt.
- 1503:: Die so aus der Datenbank 1531 ermittelte Mobilfunknetzrufnummer (MSISDN) der IMSI1, vorliegend "0173-1234567", wird anschließend zum Aufbau der Kommunikationsverbindung seitens der Einrichtungen des Festnetzbetreibers 1530 mit einer Kennung, vorliegend einem exemplarisch durch "@" gekennzeichneten Präfix, versehen und an eine als Übergangseinheit (Gateway) dienende mobile Vermittlungsstelle (MSC (Mobile Switching Center)) 1521 des Mobilfunknetzes 1520, vorliegend einem G-MSC 1521 (Gateway MSC (Mobile Switching Center)) weitergeleitet. Die Kennung dient dabei zur Identifizierung des Festnetzbetreibers 1530 seitens des Mobilfunknetzes 1520. Die Kennung, also das der Mobilfunknetzrufnummer (MSISDN) der IMSI1 "0173-1234567" vorangestellte Präfix "@" muss dazu entsprechend seitens der Einrichtungen des Mobilfunknetzes 1520 interpretiert werden können.
- 1504:: Seitens des G-MSC 1521 wird die der Mobilfunknetzrufnummer (MSISDN) der IMSI1 "0173-1234567" als Präfix vorangestellte Kennung "@" dann abgeschnitten und die Mobilfunknetzrufnummer (MSISDN) der IMSI1 "0173-1234567" für eine anschließende Bestimmung des Aufenthaltsortes des mobilen Endgerätes B im Mobilfunknetz 1520 als auch der, dem mobilen Endgerät B zur Verfügung stehenden Dienstnutzungen genutzt.
- 1505:: Dazu sendet das G-MSC 1521 eine Anfrage mit der Mobilfunknetzrufnummer (MSISDN) der IMSI1 "0173-1234567" an die Teilnehmerdatenbank HLR (HLR: Home Location Register) 1522 des Mobilfunknetzes 1520.
- 1506:: Die Teilnehmerdatenbank HLR 1522 des Mobilfunknetzes 1520 antwortet auf die Anfrage 1505 mit der in dieser zu der Mobilfunknetzrufnummer (MSISDN) der IMSI1 "0173-1234567" gespeicherten bzw. erfassten Kennung der Teilnehmerdatenbank VLR (VLR: Visitor Location Register), der sogenannten VLR-ID, und sendet diese an das G-MSC 1521. Dabei werden seitens des HLR 1522 ferner vorteilhafterweise von dem Teilnehmer B eingerichtete und/oder einstellbare Weiterleitungseinstellungen auf deren Aktivierung überprüft. Im HLR 1522 sind dazu entsprechende Aktivierungsinformationen der Weiterleitungseinstellungen des mobilen Endgerätes B gespeichert. Eine Deaktivierung der IMSI1 bedingt dabei vorteilhafterweise eine Aktivierung der Weiterleitungseinstellungen gemäß 1506 a. Bei Aktivierung der IMSI1 erfolgt Ablauf- bzw. Verfahrensschritt 1507.
- 1506 a:: Bei entsprechender Aktivierung der Weiterleitungseinstellungen, wird die von dem Teilnehmer A aus dem PSTN 1540 angeforderte Kommunikationsverbindung wird zu den von dem Teilnehmer B des mobilen Endgerätes B individuell ausgewählten bzw. vorgegebenen Alternativen weitergehender Dienstnutzungen durchgeroutet, vorliegend, wenn sich dieses außerhalb des Vorzugsgebiets VB befindet auf die MSISDN der IMSI2. Die vorliegend genutzten, bereits im Zusammenhang mit Fig. 4 beschriebenen alternativen Dienstnutzungen umfassen dabei:
1506 a a: Ein Durchrouten der von dem Teilnehmer A geforderten Kommunikationsverbindung zu der seitens des Mobilfunknetzes 1520 für das mobile Endgerät B seitens des Mobilfunknetzes 1520 eingerichteten und verwalteten Mailbox.
1506 a b: Ein vorzugsweise für den Teilnehmer B kostenpflichtiges Durchrouten der von dem Teilnehmer A geforderten Kommunikationsverbindung zu dem sich außerhalb des Vorzugsgebiets VB im Restgebiet aufhaltenden mobilen Endgerätes B unter Nutzung der entsprechenden Mobilfunkrufnummer (MSISDN) der dann aktivierten IMSI2 des mobilen Endgerätes B.
1506 a c: Ein Durchrouten der von dem Teilnehmer A geforderten Kommunikationsverbindung zu einer seitens des Mobilfunknetzes 1520 für das mobile Endgerät B bereitgehaltene Ansage einer dafür vorgesehenen und eingerichteten Einrichtung seitens des Mobilfunknetzes 1520.
- 1507:: Das G-MSC 1521 routet anschließend die von dem Teilnehmer A aus dem PSTN 1540 angeforderte Kommunikationsverbindung zu dem mobilen Endgerät B an dessen IMSI1, welcher seitens des Festnetzbetreibers 1530 bzw. in der von diesem unterhaltenen oder betriebenen Datenbank 1531 die Festnetzrufnummer "0211-12345" zugeordnet ist, über das Mobilfunknetz 1520 durchgeroutet.

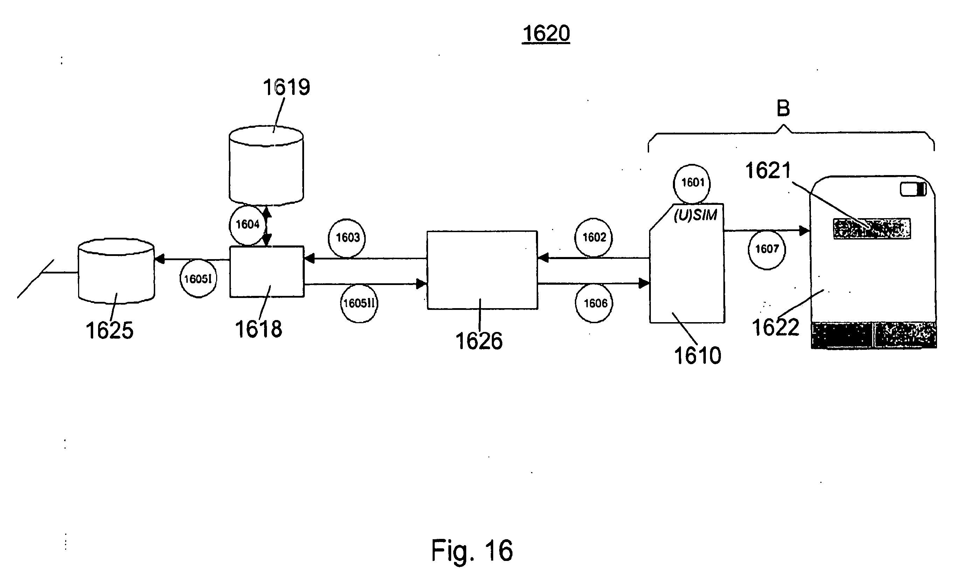

Fig. 16 zeigt ein Ausführungsbeispiel für eine Signalisierung des Aufenthalts eines mobilen Endgerätes B innerhalb oder außerhalb eines Vorzugsgebietes und/oder der Anzeige der entsprechend zur Verfügung stehenden Dienstnutzungen für Kommunikationsverbindungen, mitunter in Abhängigkeit einer Gruppenzugehörigkeit des mobilen Endgerätes B bei Aufenthalt des mobilen Endgerätes B in einem der Gruppe zugeordneten Vorzugsgebiet und/oder zur Verfügung stehenden Dienstnutzungen. Im Rahmen der Signalisierung wird dabei seitens des mobilen Endgerätes B optisch und/oder akustisch eine entsprechende Information wiedergegeben.

Bei dem in Fig. 16 dargestellten Ausführungsbeispiel wird beispielsweise der Aufenthalt innerhalb eines Vorzugsgebiets dem Nutzer des mobilen Endgerätes B seitens des Displays 1622 des mobilen Endgerätes B in dem mit 1621 gekennzeichneten Bereich durch ein entsprechend geeignetes Symbol, Text und/oder dergleichen optische Information signalisiert. Der Nutzer des mobilen Endgerätes B kann dabei vorteilhafterweise anhand der signalisierten Symbolik in dem Bereich 1621 erkennen, dass er sich innerhalb oder außerhalb eines Vorzugsgebiets aufhält und/oder welche Dienstnutzungen für Kommunikationsverbindungen ihm dabei zur Verfügung stehen.

Zur Wiedergabe entsprechender Signalisierungsinformationen seitens des mobilen Endgerätes B weist dazu die von diesem für einen Zugang zum Mobilfunknetz 1620 benutzte SIM- beziehungsweise USIM-Karte 1610 eine geeignete Anwendung auf, die unter Nutzung einer sogenannten SIM-Toolkit-Applikation es ermöglicht, bei Erfassung einer entsprechenden Kennzeichnung oder dergleichen Information für den Aufenthalt des mobilen Endgerätes B in einem seiner Vorzugsgebiete die entsprechende Signalisierung seitens des mobilen Endgerätes B wiederzugeben, vorliegend durch Anzeige eines entsprechenden Symbols oder dergleichen optischer Information in dem Bereich 1621 des Displays 1622 des mobilen Endgerätes B. Bei dem Ausführungsbeispiel gemäß Fig. 16 sind im Rahmen der entsprechenden Signalisierung die folgenden Abläufe beziehungsweise Verfahrensschritte 1601 bis 1607 realisiert.
- 1601:: Durch eine Veränderung der Position beziehungsweise des Aufenthaltsorts des mobilen Endgerätes B im Mobilfunknetz 1620 durch einen Wechsel von einer Funkzelle des Mobilfunknetzes 1620 zu einer anderen Funkzelle des Mobilfunknetzes 1620 wird durch die auf beziehungsweise seitens der SIM-Karte 1610 ausgeführten bzw. laufenden Anwendung die Funkzellenkennzeichnung der jeweiligen Funkzelle, die sogenannte Cell-ID, erfasst.
- 1602:: Die erfasste Cell-ID wird von der SIM-Karte 1610 mittels einer SMS, vorzugsweise einer verdeckten SMS, zu dem OTA-Server 1626 geschickt.
- 1603:: Der OTA-Server 1626 übergibt die so mittels der verdeckten SMS erhaltene Cell-ID zur Überprüfung an eine seitens des OTA-Servers 1626 und/oder im Mobilfunknetz 1620 vorhandene Vergleichseinrichtung 1618.
- 1604:: Die Vergleichseinrichtung 1618 vergleicht die erhaltene Cell-ID mit in einer Datenbank 1619 für das mobile Endgerät B in einer Liste verwalteten und erfassten Vorzugsgebieten.
- 1605:: Das Vergleichsergebnis der Vergleichseinrichtung 1618 wird als Statusinformation in einer Statusdatenbank 1625 zur weiteren Verwendung für eine hier nicht weiter dargestellte IN-Anlage 1624 verwendet (1605 I). Ferner sendet die Vergleichseinrichtung 1618 das Ergebnis des Vergleichs (1604) als Statusinformation oder dergleichen geeigneter Information an den OTA-Server 1626 (1605 II).
- 1606:: Der OTA-Server 1626 sendet die entsprechend in dem Ablaufbeziehungsweise Verfahrensschritt 1605 II von der Vergleichseinrichtung 1618 erhaltene Information mittels einer SMS an die SIM-Karte 1610 des mobilen Endgerätes B. Dabei wird vorteilhafterweise automatisch eine Bestätigung des Empfangs der SMS, ein sogenannter "Proof of Receipt" eingeholt. Die in dem Ablauf- beziehungsweise Verfahrensschritt 1605 II von der Vergleichseinrichtung 1618 erhaltene Information wird ferner seitens des OTA-Servers 1626 vorteilhafterweise derart aufbereitet, dass die seitens der SIM-Karte 1610 des mobilen Endgerätes B ausgeführte Anwendung die Information zur Signalisierung in dem mit 1621 gekennzeichneten Bereich seitens des Displays 1620 des mobilen Endgerätes B umsetzen kann. Dabei ist vorteilhafterweise der Aufenthalt innerhalb oder außerhalb eines Vorzugsgebiets in geeigneter Art und Weise dem Nutzer des mobilen Endgerätes B signalisierbar.
- 1607:: Ein entsprechender Signalisierungsbefehl wird von der seitens der SIM-Karte 1610 des mobilen Endgerätes B dazu genutzten SIM-Toolkit-Applikation in Abhängigkeit des jeweiligen Status des Aufenthaltsortes des mobilen Endgerätes B innerhalb oder außerhalb des Vorzugsgebietes seitens des Bereichs 1621 durch entsprechende Aktivierung oder Deaktivierung der Wiedergabe des Symbols oder dergleichen umgesetzt.

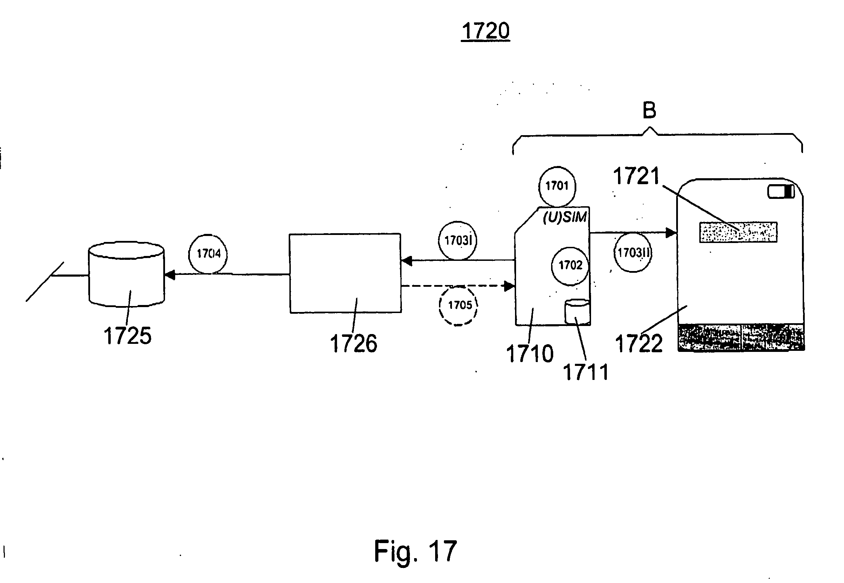

Figur 17 zeigt ein weiteres Ausführungsbeispiel für eine Signalisierung des Aufenthalts eines mobilen Endgerätes B innerhalb oder außerhalb eines Vorzugsgebietes und/oder der Anzeige der entsprechend zur Verfügung stehenden Dienstnutzungen für Kommunikationsverbindungen, mitunter in Abhängigkeit einer Gruppenzugehörigkeit des mobilen Endgerätes B bei Aufenthalt des mobilen Endgerätes B in einem der Gruppe zugeordneten Vorzugsgebiet und/oder zur Verfügung stehenden Dienstnutzungen. Im Rahmen der Signalisierung wird dabei seitens des mobilen Endgerätes B optisch und/oder akustisch eine entsprechende Information wiedergegeben.

Bei dem in Fig. 17 dargestellten Ausführungsbeispiel wird beispielsweise der Aufenthalt innerhalb eines Vorzugsgebiets dem Nutzer des mobilen Endgerätes B seitens des Displays 1722 des mobilen Endgerätes B in dem mit 1721 gekennzeichneten Bereich durch ein entsprechend geeignetes Symbol, Text und/oder dergleichen optische Information signalisiert. Der Nutzer des mobilen Endgerätes B kann dabei vorteilhafterweise anhand der signalisierten Symbolik in dem Bereich 1721 erkennen, dass er sich innerhalb oder außerhalb eines Vorzugsgebiets aufhält und/oder welche Dienstnutzungen für Kommunikationsverbindungen ihm dabei zur Verfügung stehen.

Zur Wiedergabe entsprechender Signalisierungsinformationen seitens des mobilen Endgerätes B weist dazu die von diesem für einen Zugang zum Mobilfunknetz 1720 benutzte SIM- beziehungsweise USIM-Karte 1710 eine geeignete Anwendung auf, die unter Nutzung einer sogenannten SIM-Toolkit-Applikation es ermöglicht, bei Erfassung einer entsprechenden Kennzeichnung oder dergleichen Information für den Aufenthalt des mobilen Endgerätes B in einem seiner Vorzugsgebiete die entsprechende Signalisierung seitens des mobilen Endgerätes B wiederzugeben, vorliegend durch Anzeige eines entsprechenden Symbols oder dergleichen optischer Information in dem Bereich 1721 des Displays 1722 des mobilen Endgerätes B. Ferner weist die SIMbeziehungsweise USIM-Karte 1710 eine Datenbank 1711 auf, in der die Funkzellenkennzeichner (Cell-IDs) der dem mobilen Endgerät B im Mobilfunknetz 1720 zugeordneten Vorzugsgebiete in einer Liste gespeichert sind.

Bei dem Ausführungsbeispiel gemäß Fig. 17 sind im Rahmen der entsprechenden Signalisierung die folgenden Abläufe beziehungsweise Verfahrensschritte 1701 bis 1705 realisiert.
- 1701:: Durch eine Veränderung der Position beziehungsweise des Aufenthaltsorts des mobilen Endgerätes B im Mobilfunknetz 1720 durch einen Wechsel von einer Funkzelle des Mobilfunknetzes 1720 zu einer anderen Funkzelle des Mobilfunknetzes 1720 wird durch die auf beziehungsweise seitens der SIM-Karte 1710 ausgeführten bzw. laufenden Anwendung die Funkzellenkennzeichnung der jeweiligen Funkzelle, die sogenannte Cell-ID, erfasst.
- 1702:: Die erfasste Cell-ID wird von einer seitens der SIM-Karte 1710 ausgeführten bzw. laufenden Anwendung mit den in Datenbank 1711 erfassten Cell-IDs der Vorzugsgebiete des mobilen Endgerätes B im Mobilfunknetz 1720 verglichen. Der Vergleich liefert dabei vorliegend eine Status-Information, anhand der erkennbar ist, ob sich das mobile Endgerät B innerhalb oder außerhalb eines seiner Vorzugsgebiete befindet.
- 1703 I:: Die durch den Vergleich 1702 ermittelte Statusinformation wird von der SIM-Karte 1710 mittels einer SMS, vorzugsweise einer verdeckten SMS, zu dem OTA-Server 1726 geschickt.
- 1703 II:: Aus der durch den Vergleich 1702 ermittelten Statusinformation wird ferner ein entsprechender Signalisierungsbefehl von der seitens der SIM-Karte 1710 des mobilen Endgerätes B dazu genutzten SIM-Toolkit-Applikation in Abhängigkeit des jeweiligen Status des Aufenthaltsortes des mobilen Endgerätes B innerhalb oder außerhalb des Vorzugsgebietes seitens des Bereichs 1721 durch entsprechende Aktivierung oder Deaktivierung der Wiedergabe eines Symbols umgesetzt.
- 1704:: Der OTA-Server 1626 übergibt die mittels der verdeckten SMS gemäß 1703 I erhaltene Statusinformation an eine Statusdatenbank 1725 zur weiteren Verwendung für eine hier nicht weiter dargestellte IN-Anlage 1724, welche die Statusinformation zur Überprüfung des Aufenthaltsorts des mobilen Endgerätes B im Mobilfunknetz 1720 durch Abfrage für eine entsprechende weitergehende Steuerung von Dienstnutzungen für Kommunikationsverbindungen nutzt.
- 1705:: Voraussetzung für die in den Abläufen beziehungsweise Verfahrensschritten 1701 bis 1704 beschriebenen Prozesse ist eine Initiale Versorgung der SIM-Toolkit-Applikation mit den Vorzugsgebieten des mobilen Endgerätes B im Mobilfunknetz 1720. Dabei wird mittels der SIM-Toolkit-Applikation in der Datenbank 1711 der SIM-Karte 1710 die entsprechende Liste der Cell-IDs der Vorzugsgebiete des mobilen Endgerätes B im Mobilfunknetz 1720 in der Datenbank 1711 erfasst. Die Vorzugsgebiete des mobilen Endgerätes B im Mobilfunknetz 1720 sind dabei entsprechend durch den OTA-Server 1726 aktualisierbar und/oder veränderbar.

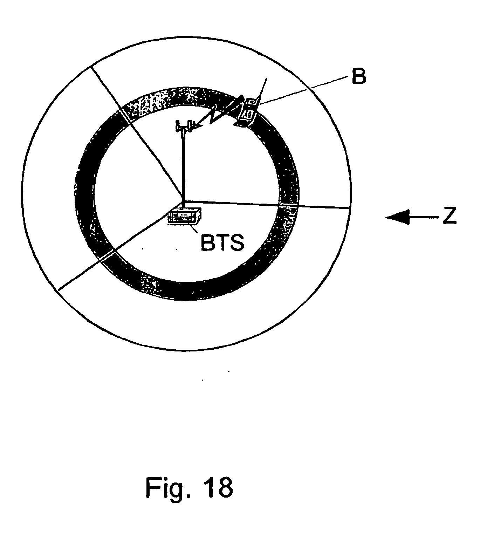

Fig. 18 zeigt in einer vereinfachten schematischen Darstellung ein Ausführungsbeispiel für eine netzbasierte Bestimmung des Aufenthaltsortes eines mobilen Endgerätes B in einem Mobilfunknetz mit einer aus Funkzellen Z aufgebauten zellularen Netzstruktur. Vorliegend wird zur Bestimmung des Aufenthaltsortes des mobilen Endgerätes B als netzbasierte Lokalisierungsbeziehungsweise Ortungstechnologie die jeweilige Funkzelle (Cell-ID) bestimmt und zur Synchronisation mit der jeweiligen Basisstation BTS der Funkzelle eine entsprechende Synchronisationsformation von dem mobilen Endgerät B an die Basisstation BTS verzögert gesendet und/oder empfangen. Jede Funkzelle Z des Mobilfunknetzes besitzt dabei eine eindeutig zugeordnete Kennzeichnung, die Cell-ID, die bei einem Rufaufbau, einem Funkzellenwechsel, beim Eintreten und/oder Verlassen einer Funkzelle Z, einem sogenannten Inter- beziehungsweise Intra-BSC-Handover, an das mobile Endgerät B übertragen wird. Dabei muss das mobile Endgerät B eine bestimmte Zeit TA (TA: Timing Advance) verzögert senden beziehungsweise empfangen, um die Synchronisation mit der Basisstation BTS der jeweiligen Zelle Z zu erhalten. Bei dem in Fig. 18 dargestellten Ausführungsbeispiel befindet sich das mobile Endgerät B je nach Zellentyp der Funkzelle Z in einem in Fig. 18 vereinfacht dargestellten Kreis, Kreissektor, Kreisring, oder Kreisringsektor. Der jeweilige Aufenthaltsort des mobilen Endgerätes B in der Funkzelle Z ist dabei durch Kombination der Bestimmung der Funkzellenkennung (Cell-ID) als auch durch Erfassung der Verzögerungszeiten beim Senden beziehungsweise Empfangen im Rahmen der Synchronisation mit der Basisstation BTS der Funkzelle Z entsprechend bestimmbar beziehungsweise ermittelbar. Die Bestimmung beziehungsweise Ermittlung erfolgt dabei vorteilhafterweise seitens der Basisstation BTS oder dieser zugeordneten Einrichtungen seitens des Mobilfunknetzes und/oder vorteilhafterweise seitens des mobilen Endgerätes B, welches dazu mit entsprechenden Funktionalitäten ausgestaltet ist.

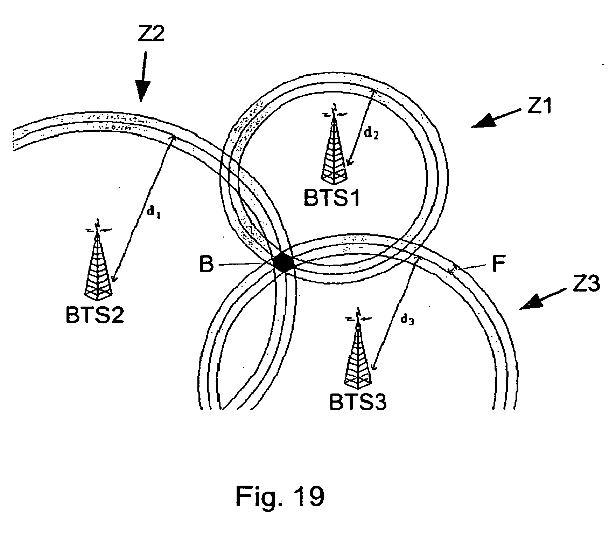

Fig. 19 zeigt in einer vereinfachten schematischen Darstellung ein Ausführungsbeispiel für eine netzunterstützte Bestimmung des Aufenthaltsortes eines mobilen Endgerätes B in einem Mobilfunknetz, vorliegend ein sogenanntes E-OTD-Verfahren (E-OTD: Enhanced-Observed Time Difference). Im Rahmen der Lokalisierung beziehungsweise Ortung des mobilen Endgerätes B im Mobilfunknetz wird dabei entweder seitens des mobilen Endgerätes B und/oder im Mobilfunknetz ein E-OTD-Verfahren, also ein endgerätebasiertes E-OTD-Verfahren und/oder ein netzbasiertes E-OTD-Verfahren, durchgeführt.

Bei einem endgerätebasierten E-OTD-Verfahren werden die jeweiligen seitens des mobilen Endgerätes B erfassten Koordinaten der Basisstationen BTS der jeweiligen Funkzellen Z1, Z2 beziehungsweise Z3 in deren Funkversorgungsbereich sich das mobile Endgerät B befindet erfasst. Die entsprechenden BTS-Koordinaten der Basisstation BTS werden dabei entweder durch sogenannte Point-To-Point-Verbindungen oder mittels sogenanntem Cellbroadcast per SMS an das mobile Endgerät ausgesendet und seitens desselben erfasst. Der Funkversorgungsbereich der Funkzellen Z1, Z2 beziehungsweise Z3 der jeweiligen Basisstation BTS 1, BTS 2, BTS 3 kann dabei in Abhängigkeit der geographischen Umstände unterschiedlich groß ausfallen, wie anhand der in Fig. 19 dargestellten unterschiedlichen Radien d1, d2, d3 erkennbar ist. Ferner weisen die jeweiligen Funkzellen Z1, Z2, Z3 der Basisstation BTS 1, BTS 2, BTS 3 jeweils einen Toleranzbereich F im Grenzgebiet auf.

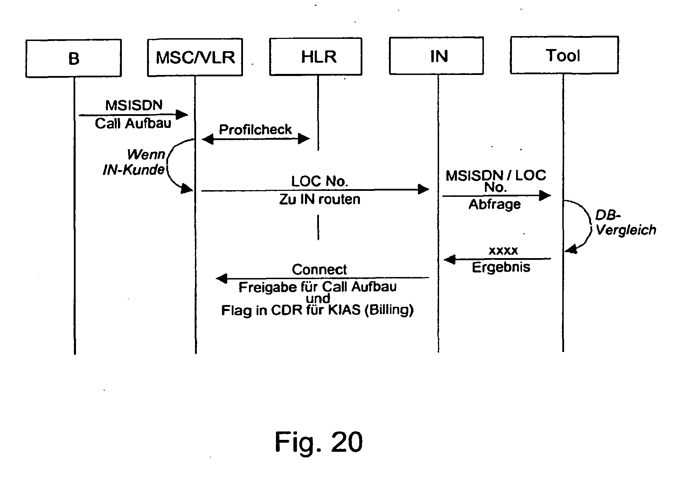

Das in Fig. 20 schematisch dargestellte Ablaufdiagramm zeigt ein prinzipielles Ausführungsbeispiel einer Nutzungssteuerung von Diensten für von einem mobilen Endgerät B abgehende Kommunikationsverbindungen und die dabei in den verschiedenen Einrichtungen des Mobilfunknetzes initiierten Signalisierungsdienste und/oder -kanäle für den Verbindungsaufbau. Dabei richtet das mobile Endgerät B zunächst die Anforderung nach dem Aufbau einer Kommunikationsverbindung an die für den jeweiligen Aufenthaltsort des mobilen Endgerätes B gerade zuständige mobile Vermittlungseinrichtung MSC, in dessen Funkbereich sich das mobile Endgerät B befindet. Dabei sendet das mobile Endgerät B an die Vermittlungseinrichtung MSC unter anderem die diesem zugeordnete Mobilfunkrufnummer MSISDN (Call Aufbau). Die der mobilen Vermittlungseinrichtung MSC zugeordnete mobile Teilnehmerdatenbank VLR (VLR: Visitor Location Register) überprüft anhand der in der Datenbank der MSISDN des mobilen Endgerätes B zugeordneten Datenbankeinträge über einen sogenannten "Profilcheck" seitens der Teilnehmerdatenbank HLR (HLR: Home Location Register) ob es sich bei dem mobilen Endgerät B um einen zulässigen Teilnehmer des Mobilfunknetzes handelt und welche Dienstnutzungen diesem im Mobilfunknetz zur Verfügung stehen. Entsprechende Informationen des "Profilchecks" werden entsprechend als Antwort von dem HLR an das VLR beziehungsweise die diesem zugeordnete mobile Vermittlungseinrichtung MSC zurückgeliefert. Im Rahmen des "Profilchecks" erhält das MSC beziehungsweise das VLR dabei Informationen darüber, ob es sich bei dem mobilen Endgerät B um einen Teilnehmer B handelt, für den für weitergehende Dienstnutzungen zur Verfügung stehende Kommunikationsverbindungen seitens einer IN-Anlage verwaltet und/oder gesteuert werden (IN-Kunde).

Sofern dies der Fall ist, wird im Rahmen der Initiierung eines Verbindungsaufbaus die Information über den aktuellen Aufenthaltsort des mobilen Endgerätes B im Mobilfunknetz, vorliegend die sogenannte Location Number (LOC No.) gemeinsam mit der Mobilfunkrufnummer MSISDN des mobilen Endgerätes B zu der im Mobilfunknetz vorgesehenen IN-Anlage durchgeroutet (zu IN routen). Seitens der IN-Anlage wird dann anhand wenigstens eines Datenbankvergleichs in einer dafür vorgesehenen weiteren Einrichtung, in Fig. 20 exemplarisch als "Tool" gekennzeichnet, eine Abfrage initiiert, in welcher die MSISDN des mobilen Endgerätes B und/oder die ermittelte Location Number (LOC No.) in einer seitens des Mobilfunknetzes bereitgehaltenen Datenbank, in welcher Vorzugsgebiete und/oder in den Vorzugsgebieten zur Verfügung stehende weitergehende Dienstnutzungen für Kommunikationsverbindungen des mobilen Endgerätes B erfasst sind, vorzugsweise in Form von entsprechenden Kennzeichnern oder dergleichen Informationen, verglichen werden (DB-Vergleich).

Das durch den Datenbankvergleich (DB-Vergleich) ermittelte Ergebnis wird von der Einrichtung "Tool" an die IN-Anlage übertragen ("xxxx Ergebnis"). Die IN-Anlage sorgt dann im Rahmen des Verbindungsaufbaus für eine Freigabe der Verbindung und setzt entsprechende Informationen für eine Abrechnung seitens des sogenannten CDRs (CDR: Call Detail Record) für eine Vergebührung im Kundeninformations- und/oder Abrechnungssystem (KIAS) für eine Vergebührung der von dem mobilen Endgerät B geforderten Kommunikationsverbindung in Abhängigkeit des Aufenthalts des mobilen Endgerätes B innerhalb oder außerhalb eines seiner ihm im Mobilfunknetz zugeordneten Vorzugsgebiete um (Billing).

Die in den Fig. der Zeichnung dargestellten und im Zusammenhang mit diesen beschriebenen Ausführungsbeispiele dienen lediglich der Erläuterung der Erfindung und sind für diese nicht beschränkend.

### Bezugszeichenliste

- 1: Kommunikationsnetz/Mobilfunknetz
- 2: Anforderung Aufbau Kommunikationsverbindung
- 3: Anforderung Aufbau Kommunikationsverbindung
- 4: Anforderung Aufbau Kommunikationsverbindung
- 5: Kommunikationsverbindung (Ansage)
- 6: Ansageeinrichtung
- 7: Kommunikationsverbindung (Mailbox (8))
- 8: Anrufbeantworter/Mailbox
- 9: Anforderung Aufbau Kommunikationsverbindung
- 10: Anforderung Aufbau Kommunikationsverbindung
- 11: Aufenthalts-/Vergebührungsinformation Vorzugsgebiet
- 12: Einrichtung zur Erfassung von Kunden- und/oder Abrechnungsinformationen (KIAS)
- 13: Anforderung Aufbau Kommunikationsverbindung
- 14: Aufenthalts-/Vergebührungsinformation Restgebiet
- 701: Ablauf/Verfahrensschritt (Anforderung Aufbau Kommunikationsverbindung)
- 702: Ablauf/Verfahrensschritt (Mapping)
- 703: Ablauf/Verfahrensschritt
- 704: Ablauf/Verfahrensschritt
- 705: Ablauf/Verfahrensschritt (Anfrage an HLR (722))
- 706: Ablauf/Verfahrensschritt (Antwort von HLR (722))
- 707: Ablauf/Verfahrensschritt
- 708: Ablauf/Verfahrensschritt
- 7091 I: Ablauf/Verfahrensschritt
- 709 11: Ablauf/Verfahrensschritt
- 709 II a: Dienstnutzung (Ablauf/Verfahrensschritt 709 II)
- 709 II b: Dienstnutzung (Ablauf/Verfahrensschritt 709 II)
- 709 II c: Dienstnutzung (Ablauf/Verfahrensschritt 709 II)
- 710: Ablauf/Verfahrensschritt
- 720: Mobilfunknetz/Mobilfunknetzbetreiber
- 721: G-MSC (Gateway MSC (Mobile Switching Center))
- 722: Teilnehmerdatenbank (HLR: Home Location Register)
- 723: mobile Vermittlungsstelle (MSC (Mobile Switching Center))
- 724: IN-Anlage (IN: Intelligent Network Subsystem)
- 725: SCP-Datenbank (SCP: Service Control Point)/Vorzugsgebiete-Datenbank
- 730: Festnetz/Festnetzbetreiber
- 731: Datenbank Festnetzrufnummer ― Mobilfunknetzrufnummer (MSISDN)
- 740: PSTN (Public Standard Telefone Network)
- 801: Ablauf/Verfahrensschritt (Anforderung Aufbau Kommunikationsverbindung)
- 802: Ablauf/Verfahrensschritt (Mapping)
- 803: Ablauf/Verfahrensschritt
- 804: Ablauf/Verfahrensschritt
- 805: Ablauf/Verfahrensschritt (Anfrage an HLR (822))
- 806: Ablauf/Verfahrensschritt (Antwort von HLR (822))
- 807: Ablauf/Verfahrensschritt
- 808: Ablauf/Verfahrensschritt (Prepaging)
- 809: Ablauf/Verfahrensschritt (Prepaging)
- 810: Ablauf/Verfahrensschritt
- 811 I: Ablauf/Verfahrensschritt
- 811 II: Ablauf/Verfahrensschritt
- 811 II a: Dienstnutzung (Ablauf/Verfahrensschritt 811 II)
- 811 II b: Dienstnutzung (Ablauf/Verfahrensschritt 811 II)
- 811 II c: Dienstnutzung (Ablauf/Verfahrensschritt 811 II)
- 812: Ablauf/Verfahrensschritt
- 820: Mobilfunknetz/Mobilfunknetzbetreiber
- 821: G-MSC (Gateway MSC (Mobile Switching Center))
- 822: Teilnehmerdatenbank (HLR: Home Location Register)
- 823: mobile Vermittlungsstelle (MSC (Mobile Switching Center))
- 824: IN-Anlage (IN: Intelligent Network Subsystem)
- 825: SCP-Datenbank (SCP: Service Control Point)/Vorzugsgebiete-Datenbank
- 830: Festnetz/Festnetzbetreiber
- 831: Datenbank Festnetzrufnummer ― Mobilfunknetzrufnummer (MSISDN)
- 840: PSTN (Public Standard Telefone Network)
- 901: Ablauf/Verfahrensschritt (Anforderung Aufbau Kommunikationsverbindung)
- 902: Ablauf/Verfahrensschritt (Mapping)
- 903: Ablauf/Verfahrensschritt
- 904: Ablauf/Verfahrensschritt
- 905: Ablauf/Verfahrensschritt (Anfrage an HLR (922))
- 906: Ablauf/Verfahrensschritt (Antwort von HLR (922))
- 907: Ablauf/Verfahrensschritt
- 908: Ablauf/Verfahrensschritt
- 909 I: Ablauf/Verfahrensschritt
- 909 11: Ablauf/Verfahrensschritt
- 909 II a: Dienstnutzung (Ablauf/Verfahrensschritt 909 II)
- 909 II b: Dienstnutzung (Ablauf/Verfahrensschritt 909 II)
- 909 II c: Dienstnutzung (Ablauf/Verfahrensschritt 909 II)
- 910: Ablauf/Verfahrensschritt
- 920: Mobilfunknetz/Mobilfunknetzbetreiber
- 921: G-MSC (Gateway MSC (Mobile Switching Center))
- 922: Teilnehmerdatenbank (HLR: Home Location Register)
- 923: mobile Vermittlungsstelle (MSC (Mobile Switching Center))
- 924: IN-Anlage (IN: Intelligent Network Subsystem)
- 925: SCP-Datenbank (SCP: Service Control Point)/Vorzugsgebiete-Datenbank
- 930: Festnetz/Festnetzbetreiber
- 931: Datenbank Festnetzrufnummer ― Mobilfunknetzrufnummer (MSISDN)
- 940: PSTN (Public Standard Telefone Network)
- 950: Gruppen-Datenbank
- 951: Anfrage (von Festnetz/Festnetzbetreiber (930) bzw. Datenbank (931) an Gruppen-Datenbank (950))
- 952: Antwort (von Gruppen-Datenbank (950) an Festnetz/Festnetzbetreiber (930) bzw. Datenbank (931))
- 953: Anfrage (von G-MSC (921) an Gruppen-Datenbank (950))
- 954: Antwort (von Gruppen-Datenbank (950) an G-MSC (921))
- 955: Anfrage (von HLR (922) an Gruppen-Datenbank (950))
- 956: Antwort (von Gruppen-Datenbank (950) an HLR (922))
- 957: Anfrage (von IN-Anlage (924) an Gruppen-Datenbank (950))
- 958: Antwort (von Gruppen-Datenbank (950) an IN-Anlage (924))
- 1001: Ablauf/Verfahrensschritt (Anforderung Aufbau Kommunikationsverbindung)
- 1002: Ablauf/Verfahrensschritt (Mapping)
- 1003: Ablauf/Verfahrensschritt
- 1004: Ablauf/Verfahrensschritt
- 1005: Ablauf/Verfahrensschritt (Anfrage an HLR (1022))
- 1006: Ablauf/Verfahrensschritt (Antwort von HLR (1022))
- 1007: Ablauf/Verfahrensschritt
- 1008: Ablauf/Verfahrensschritt (Prepaging)
- 1009: Ablauf/Verfahrensschritt (Prepaging)
- 1010: Ablauf/Verfahrensschritt
- 1011 I: Ablauf/Verfahrensschritt (Anforderung Aufbau Kommunikationsverbindung)
- 1011 II: Ablauf/Verfahrensschritt
- 1011 II a: Dienstnutzung (Ablauf/Verfahrensschritt 1011 II)
- 1011 II b: Dienstnutzung (Ablauf/Verfahrensschritt 1011 II)
- 1011 II c: Dienstnutzung (Ablauf/Verfahrensschritt 1011 II)
- 1012: Ablauf/Verfahrensschritt
- 1020: Mobilfunknetz/Mobilfunknetzbetreiber
- 1021: G-MSC (Gateway MSC (Mobile Switching Center))
- 1022: Teilnehmerdatenbank (HLR: Home Location Register)
- 1023: mobile Vermittlungsstelle (MSC (Mobile Switching Center))
- 1024: IN-Anlage (IN: Intelligent Network Subsystem)
- 1025: SCP-Datenbank (SCP: Service Control Point)/Vorzugsgebiete-Datenbank
- 1030: Festnetz/Festnetzbetreiber
- 1031: Datenbank Festnetzrufnummer - Mobilfunknetzrufnummer (MSISDN)
- 1040: PSTN (Public Standard Telefone Network)
- 1050: Gruppen-Datenbank
- 1051: Anfrage (von Festnetz/Festnetzbetreiber (1030) bzw. Datenbank (1031) an Gruppen-Datenbank (1050))
- 1052: Antwort (von Gruppen-Datenbank (1050) an Festnetz/Festnetzbetreiber (1030) bzw. Datenbank (1031))
- 1053: Anfrage (von G-MSC (1021) an Gruppen-Datenbank (1050))
- 1054: Antwort (von Gruppen-Datenbank (1050) an G-MSC (1021))
- 1055: Anfrage (von HLR (1022) an Gruppen-Datenbank (1050))
- 1056: Antwort (von Gruppen-Datenbank (1050) an HLR (1022))
- 1057: Anfrage (von IN-Anlage (1024) an Gruppen-Datenbank (1050))
- 1058: Antwort (von Gruppen-Datenbank (1050) an IN-Anlage (1024))
- 1101: Ablauf/Verfahrensschritt
- 1102: Ablauf/Verfahrensschritt (Mapping)
- 1103: Ablauf/Verfahrensschritt
- 1104: Ablauf/Verfahrensschritt
- 1105: Ablauf/Verfahrensschritt (Anfrage an HLR (1122))
- 1106: Ablauf/Verfahrensschritt (Antwort von HLR (1122))
- 1107: Ablauf/Verfahrensschritt
- 1108: Ablauf/Verfahrensschritt
- 1109 I: Ablauf/Verfahrensschritt
- 1109 II: Ablauf/Verfahrensschritt
- 1109 II a: Dienstnutzung (Ablauf/Verfahrensschritt 1109 II)
- 1109 II b: Dienstnutzung (Ablauf/Verfahrensschritt 1109 II)
- 1109 II c: Dienstnutzung (Ablauf/Verfahrensschritt 1109 II)
- 1110: Ablauf/Verfahrensschritt
- 1113: Ablauf/Verfahrensschritt (vor 1101 bis 1110 vorgelagerter Prozess)
- 1114: Ablauf/Verfahrensschritt (vor 1101 bis 1110 vorgelagerter Prozess)
- 1115: Ablauf/Verfahrensschritt (vor 1101 bis 1110 vorgelagerter Prozess)
- 1116: Ablauf/Verfahrensschritt (vor 1101 bis 1110 vorgelagerter Prozess)
- 1120: Mobilfunknetz/Mobilfunknetzbetreiber
- 1121: G-MSC (Gateway MSC (Mobile Switching Center))
- 1122: Teilnehmerdatenbank (HLR: Home Location Register)
- 1123: mobile Vermittlungsstelle (MSC (Mobile Switching Center))
- 1124: IN-Anlage (IN: Intelligent Network Subsystem)
- 1125: Status-Datenbank (OTA-Server(1126))
- 1126: OTA-Server (OTA: Over The Air)
- 1130: Festnetz/Festnetzbetreiber
- 1131: Datenbank Festnetzrufnummer ― Mobilfunknetzrufnummer (MSISDN)
- 1140: PSTN (Public Standard Telefone Network)
- 1201: Ablauf/Verfahrensschritt (Anforderung Aufbau Kommunikationsverbindung)
- 1202: Ablauf/Verfahrensschritt (Mapping)
- 1203: Ablauf/Verfahrensschritt
- 1204: Ablauf/Verfahrensschritt
- 1205: Ablauf/Verfahrensschritt (Anfrage an HLR (1222))
- 1206: Ablauf/Verfahrensschritt (Antwort von HLR (1222))
- 1207: Ablauf/Verfahrensschritt
- 1208: Ablauf/Verfahrensschritt (Prepaging)
- 1209: Ablauf/Verfahrensschritt (Prepaging)
- 1210: Ablauf/Verfahrensschritt
- 1211 I: Ablauf/Verfahrensschritt
- 1211 II: Ablauf/Verfahrensschritt
- 1211 II a: Dienstnutzung (Ablauf/Verfahrensschritt 1211 II)
- 1211 II b: Dienstnutzung (Ablauf/Verfahrensschritt 1211 II)
- 1211 II c: Dienstnutzung (Ablauf/Verfahrensschritt 1211 II)
- 1212: Ablauf/Verfahrensschritt
- 1213: Ablauf/Verfahrensschritt (vor 1201 bis 1212 vorgelagerter Prozess)
- 1214: Ablauf/Verfahrensschritt (vor 1201 bis 1212 vorgelagerter Prozess)
- 1215: Ablauf/Verfahrensschritt (vor 1201 bis 1212 vorgelagerter Prozess)
- 1216: Ablauf/Verfahrensschritt (vor 1201 bis 1212 vorgelagerter Prozess)
- 1220: Mobilfunknetz/Mobilfunknetzbetreiber
- 1221: G-MSC (Gateway MSC (Mobile Switching Center))
- 1222: Teilnehmerdatenbank (HLR: Home Location Register)
- 1223: mobile Vermittlungsstelle (MSC (Mobile Switching Center))
- 1224: IN-Anlage (IN: Intelligent Network Subsystem)
- 1225: Status-Datenbank (OTA-Server(1226))
- 1226: OTA-Server (OTA: Over The Air)
- 1230: Festnetz/Festnetzbetreiber
- 1231: Datenbank Festnetzrufnummer ― Mobilfunknetzrufnummer (MSISDN)
- 1240: PSTN (Public Standard Telefone Network)
- 1301: Ablauf/Verfahrensschritt (Anforderung Aufbau Kommunikationsverbindung)
- 1302: Ablauf/Verfahrensschritt (Mapping)
- 1303: Ablauf/Verfahrensschritt
- 1304: Ablauf/Verfahrensschritt
- 1305: Ablauf/Verfahrensschritt (Anfrage an HLR (1322))
- 1306: Ablauf/Verfahrensschritt (Antwort von HLR (1322))
- 1307: Ablauf/Verfahrensschritt
- 1308: Ablauf/Verfahrensschritt
- 1309 I: Ablauf/Verfahrensschritt
- 1309 II: Ablauf/Verfahrensschritt
- 1309 II a: Dienstnutzung (Ablauf/Verfahrensschritt 1309 II)
- 1309 II b: Dienstnutzung (Ablauf/Verfahrensschritt 1309 II)
- 1309 II c: Dienstnutzung (Ablauf/Verfahrensschritt 1309 II)
- 1310: Ablauf/Verfahrensschritt
- 1313: Ablauf/Verfahrensschritt (vor 1301 bis 1310 vorgelagerter Prozess)
- 1314: Ablauf/Verfahrensschritt (vor 1301 bis 1310 vorgelagerter Prozess)
- 1315: Ablauf/Verfahrensschritt (vor 1301 bis 1310 vorgelagerter Prozess)
- 1316: Ablauf/Verfahrensschritt (vor 1301 bis 1310 vorgelagerter Prozess)
- 1317: Ablauf/Verfahrensschritt (vor 1301 bis 1310 vorgelagerter Prozess)
- 1318: Vergleichseinrichtung (OTA-Server (1326))
- 1319: Vorzugsgebiete-Datenbank (OTA-Server (1326))
- 1320: Mobilfunknetz/Mobilfunknetzbetreiber
- 1321: G-MSC (Gateway MSC (Mobile Switching Center))
- 1322: Teilnehmerdatenbank (HLR: Home Location Register)
- 1323: mobile Vermittlungsstelle (MSC (Mobile Switching Center))
- 1324: IN-Anlage (IN: Intelligent Network Subsystem)
- 1325: Status-Datenbank (OTA-Server (1326))
- 1326: OTA-Server (OTA: Over The Air)
- 1330: Festnetz/Festnetzbetreiber
- 1331: Datenbank Festnetzrufnummer - Mobilfunknetzrufnummer (MSISDN)
- 1340: PSTN (Public Standard Telefone Network)
- 1401: Ablauf/Verfahrensschritt (Anforderung Aufbau Kommunikationsverbindung)
- 1402: Ablauf/Verfahrensschritt (Mapping)
- 1403: Ablauf/Verfahrensschritt
- 1404: Ablauf/Verfahrensschritt
- 1405: Ablauf/Verfahrensschritt (Anfrage an HLR (1422))
- 1406: Ablauf/Verfahrensschritt (Antwort von HLR (1422))
- 1407: Ablauf/Verfahrensschritt
- 1408: Ablauf/Verfahrensschritt (Prepaging)
- 1409: Ablauf/Verfahrensschritt (Prepaging)
- 1410: Ablauf/Verfahrensschritt
- 1411 I: Ablauf/Verfahrensschritt
- 1411 II: Ablauf/Verfahrensschritt
- 1411 II a: Dienstnutzung (Ablauf/Verfahrensschritt 1411 II)
- 1411 II b: Dienstnutzung (Ablauf/Verfahrensschritt 1411 II)
- 1411 II c: Dienstnutzung (Ablauf/Verfahrensschritt 1411 II)
- 1412: Ablauf/Verfahrensschritt
- 1413: Ablauf/Verfahrensschritt (vor 1401 bis 1412 vorgelagerter Prozess)
- 1414: Ablauf/Verfahrensschritt (vor 1401 bis 1412 vorgelagerter Prozess)
- 1415: Ablauf/Verfahrensschritt (vor 1401 bis 1412 vorgelagerter Prozess)
- 1416: Ablauf/Verfahrensschritt (vor 1401 bis 1412 vorgelagerter Prozess)
- 1417: Ablauf/Verfahrensschritt (vor 1401 bis 1412 vorgelagerter Prozess)
- 1418: Vergleichseinrichtung (OTA-Server (1426))
- 1419: Vorzugsgebiete-Datenbank (OTA-Server (1426))
- 1420: Mobilfunknetz/Mobilfunknetzbetreiber
- 1421: G-MSC (Gateway MSC (Mobile Switching Center))
- 1422: Teilnehmerdatenbank (HLR: Home Location Register)
- 1423: mobile Vermittlungsstelle (MSC (Mobile Switching Center))
- 1424: IN-Anlage (IN: Intelligent Network Subsystem)
- 1425: Status-Datenbank (OTA-Server(1426))
- 1426: OTA-Server (OTA: Over The Air)
- 1430: Festnetz/Festnetzbetreiber
- 1431: Datenbank Festnetzrufnummer ― Mobilfunknetzrufnummer (MSISDN)
- 1440: PSTN (Public Standard Telefone Network)
- 1501: Ablauf/Verfahrensschritt (Anforderung Aufbau Kommunikationsverbindung)
- 1502: Ablauf/Verfahrensschritt (Mapping)
- 1503: Ablauf/Verfahrensschritt
- 1504: Ablauf/Verfahrensschritt
- 1505: Ablauf/Verfahrensschritt
- 1506: Ablauf/Verfahrensschritt
- 1506a: Ablauf/Verfahrensschritt
- 1507: Ablauf/Verfahrensschritt
- 1506 a a: Dienstnutzung (Ablauf/Verfahrensschritt (1506 a)
- 1506 a b: Dienstnutzung (Ablauf/Verfahrensschritt (1506 a)
- 1506 a c: Dienstnutzung (Ablauf/Verfahrensschritt (1506 a))
- 1520: Mobilfunknetz/Mobilfunknetzbetreiber
- 1521: G-MSC (Gateway MSC (Mobile Switching Center))
- 1522: Teilnehmerdatenbank (HLR: Home Location Register)
- 1530: Festnetz/Festnetzbetreiber
- 1531: Datenbank Festnetzrufnummer ― Mobilfunknetzrufnummer (MSISDN)
- 1540: PSTN (Public Standard Telefone Network)
- 1601: Ablauf/Verfahrensschritt
- 1602: Ablauf/Verfahrensschritt
- 1603: Ablauf/Verfahrensschritt
- 1604: Ablauf/Verfahrensschritt
- 1605 I: Ablauf/Verfahrensschritt
- 1605 II: Ablauf/Verfahrensschritt
- 1606: Ablauf/Verfahrensschritt
- 1607: Ablauf/Verfahrensschritt
- 1610: SIM- bzw. USIM-Karte (mobiles Endgerät (B))
- 1618: Vergleichseinrichtung
- 1619: Vorzugsgebiete Datenbank
- 1620: Mobilfunknetz/Mobilfunknetzbetreiber
- 1621: Anzeigebereich (Display (1622))
- 1622: Display (mobiles Endgerät (B))
- 1625: Status-Datenbank (OTA-Server (1626))
- 1626: OTA-Server (OTA: Over The Air)
- 1701: Ablauf/Verfahrensschritt
- 1702: Ablauf/Verfahrensschritt
- 1703 I: Ablauf/Verfahrensschritt
- 1703 II: Ablauf/Verfahrensschritt
- 1704: Ablauf/Verfahrensschritt
- 1705: Ablauf/Verfahrensschritt
- 1710: SIM- bzw. USIM-Karte (mobiles Endgerät (B))
- 1711: Vorzugsgebiete-Datenbank (SIM- bzw. USIM-Karte (1710))
- 1720: Mobilfunknetz/Mobilfunknetzbetreiber
- 1721: Anzeigebereich (Display (1722))
- 1722: Display (mobiles Endgerät (B))
- 1725: Status-Datenbank (OTA-Server (1726))
- 1727: OTA-Server (OTA: Over The Air)
- A: Teilnehmer/mobiles Endgerät
- B: Teilnehmer/mobiles Endgerät
- BTS: Basisstation Mobilfunknetz (BTS: Base Transceiver Station)
- F: Randbereich Ortungsfehler (Funkzelle (Z1, Z2, Z3))
- Vges: gesamtes Versorgungsgebiet (Kommunikationsnetz (1))
- V: Vorzugsgebiet
- VA: Vorzugsgebiet Teilnehmer/mobiles Endgerät A
- VA1: Vorzugsteilgebiet (Vorzugsgebiet VA)
- VA2: Vorzugsteilgebiet (Vorzugsgebiet VA)
- VA3: Vorzugsteilgebiet (Vorzugsgebiet VA)
- VB: Vorzugsgebiet Teilnehmer/mobiles Endgerät B
- VB1: Vorzugsteilgebiet (Vorzugsgebiet VB)
- VB2: Vorzugsteilgebiet (Vorzugsgebiet VB)
- R: Restgebiet
- Z: Funkzelle (Mobilfunknetz)
- Z1: Funkzelle (Mobilfunknetz)
- Z2: Funkzelle (Mobilfunknetz)
- Z3: Funkzelle (Mobilfunknetz)
- d1: Radius Funkzelle (Z1)
- d2: Radius Funkzelle (Z2)
- d3: Radius Funkzelle (Z3)
- r: Radius (Geokoordinate Vorzugsgebiet/Vorzugsort)
- s: Seitenlänge (Geokoordinate Vorzugsgebiet/Vorzugsort)

## Patentansprüche

1. Verfahren zur Steuerung der Nutzung von einem mobilen Endgerät (B) in einem Kommunikationsnetz (1, 820, 1020, 1220, 1420) für Kommunikationsverbindungen zur Verfügung stehenden Diensten in Abhängigkeit des Aufenthaltsortes des mobilen Endgerätes (B) im Kommunikationsnetz (1, 820, 1020, 1220, 1420), wobei das Kommunikationsnetz (1, 820, 1020, 1220, 1420) wenigstens ein Versorgungsgebiet (Vges) mit einer aus Funkzellen aufgebauten zellularen Netzstruktur aufweist, das Versorgungsgebiet (Vges) für wenigstens ein mobiles Endgerät (B) in wenigstens ein Vorzugsgebiet (V) und ein Restgebiet (R) aufgeteilt wird und bei Aufenthalt des mobilen Endgerätes (B) in dem wenigstens einen Vorzugsgebiet (V) für Kommunikationsverbindungen eine Nutzung von wenigstens einem Dienst ermöglicht wird, welche von einer bei Aufenthalt des mobilen Endgerätes (B) im Restgebiet (R) für Kommunikationsverbindungen ermöglichten Nutzung von Diensten abweicht,
wobei der Aufenthaltsort des mobilen Endgerätes (B) im Kommunikationsnetz (1, 820, 1020, 1220, 1420) mittels Endgerätesuchruf bestimmt wird,
**dadurch gekennzeichnet,**
**dass** die Aufenthaltsortsbestimmung durch wenigstens einen kommunikationsnetzseitig erfolgenden vorgezogenen Endgerätesuchruf - auch Prepaging genannt - bestimmt wird, welcher vorgezogene Endgerätesuchruf - auch Prepaging genannt - bei Anfrage einer Mobile Station Roaming Number - abgekürzt MSRN - des mobilen Endgerätes (B) ausgelöst und/oder initiiert wird.

2. Verfahren nach Anspruch 1, **dadurch gekennzeichnet, dass** der Aufenthaltsort des mobilen Endgerätes (B) im Kommunikationsnetz (1, 820, 1020, 1220, 1420) unter Nutzung netzbasierter und/oder endgerätebasierter Lokalisierungstechnologien bestimmt wird, wobei die Bestimmung kommunikationsnetzseitig ausgelöst wird.

3. Verfahren nach Anspruch 1 oder Anspruch 2, **dadurch gekennzeichnet, dass** der Aufenthaltsort durch Ermittlung eines Kennzeichners - abgekürzt Location Number, Location Area ID (LAID), oder Cell-ID - des Funkbereichs und/oder der Funkzelle des Versorgungsgebietes (Vges) des Kommunikationsnetzes (1, 820, 1020, 1220, 1420) in der das mobile Endgerät (B) erreichbar ist erfolgt.

4. Verfahren nach Anspruch 3, **dadurch gekennzeichnet, dass** der Funkbereichs- und/oder Funkzellen-Kennzeichner seitens des Kommunikationsnetzes (1, 820, 1020, 1220, 1420) erfasst wird, wobei der Funkbereichs- und/oder Funkzellen-Kennzeichner in einer Datenbank einer seitens des Kommunikationsnetzes (1, 820, 1020, 1220, 1420) für den vorgezogenen Endgerätessuchruf - auch Prepaging genannt - vorgesehenen Einrichtung von der Einrichtung des Kommunikationsnetzes (1, 820, 1020, 1220, 1420) erfasst und aus dieser im Rahmen des vorgezogenen Endgerätessuchruf - auch Prepaging genannt - abgerufen wird, welche das Versorgungsgebiet des Funkbereichs und/oder der Funkzelle des aktuellen Aufenthaltsortes des mobilen Endgerätes (B) ausbildet

5. Verfahren nach Anspruch 3 oder Anspruch 4, **dadurch gekennzeichnet, dass** der Funkbereichs- und/oder Funkzellen-Kennzeichner seitens des mobilen Endgerätes (B) erfasst und dem Kommunikationsnetz (1, 820, 1020, 1220, 1420) über eine Kommunikationsverbindung des Kommunikationsnetzes (1, 820, 1020, 1220, 1420) mittels eines Nachrichtendienstes des Kommunikationsnetzes (1, 820, 1020, 1220, 1420) mitgeteilt wird.

6. Verfahren nach einem der Ansprüche 3 bis 5, **dadurch gekennzeichnet, dass** die Ermittlung des Funkbereichs- und/oder Funkzellen-Kennzeichners des mobilen Endgerätes (B) für von diesem abgehende und/oder für an dieses gerichtete Kommunikationsverbindungen bei einem Verbindungsaufbau erfolgt.

7. Verfahren nach einem der Ansprüche 3 bis 6, **dadurch gekennzeichnet, dass** der Aufenthaltsort des mobilen Endgerätes (B) im Kommunikationsnetz (1, 820, 1020, 1220, 1420) in periodischen Zeitabständen und/oder ereignisgesteuert vor, mit und/oder bei Initiierung einer Kommunikationsverbindung bestimmt wird.

8. Verfahren nach einem der Ansprüche 1 bis 7, **dadurch gekennzeichnet, dass** der Aufenthaltsort des mobilen Endgerätes (B) im Kommunikationsnetz (1, 820, 1020, 1220, 1420) seitens des Kommunikationsnetzes (1, 820, 1020, 1220, 1420) bestimmt und/oder erfasst wird, der bestimmte Aufenthaltsort seitens des Kommunikationsnetzes (1, 820, 1020, 1220, 1420) mit wenigstens einem in einer seitens des Kommunikationsnetzes (1, 820, 1020, 1220, 1420) gespeicherten Datenbank erfassten Vorzugsgebiet (V) verglichen wird, anhand des Vergleichs seitens des Kommunikationsnetzes (1, 820, 1020, 1220, 1420) festgestellt wird, ob sich das mobile Endgerät (B) in einem Vorzugsgebiet (V) aufhält oder in dem Restgebiet (R) aufhält und zumindest bei Feststellung des Aufenthalts des mobilen Endgerätes (B) in einem Vorzugsgebiet (V) der Aufenthalt des mobilen Endgerätes (B) in einem Vorzugsgebiet (V), das Vorzugsgebiet (V) und/oder dem mobilen Endgerät (B) im Vorzugsgebiet (V) zur Verfügung stehende Dienstnutzungen für Kommunikationsverbindungen seitens des Kommunikationsnetzes (1, 820, 1020, 1220, 1420) zur kommunikationsnetzseitigen Steuerung der Dienstnutzungen signalisiert werden.

9. Verfahren nach Anspruch 8, **dadurch gekennzeichnet, dass** seitens des mobilen Endgerätes (B) der bestimmte Aufenthaltsort und/oder das Ergebnis des Vergleichs seitens einer Datenbank des mobilen Endgerätes (B) gespeichert wird, wobei der bestimmte Aufenthaltsort und/oder das Ergebnis des Vergleichs dem mobilen Endgerät (B) über eine Kommunikationsverbindung des Kommunikationsnetzes (1, 820, 1020, 1220, 1420) mittels eines Nachrichtendienstes des Kommunikationsnetzes (1, 820, 1020, 1220, 1420) mitgeteilt wird.

10. Verfahren nach Anspruch 8 oder Anspruch 9, **dadurch gekennzeichnet, dass** wenigstens eine Information über den Aufenthalt des mobilen Endgerätes (B) in einem Vorzugsgebiet (V), das Vorzugsgebiet (V) und/oder dem mobilen Endgerät (B) im Vorzugsgebiet (V) zur Verfügung stehende Dienstnutzungen für Kommunikationsverbindungen in einer Datenbank seitens des Kommunikationsnetzes (1, 820, 1020, 1220, 1420) erfasst und von einer seitens des Kommunikationsnetzes (1, 820, 1020, 1220, 1420) für den vorgezogenen Endgerätessuchruf - auch Prepaging genannt - vorgesehenen Einrichtung des Kommunikationsnetzes (1, 820, 1020, 1220, 1420) aus dieser Datenbank im Rahmen der Signalisierung und/oder Vergebührung von Kommunikationsverbindungen abgerufen und/oder genutzt wird.

11. Verfahren nach Anspruch 10, **dadurch gekennzeichnet, dass** anhand der information kommunikationsnetzseitig die im jeweiligen Vorzugsgebiet (V) für Kommunikationsverbindungen zur Verfügung stehenden Dienstnutzungen des mobilen Endgerätes (B) im Kommunikationsnetz (1, 820, 1020, 1220, 1420) aktiviert und/oder vergebührt werden.

12. Verfahren nach einem der Ansprüche 8 bis 11, **dadurch gekennzeichnet, dass** die Signalisierung in periodischen Zeitabständen und/oder ereignisgesteuert erfolgt.

13. Verfahren nach einem der Ansprüche 1 bis 12, **gekennzeichnet durch** ein und/oder mehrere, zusammenhängende und/oder nicht zusammenhängende Vorzugsgebiete (V).

14. Verfahren nach einem der Ansprüche 1 bis 13, **dadurch gekennzeichnet, dass** mobile Endgeräte (B) denen im Kommunikationsnetz (1, 820, 1020, 1220, 1420) wenigstens ein gleiches Vorzugsgebiet (V) zugeordnet wird, im Kommunikationsnetz (1, 820, 1020, 1220, 1420) als Gruppe - auch VPN genannt - zusammengefasst und verwaltet werden.

15. Verfahren nach einem der Ansprüche 1 bis 14, **dadurch gekennzeichnet, dass** die mobilen Endgeräte (B) denen im Kommunikationsnetz (1, 820, 1020, 1220, 1420) neben wenigstens einem gleichen Vorzugsgebiet (V) für Kommunikationsverbindungen wenigstens eine gleiche Nutzung wenigstens eines Dienstes zugeordnet wird, im Kommunikationsnetz (1, 820, 1020, 1220, 1420) als Gruppe zusammengefasst und verwaltet werden.

16. Verfahren nach einem der Ansprüche 1 bis 15, **dadurch gekennzeichnet, dass** der Aufenthalt des mobilen Endgerätes (B) in dem wenigstens einen Vorzugsgebiet (V) oder dem Restgebiet (R) seitens des mobilen Endgerätes (B) und/oder seitens einer mit diesem verbindbaren Anzeigeeinrichtung in optischer und/oder akustischer Form wiedergegeben wird.

17. Verfahren nach einem der Ansprüche 14 bis 16, **dadurch gekennzeichnet, dass** bei Aufenthalt des mobilen Endgerätes (B) In dem wenigstens einen Vorzugsgebiet (V) die Gruppenzugehörigkeit, das Vorzugsgebiet (V) und/oder die im Vorzugsgebiet (V) für Kommunikationsverbindungen möglichen Dienstnutzungen seitens des mobilen Endgerätes (B) und/oder seitens einer mit diesem verbindbaren Anzeigeeinrichtung in optischer und/oder akustischer Form wiedergegeben wird.

18. Verfahren nach einem der Ansprüche 1 bis 17, **gekennzeichnet durch** eine unterschiedliche Vergebahrung von Kommunikationsverbindungen in Abhängigkeit des Aufenthaltsortes des mobilen Endgerätes (B) im Kommunikationsnetz (1, 820, 1020, 1220, 1420) als Dienstnutzungen.

19. Verfahren nach einem der Ansprüche 1 bis 18, **gekennzeichnet durch** unterschiedliche Kommunikationsdienste für Kommunikationsverbindungen in Abhängigkeit des Aufenthaltsortes des mobilen Endgerätes (B) im Kommunikationsnetz (1, 820, 1020, 1220, 1420) als Dienstnutzungen.

20. Verfahren nach einem der Ansprüche 1 bis 19, **dadurch gekennzeichnet, dass** bei Aufenthalt des mobilen Endgerätes (B) in wenigstens einem Vorzugsgebiet (V) eine Nutzung wenigstens einer für Kommunikationsverbindungen nutzbaren Rufnummer eines drahtgebundenen Fernsprechnetzes ermöglicht wird.

21. Verfahren nach Anspruch 20, **dadurch gekennzeichnet, dass** an die Rufnummer eines drahtgebundenen Fernsprechnetzes des mobilen Endgerätes (B) gerichtete Kommunikationsverbindungen bei Aufenthalt des mobilen Endgerätes (B) im Restgebiet (R) über das Kommunikationsnetz (1, 820, 1020, 1220, 1420) an das mobile Endgerät (B) im Restgebiet (R) weitergeleitet werden oder von einer seitens des Kommunikationsnetzes (1, 820, 1020, 1220, 1420) für das mobile Endgerät (B) bereitgehaltenen Einrichtung angenommen und/oder bei Bedarf zur Wiedergabe gespeichert werden, wobei bei Annahme der Kommunikationsverbindung durch die Einrichtung dem Kommunikationsverbindungsverursacher eine Kommunikationsnachricht in optischer und/oder akustischer Form über die Kommunikationsverbindung übertragen wird.

22. Verfahren nach einem der Ansprüche 1 bis 21, **dadurch gekennzeichnet, dass** Vorzugsgebiete (V) des Kommunikationsnetzes (1, 820, 1020, 1220, 1420) in verschiedenen Ländern, in Kommunikationsnetzen verschiedener Kommunikationsnetzbetreiber und/oder unterschiedlicher Funknetzstandards genutzt werden.

23. Verfahren nach einem der Ansprüche 1 bis 22, **dadurch gekennzeichnet, dass** das Kommunikationsnetz (1, 820, 1020, 1220, 1420) wenigstens ein zellulares Mobilfunknetz mit einer hierarchischen Zellstruktur ausbildenden Komponenten gemäß dem Global System for Mobile Communications- - abgekürzt GSM - und/oder Universal Mobile Telecommunications System- - abgekürzt UMTS - Funknetzstandard, aufweist und die mobilen Endgeräte (B) in dem Mobilfunknetz nutzbare Mobilfunktelefone sind.

24. Einrichtung zur Steuerung der Nutzung von einem mobilen Endgerät (B) in einem Kommunikationsnetz (1, 820, 1020, 1220, 1420) für Kommunikationsverbindungen zur Verfügung stehenden Diensten in Abhängigkeit des Aufenthaltsortes des mobilen Endgerätes (B) im Kommunikationsnetz (1, 820, 1020, 1220. 1420) nach einem der Ansprüche 1 bis 23, wobei das Kommunikationsnetz (1, 820, 1020, 1220, 1420) wenigstens ein Versorgungsgebiet (Vges) mit einer aus Funkzellen aufgebauten zellularen Netzstruktur aufweist, das Versorgungsgebiet (Vges) für wenigstens ein mobiles Endgerät (B) in wenigstens ein Vorzugsgebiet (V) und ein Restgebiet (R) aufgeteilt ist und bei Aufenthalt des mobilen Endgerätes (B) in dem wenigstens einen Vorzugsgebiet (V) für Kommunikationsverbindungen eine Nutzung von wenigstens einem Dienst ermöglicht ist, welche von einer bei Aufenthalt des mobilen Endgerätes (B) im Restgebiet (R) für Kommunikationsverbindungen ermöglichten Nutzung von Diensten abweicht, wobei der Aufenthaltsort des mobilen Endgerätes (B) im Kommunikationsnetz (1, 820, 1020, 1220, 1420) mittels Endgerätesuchruf bestimmt wird, **dadurch gekennzeichnet, dass** die Einrichtung seitens einer Einrichtung des Kommunikationsnetzes (1, 820, 1020, 1220, 1420) zur Mobilitätsverwaltung mobiler Endgeräte (B) im Kommunikationsnetz (1, 820, 1020, 1220, 1420) vorhanden und/oder Bestandteil ist, die Aufenthaltsortsbestimmung durch wenigstens einen kommunikationsnetzseitig erfolgenden vorgezogenen Endgerätesuchruf - auch Prepaging genannt - bestimmt, welcher vorgezogenen Endgerätesuchruf - auch Prepaging genannt - bei Anfrage einer Mobile Station Roaming Number - abgekürzt MSRN - des mobilen Endgerätes (B) ausgelöst und/oder initiiert wird, und jeweils wenigstens eine Datenbank aufweist, in welcher Kennungen im Kommunikationsnetz (1, 820, 1020, 1220, 1420) nutzbarer mobiler Endgeräte (B), Kennungen von Vorzugsgebieten (V) und/oder Restgebieten (R) der mobilen Endgeräte (B), Kennungen von zur Verfügung stehenden Dienstnutzungen der mobilen Endgeräte (B) für Kommunikationsverbindungen im Vorzugsgebiet (V) und/oder Restgebiet (R), und wenigstens eine Information über den Aufenthalt des mobilen Endgerätes (B) in einem Vorzugsgebiet (V) erfasst sind.

25. Einrichtung nach Anspruch 24, **dadurch gekennzeichnet, dass** die Einrichtung ferner wenigstens eine Datenbank aufweist, in weicher Kennungen von Gruppenzugehörigkeiten erfasst sind.

26. Einrichtung nach Anspruch 24 oder Anspruch 25, **dadurch gekennzeichnet, dass** diese wenigstens zur Erfassung wenigstens einer von dem mobilen Endgerät (B) an das Kommunikationsnetz (1, 820, 1020, 1220, 1420) gesendeten Information über den Aufenthalt des mobilen Endgerätes (B) in einem Vorzugsgebiet (V) in einem Überschreibmodus ausgebildet ist.

## Claims

1. A method for controlling the utilization of services being available to a mobile terminal (B) in a communication network (1, 820, 1020, 1220, 1420) for communication connections in dependence on the local position of the mobile terminal (B) in the communication network (1, 820, 1020, 1220, 1420), wherein the communication network (1, 820, 1020, 1220, 1420) comprises at least one service area (Vges) having a cellular network structure composed of radio cells, the service area (Vges) for at least one mobile terminal (B) is subdivided into at least one preferred area (V) and one residual area (R) and if the mobile terminal (B) is present in the at least one preferred area (V), a utilization of at least one service for communication connections will be enabled, which utilization differs from a utilization of services for communication connections which is rendered possible if the mobile terminal (B) is present in the residual area (R),
wherein the local position of the mobile terminal (B) in the communication network (1, 820, 1020, 1220, 1420) is determined by means of terminal paging,
**characterized in that**
the determination of the local position is realized by means of at least one anticipated terminal paging - also called pre-paging - realized by the communication network, which anticipated terminal paging - also called prepaging - is triggered and/or initiated upon inquiry of a mobile station roaming number - abbreviated MSRN - of the mobile terminal (B).

2. A method according to claim 1, **characterized in that** the local position of the mobile terminal (B) in the communication network (1, 820, 1020, 1220, 1420) will be determined by using network based and/or terminal based localization technologies, wherein the determination is triggered by the communication network.

3. A method according to claim 1 or claim 2, **characterized in that** the local position will be determined by determining an identifier - abbreviated Location Number, Location Area ID (LAID) or Cell ID - of the radio area and/or the radio cell of the service area (Vges) of the communication network (1, 820, 1020, 1220, 1420) in which the mobile terminal (B) is reachable.

4. A method according to claim 3, **characterized in that** the radio area and/or radio cell identifier is gathered on part of the communication network (1, 820, 1020, 1220, 1420), wherein the radio area and/or radio cell identifier is gathered from a data base of a device provided by the communication network (1, 820, 1020, 1220, 1420) for the anticipated terminal paging - also called pre-paging - and is fetched from this one within the scope of the anticipated terminal paging - also called pre-paging - from the device of the communication network (1, 820, 1020, 1220, 1420) which device forms the service area of the radio area and/or radio cell of the current local position of the mobile terminal (B).

5. A method according to claim 3 or claim 4, **characterized in that** the radio area and/or radio cell identifier is gathered by means of the mobile terminal (B) and transmitted via a communication connection of the communication network (1, 820, 1020, 1220, 1420) to the communication network (1, 820, 1020, 1220, 1420) by means of a message service of the communication network (1, 820, 1020, 1220, 1420).

6. A method according to one of the claims 3 through 5, **characterized in that** the radio area and/or radio cell identifier of the mobile terminal (B) is determined for communication connections which go out from this one or are directed to this one when a connection is built up.

7. A method according to one of the claims 3 through 6, **characterized in that** the local position of the mobile terminal (B) in the communication network (1, 820, 1020, 1220, 1420) is determined in periodic time intervals and/or in an event-controlled manner before, with and/or upon initiation of a communication connection.

8. A method according to one of the claims 1 trough 7, **characterized in that** the local position of the mobile terminal (B) in the communication network (1, 820, 1020, 1220, 1420) is determined and/or gathered on part of the communication network (1, 820, 1020, 1220, 1420), the determined local position is compared on part of the communication network (1, 820, 1020, 1220, 1420) to at least one preferred area (V) gathered in a data base memorized on part of the communication network (1, 820, 1020, 1220, 1420), on the base of the comparison it is determined on part of the communication network (1, 820, 1020, 1220, 1420) whether the mobile terminal (B) is present in a preferred area (V) or in the residual area (R) and if the presence of the mobile terminal (B) in a preferred area (V) is determined, the presence of the mobile terminal (B) in a preferred area (V), the preferred area (V) and/or service utilizations for communication connections which are made available to the mobile terminal (B) in the preferred area (V) are signalized by the communication network (1, 820, 1020, 1220, 1420) for the control of the service utilizations by means of the communication network.

9. A method according to claim 8, **characterized in that** on part of the mobile terminal (B) the determined local position and/or the result of the comparison will be memorized by means of a data base of the mobile terminal (B), wherein the determined local position and/or the result of the comparison is transmitted to the mobile terminal (B) via a communication connection of the communication network (1, 820, 1020, 1220, 1420) by means of a message service of the communication network (1, 820, 1020, 1220, 1420).

10. A method according to claim 8 or claim 9, **characterized in that** at least one information item with respect to the presence of the mobile terminal (B) in a preferred area (V), the preferred area (V) and/or service utilizations for communication connections which are made available to the mobile terminal (B) in the preferred area (V) is gathered in a data base by the communication network (1, 820, 1020, 1220, 1420) and is fetched and/or used from this data base by a device of the communication network (1, 820, 1020, 1220, 1420) which is provided by the communication network (1, 820, 1020, 1220, 1420) for the anticipated terminal paging - also called pre-paging - within the scope of the signalizing and/or charging of communication connections.

11. A method according to claim 10, **characterized in that** on the base of the information item the communication network activates and/or charges the service utilizations of the mobile terminal (B) in the communication network (1, 820, 1020, 1220, 1420) which are available in the respective preferred area (V) for communication connections.

12. A method according to one of the claims 8 through 11, **characterized in that** the signalizing is realized in periodic time intervals and/or in an event controlled manner.

13. A method according to one of the claims 1 through 12, **characterized by** one and/or more coherent and/or incoherent preferred areas (V).

14. A method according to one of the claims 1 through 13, **characterized in that** mobile terminals (B) to which at least one same preferred area (V) is allocated in the communication network (1, 820, 1020, 1220, 1420) are combined and administrated as a group - also called VPN - in the communication network (1, 820, 1020, 1220, 1420).

15. A method according to one of the claims 1 through 14, **characterized in that** the mobile terminals (B) to which apart from at least one same preferred area (V) also at least one same utilization of at least one service for communication connections is allocated, are combined and administrated as a group in the communication network (1, 820, 1020, 1220, 1420).

16. A method according to one of the claims 1 through 15, **characterized in that** the presence of the mobile terminal (B) in the at least one preferred area (V) or the residual area (R) is reproduced in optical and/or acoustic form by the mobile terminal (B) and/or by a display device which can be connected to this one.

17. A method according to one of the claims 14 through 16, **characterized in that** if the mobile terminal (B) is present in the at least one preferred area (V), the pertaining to the group, the preferred area (V) and/or the service utilizations available for communication connections in the preferred area (V) are reproduced in optical and/or acoustic form by the mobile terminal (B) and/or by a display device which can be connected to this one.

18. A method according to one of the claims 1 through 17, **characterized by** a different charging of communication connections in dependence on the local position of the mobile terminal (B) in the communication network (1, 820, 1020, 1220, 1420) as service utilizations.

19. A method according to one of the claims 1 through 18, **characterized by** different communication services for communication connections in dependence on the local position of the mobile terminal (B) in the communication network (1, 820, 1020, 1220, 1420) as service utilizations.

20. A method according to one of the claims 1 through 19, **characterized in that** if the mobile terminal (B) is present in at least one preferred area (V), a utilization of at least one call number usable for communication connections of a wire-bound telephone network will be enabled.

21. A method according to claim 20, **characterized in that** if the mobile terminal (B) is present in the residual area (R), communication connections directed to the call number of a wire-bound telephone network of the mobile terminal (B) will be transmitted via the communication network (1, 820, 1020, 1220, 1420) to the mobile terminal (B) in the residual area (R) or will be received by a device provided for the mobile terminal (B) by the communication network (1, 820, 1020, 1220, 1420) and/or be memorized, if needed, for reproduction, wherein if the communication connection is received by the device, a communication message in optical and/or acoustic form will be transmitted via the communication connection to the communication connection initiator.

22. A method according to one of the claims 1 through 21, **characterized in that** preferred areas (V) of the communication network (1, 820, 1020, 1220, 1420) are used in different countries, in communication networks of different communication network providers and/or of different radio network standards.

23. A method according to one of the claims 1 through 22, **characterized in that** the communication network (1, 820, 1020, 1220, 1420) comprises at least one cellular mobile radio network having components which form a hierarchical cell structure according to the Global System for Mobile Communications - abbreviated GSM - and/or Universal Mobile Telecommunications System - abbreviated UMTS - radio network standard and the mobile terminals (B) are mobile phones which can be used in the mobile radio network.

24. A device for controlling the utilization of services being available to a mobile terminal (B) in a communication network (1, 820, 1020, 1220, 1420) for communication connections in dependence on the local position of the mobile terminal (B) in the communication network (1, 820, 1020, 1220, 1420) according to one of the claims 1 through 23, wherein the communication network (1, 820, 1020, 1220, 1420) comprises at least one service area (Vges) having a cellular network structure composed of radio cells, the service area (Vges) for at least one mobile terminal (B) is subdivided into at least one preferred area (V) and one residual area (R) and if the mobile terminal (B) is present in the at least one preferred area (V), a utilization of at least one service for communication connections will be enabled, which utilization differs from a utilization of services for communication connections which is rendered possible if the mobile terminal (B) is present in the residual area (R), wherein the local position of the mobile terminal (B) in the communication network (1, 820, 1020, 1220, 1420) is determined by means of terminal paging, **characterized in that** the device is provided by or is a component of a device of the communication network (1, 820, 1020, 1220, 1420) for the mobility administration of mobile terminals (B) in the communication network (1, 820, 1020, 1220, 1420), said device determines the local position by means of at least one anticipated terminal paging - also called pre-paging - realized by the communication network, which anticipated terminal paging - also called pre-paging - is triggered and/or initiated upon inquiry of a mobile station roaming number - abbreviated MSRN - of the mobile terminal (B), and said device comprises respectively at least one data base, in which identifiers of mobile terminals (B) which can be used in the communication network (1, 820, 1020, 1220, 1420), identifiers of preferred areas (V) and/or residual areas (R) of the mobile terminals (B), identifiers of service utilizations for communication connections made available to the mobile terminals (B) in the preferred area (V) and/or the residual area (R) and at least one information item with respect to the presence of a mobile terminal (B) in a preferred area (V) are gathered.

25. A device according to claim 24, **characterized in that** the device further comprises at least one data base, in which identifiers of pertaining to groups are gathered.

26. A device according to claim 24 or claim 25, **characterized in that** this one is in an overwrite-mode at least for gathering at least one information item with respect to the presence of the mobile terminal (B) in a preferred area (V) which has been sent by the mobile terminal (B) to the communication network (1, 820, 1020, 1220, 1420).

## Revendications

1. Procédé de gestion de l'utilisation des services qui sont à la disposition d'un terminal mobile (B) dans un réseau de communication (1, 820, 1020, 1220, 1420) pour des connexions de communication en fonction de la position locale du terminal mobile (B) dans le réseau de communication (1, 820, 1020, 1220, 1420), dans lequel le réseau de communication (1, 820, 1020, 1220, 1420) comprend au moins une zone de service (Vges) ayant une structure de réseau cellulaire composée de cellules radio, la zone de service (Vges) d'au moins un terminal mobile (B) étant divisée en une zone de préférence (V) et une zone résiduelle (R) et une utilisation d'au moins un service pour des connexions de communication étant rendue possible si le terminal mobile (B) se trouve dans l'au moins une zone de préférence (V), l'utilisation étant différente d'une utilisation des services pour des connexions de communication rendue possible au cas d'un séjour du terminal mobile (B) dans la zone résiduelle (R),
la position locale du terminal mobile (B) dans le réseau de communication (1, 820, 1020, 1220, 1420) étant déterminée par moyen de téléavertissement de terminal,
**caractérisé en ce que**
la détermination de la position locale se fait par moyen d'au moins un téléavertissement de terminal anticipé - aussi dénommé pre-paging - réalisé par le réseau de communication, le téléavertissement de terminal anticipé - aussi dénommé pre-paging - étant déclenché et/ou initié par demande d'un numéro d'itinérance de station mobile - abrégé MSRN - du terminal mobile (B).

2. Procédé selon la revendication 1, **caractérisé en ce que** la position locale du terminal mobile (B) dans le réseau de communication (1, 820, 1020, 1220, 1420) est déterminée en utilisant des technologies de localisation basées sur le réseau et/ou basées sur le terminal, la détermination étant déclenchée par le réseau de communication.

3. Procédé selon la revendication 1 ou la revendication 2, **caractérisé en ce que** la position locale est déterminée en déterminant un identificateur - abrégé numéro d'emplacement (Location Number), zone d'emplacement (Location Area) ID (LAID) ou ID de cellule - de la zone radio et/ou de la cellule radio de la zone de service (Vges) du réseau de communication (1, 820, 1020, 1220, 1420) dans laquelle le terminal mobile (B) est accessible.

4. Procédé selon la revendication 3, **caractérisé en ce que** l'identificateur de la zone radio et/ou de la cellule radio est saisi par le réseau de communication (1, 820, 1020, 1220, 1420), l'identificateur de la zone radio et/ou de la cellule radio étant saisi dans une base de données d'un dispositif prévu par le réseau de communication (1, 820, 1020, 1220, 1420) pour le téléavertissement de terminal anticipé - aussi dénommé pre-paging - et étant prélevé de celle-ci dans le cadre du téléavertissement de terminal anticipé - aussi dénommé pre-paging - par le dispositif du réseau de communication (1, 820, 1020, 1220, 1420), lequel dispositif forme la zone de service de la zone radio et/ou de la cellule radio de la position local actuelle du terminal mobile (B).

5. Procédé selon la revendication 3 ou la revendication 4, **caractérisé en ce que** l'identificateur de la zone radio et/ou de la cellule radio est saisi par moyen du terminal mobile (B) et transmis via une connexion de communication du réseau de communication (1, 820, 1020, 1220, 1420) au réseau de communication (1, 820, 1020, 1220, 1420) par moyen d'un service de messages du réseau de communication (1, 820, 1020, 1220, 1420).

6. Procédé selon l'une des revendications 3 à 5, **caractérisé en ce que** l'identificateur de la zone radio et/ou de la cellule radio du terminal mobile (B) est déterminé pour des connexions de communication qui sortent de celui-ci ou qui sont adressées à celui-ci quand une connexion est établie.

7. Procédé selon l'une des revendications 3 à 6, **caractérisé en ce que** la position locale du terminal mobile (B) dans le réseau de communication (1, 820, 1020, 1220, 1420) est déterminée dans des intervalles de temps périodiques et/ou de manière commandée par des évènements avant, avec et/ou à l'initiation d'une connexion de communication.

8. Procédé selon l'une des revendications 1 à 7, **caractérisé en ce que** la position locale du terminal mobile (B) dans le réseau de communication (1, 820, 1020, 1220, 1420) est déterminée et/ou saisie par moyen du réseau de communication (1, 820, 1020, 1220, 1420), la position locale déterminée est comparée par moyen du réseau de communication (1, 820, 1020, 1220, 1420) à au moins une zone de préférence (V) enregistrée dans une base de données mémorisée par le réseau de communication (1, 820, 1020, 1220, 1420), il est déterminé par le réseau de communication (1, 820, 1020, 1220, 1420) à la base de la comparaison si le terminal mobile (B) se trouve dans une zone de préférence (V) ou dans la zone résiduelle (R) et si au moins la présence du terminal mobile (B) dans une zone de préférence (V) est déterminée, la présence du terminal mobile (B) dans une zone de préférence (V), la zone de préférence (V) et/ou des utilisations de services pour des connexions de communication qui sont à la disposition du terminal mobile (B) dans la zone de préférence (V) sont signalées par le réseau de communication (1, 820, 1020, 1220, 1420) pour la commande des utilisations de services par moyen du réseau de communication.

9. Procédé selon la revendication 8, **caractérisé en ce que** la position déterminée est mémorisée par le terminal mobile (B) et/ou le résultat de la comparaison est mémorisé par une base de données du terminal mobile (B), dans lequel la position déterminée et/ou le résultat des la comparaison est transmis(e) au terminal mobile (B) via une connexion de communication du réseau de communication (1, 820, 1020, 1220, 1420) en utilisant un service de messages du réseau de communication (1, 820, 1020, 1220, 1420) .

10. Procédé selon la revendication 8 ou la revendication 9, **caractérisé en ce qu'**au moins une information par rapport à la présence du terminal mobile (B) dans une zone de préférence (V), à la zone de préférence (V) et/ou aux utilisations de services pour des connexions de communication qui sont à la disposition du terminal mobile (B) dans la zone de préférence (V) est enregistrée dans une base de données par le réseau de communication (1, 820, 1020, 1220, 1420) et est prélevée et/ou utilisée de cette base de données par un dispositif du réseau de communication (1, 820, 1020, 1220, 1420) prévu par le réseau de communication (1, 820, 1020, 1220, 1420) pour le téléavertissement de terminal anticipé - aussi dénommé pre-paging - dans le cadre de la signalisation et/ou de la facturation des connexions de communication.

11. Procédé selon la revendication 10, **caractérisé en ce qu'**à la base de l'information le réseau de communication active et/ou facture les utilisations de services du terminal mobile (B) dans le réseau de communication (1, 820, 1020, 1220, 1420) qui sont à la disposition dans la zone de préférence respective (V) pour des connexions de communication.

12. Procédé selon l'une des revendications 8 à 11, **caractérisé en ce que** la signalisation se fait dans des intervalles de temps périodiques et/ou de manière commandée par des évènements.

13. Procédé selon l'une des revendications 1 à 12, **caractérisé par** une et/ou plusieurs zones de préférence (V) cohérentes et/ou incohérentes.

14. Procédé selon l'une des revendications 1 à 13, **caractérisé en ce que** des terminaux mobiles (B) auxquels au moins une même zone de préférence (V) est attribuée dans le réseau de communication (1, 820, 1020, 1220, 1420) sont réunis et administrés en tant que groupe - aussi dénommé VPN - dans le réseau de communication (1, 820, 1020, 1220, 1420).

15. Procédé selon l'une des revendications 1 à 14, **caractérisé en ce que** les terminaux mobiles (B) auxquels est attribuée, outre au moins une même zone de préférence (V), aussi au moins une même utilisation d'au moins un service pour des connexions de communication sont réunis et administrés en tant que groupe dans le réseau de communication (1, 820, 1020, 1220, 1420).

16. Procédé selon l'une des revendications 1 à 15, **caractérisé en ce que** la présence du terminal mobile (B) dans l'au moins une zone de préférence (V) ou la zone résiduelle (R) est reproduite sous forme optique et/ou acoustique par le terminal mobile (B) ou par un dispositif d'affichage qui peut être relié à celui-ci.

17. Procédé selon l'une des revendications 14 à 16, **caractérisé en ce que** si le terminal mobile (B) est présent dans l'au moins une zone de préférence (V), l'appartenance au groupe, la zone de préférence (V) et/ou les utilisations de services disponibles pour des connexions de communication dans la zone de préférence (V) seront reproduites sous forme optique et/ou acoustique par le terminal mobile (B) ou par un dispositif d'affichage qui peut être relié à celui-ci.

18. Procédé selon l'une des revendications 1 à 17, **caractérisé par** une facturation différente des connexions de communication en fonction de la position locale du terminal mobile (B) dans le réseau de communication (1, 820, 1020, 1220, 1420) en tant que utilisations de services.

19. Procédé selon l'une des revendications 1 à 18, **caractérisé par** des services de communication différents pour des connexions de communication en fonction de la positon locale du terminal mobile (B) dans le réseau de communication (1, 820, 1020, 1220, 1420) en tant que utilisations de services.

20. Procédé selon l'une des revendications 1 à 19, **caractérisé en ce que** si le terminal mobile (B) se trouve dans au moins une zone de préférence (V), une utilisation d'au moins un numéro d'appel qu'on peut utiliser pour des connexions de communication d'un réseau téléphonique sur fil sera rendue possible.

21. Procédé selon la revendication 20, **caractérisé en ce que** si le terminal mobile (B) se trouve dans la zone résiduelle (R), des connexions de communication adressées au numéro d'appel d'un réseau téléphonique sur fil du terminal mobile (B) seront transmises via le réseau de communication (1, 820, 1020, 1220, 1420) au terminal mobile (B) dans la zone résiduelle (R) ou seront reçues par un dispositif prévu par le réseau de communication (1, 820, 1020, 1220, 1420) pour le terminal mobile (B) et/ou seront mémorisées au cas de besoin pour la reproduction, dans lequel un message de communication sous forme optique et/ou acoustique sera transmis via la connexion de communication à l'initiateur de la connexion de communication, si le dispositif a reçu la connexion de communication.

22. Procédé selon l'une des revendications 1 à 21, **caractérisé en ce que** des zones de préférence (V) du réseau de communication (1, 820, 1020, 1220, 1420) sont utilisées dans des pays différents, dans des réseaux de communication des fournisseurs de réseaux de communication différents et/ou comprenant des standards de réseau radio différents.

23. Procédé selon l'une des revendications 1 à 22, **caractérisé en ce que** le réseau de communication (1, 820, 1020, 1220, 1420) comprend au moins un réseau radio mobile cellulaire comprenant des composants qui forment une structure cellulaire hiérarchique selon le standard de réseau radio de Global System for Mobile Communications - abrégé GSM - et/ou de Universal Mobile Telecommunications System - abrégé UMTS - et les terminaux mobiles (B) sont des téléphones mobiles utilisables dans le réseau radio mobile.

24. Dispositif de gestion de l'utilisation des services qui sont à la disposition d'un terminal mobile (B) dans un réseau de communication (1, 820, 1020, 1220, 1420) pour des connexions de communication en fonction de la position locale du terminal mobile (B) dans le réseau de communication (1, 820, 1020, 1220, 1420) selon l'une des revendications 1 à 23, dans lequel le réseau de communication (1, 820, 1020, 1220, 1420) comprend au moins une zone de service (Vges) ayant une structure de réseau cellulaire composée de cellules radio, la zone de service d'au moins un terminal mobile (B) étant divisée en une zone de préférence (V) et une zone résiduelle (R) et une utilisation d'au moins un service pour des connexions de communication étant rendue possible si le terminal mobile (B) se trouve dans l'au moins une zone de préférence (V), l'utilisation étant différente d'une utilisation des services pour des connexions de communication rendue possible au cas d'un séjour du terminal mobile (B) dans la zone résiduelle (R), la position locale du terminal mobile (B) dans le réseau de communication (1, 820, 1020, 1220, 1420) étant déterminée par moyen de téléavertissement de terminal, **caractérisé en ce que** le dispositif est prévu par et/ou fait partie d'un dispositif du réseau de communication (1, 820, 1020, 1220, 1420) pour l'administration de mobilité des terminaux mobiles (B) dans le réseau de communication (1, 820, 1020, 1220, 1420), le dit dispositif détermine la position locale par moyen de l'au moins un téléavertissement de terminal anticipé - aussi dénommé pre-paging - réalisé par le réseau de communication, lequel téléavertissement de terminal anticipé - aussi dénommé pre-paging - est déclenché et/ou initié par demande d'un numéro d'itinérance de station mobile - abrégé MSRN - du terminal mobile (B), et le dit dispositif comprend respectivement au moins une base de données dans laquelle des identificateurs des terminaux mobiles (B) utilisables dans le réseau de communication (1, 820, 1020, 1220, 1420), des identificateurs des zones de préférence (V) et/ou des zones résiduelles (R) des terminaux mobiles (B), des identificateurs des utilisations de services pour des connexions de communication qui sont à la disposition des terminaux mobiles (B) dans la zone de préférence (V) et/ou dans la zone résiduelle (R) et au moins une information par rapport à la présence d'un terminal mobile (B) dans une zone de préférence sont enregistrés.

25. Dispositif selon la revendication 24, **caractérisé en ce que** le dispositif comprend de plus au moins une base de données, dans laquelle des identificateurs des appartenances aux groupes sont enregistrés.

26. Dispositif selon la revendication 24 ou la revendication 25, **caractérisé en ce que** celui-ci est dans un mode de réécriture au moins pour saisir au moins une information par rapport à la présence du terminal mobile (B) dans une zone de préférence (V), laquelle le terminal mobile (B) a envoyée au réseau de communication (1, 820, 1020, 1220, 1420).
